# EUROPEAN PATENT SPECIFICATION

(11) **EP 3 598 304 B1**
(45) Date of publication and mention of the grant of the patent: **08.04.2026**
(21) Application number: 19191614.7
(22) Date of filing: 09.02.2007
(51) Int. Cl.: G06F 11/00

(54) **VIRTUAL CORES AND HARDWARE-SUPPORTED HYPERVISOR INTEGRATED CIRCUITS, SYSTEMS, METHODS AND PROCESSES OF MANUFACTURE**
VIRTUELLE KERNE UND HARDWAREUNTERSTÜTZTE HYPERVISOR-INTEGRIERTE SCHALTUNGEN SOWIE ENTSPRECHENDE SYSTEME, VERFAHREN UND VERFAHREN ZUR HERSTELLUNG
NOYAUX VIRTUELS ET CIRCUITS INTÉGRÉS D'HYPERVISEUR SUPPORTÉ PAR LE MATÉRIEL, SYSTÈMES, PROCÉDÉS ET PROCESSUS DE FABRICATION

(30) Priority: 09.02.2006 US 771737 P; 06.02.2007 US 671752
(43) Date of publication of application: 22.01.2020
(62) Divisional of application: 07763118.2
(73) Proprietor: Texas Instruments Incorporated, Dallas, Texas 75251 (US)
(72) Inventor: Conti, Gregory, F-06570 Saint Paul (FR); Petrosian, Levon, Plano, TX 75024 (US); Hussain, Atif, Denver, CO 80238 (US)
(74) Representative: Zeller, Andreas

(56) References cited:
- GB-A- 2 395 313
- US-A1- 2005 251 806

## Description

This invention is in the field of electronic computing hardware and software and communications, and is more specifically directed to improved processes, circuits, devices, and systems for information and communication processing purposes, and processes of making them. Without limitation, the background is further described in connection with communications processing.

### BACKGROUND

Security techniques are used to improve the security of retail and other business commercial transactions in electronic commerce and to improve the security of communications wherever personal and/or commercial privacy is desirable. Security is important in both wireline and wireless communications.

For security reasons, at least some processors provide two levels of operating privilege: a first level of privilege for user programs; and a higher level of privilege for use by the operating system. However, the higher level of privilege may or may not provide adequate security for m-commerce and e-commerce, given that this higher level relies on proper operation of operating systems. In order to address security concerns, some mobile equipment manufacturers implement yet another third level of privilege, or secure mode, that places less reliance on operating system programs, and more reliance on hardware-based monitoring and control of the secure mode.

As computer and communications applications with security become larger and more complex, a need has arisen for technology to inexpensively handle large amounts of software program code and the data for highly disparate applications and run them more or less concurrently in a secure manner.

GB 2395313 A deals with a processing system running a non-secure operating system and a secure operating system managed by a hypervisor.

### SUMMARY

The invention is set out in the appended set of claims. The dependent claims set out particular embodiments.

Generally and in a form of the invention, an electronic system includes a processor having a pipeline, a bus coupled to the pipeline, a storage coupled to the bus, the storage having a real time operating system and a real-time application, a non-real-time operating system, a secure environment kernel, and a software monitor; and protective circuitry coupled to the processor and operable to establish a first signal and a second signal each having states and together having combinations of the states representing a first category for the real-time operating system and the real-time application, a second category for the non-real-time operating system, and a third category for the secure environment kernel.

Other forms of the invention are disclosed and claimed.

### BRIEF DESCRIPTION OF THE DRAWINGS

FIG. 1 is a pictorial diagram of a communications system including system blocks, some or all of the foregoing improved according to the invention.
FIG. 2 is a block diagram of inventive integrated circuit chips for use in the blocks of the communications system of FIG. 1.
FIG. 3 is a diagram of inventive operational layers and structures for compartmentalizing real-time operations from certain public and secure operations.
FIG. 4 is a diagram of an inventive compartmentalized process to support the layers and structures of FIG. 3.
FIG. 5 a diagram of an inventive process of a hypervisor monitor mode mediating transitions between various modes.
FIG. 6 is a diagram of the inventive compartmentalized process from a different perspective from that of FIG. 4 and governed by a hypervisor monitor mode.
FIG. 7 is diagram of address spaces controlled by a Public MMU and a Secure MMU in an inventive system.
FIG. 8 is a block diagram of an inventive combination of a microprocessor unit (MPU) and target hardware together with and protected by inventive security hardware (SSM) and inventive target firewall circuits.
FIGS. 9A and 9B are two halves of a block diagram showing a detail of inventive security hardware (SSM), and other inventive blocks in FIG. 8 in further detail.
FIGS. 10A and 10B are two halves of a flow diagram of an inventive CPSR Mode Checker and NS Bit Enforcement circuit of FIG. 9.
FIG. 11 is a block diagram related to FIGS. 8 and 9 and highlighting an inventive SSM Physical Checker circuit and related registers.
FIG. 12 is a flow diagram of an inventive process and structure for generating an MreqSystem qualifier for differentiating modes to be compartmentalized.
FIG. 13 is a flow diagram of an inventive process and structure for checking bus physical addresses by the Physical Checker circuit of FIG. 11.
FIG. 14 is a flow diagram of an inventive process and structure for checking instruction bus physical addresses in FIG. 13.
FIG. 15 is a flow diagram of an inventive process and structure for checking read data bus and write data bus physical addresses in FIG. 13 relative to various contexts.
FIG. 16 is a block diagram related to FIGS. 8 and 9 and highlighting an inventive SSM Virtual Checker circuit and related registers.
FIG. 17 is a flow diagram of an inventive process and structure for checking virtual addresses by the Virtual Checker circuit of FIG. 16.
FIG. 18 is a block diagram of an inventive combination of MPU and target hardware protected by an inventive security hardware (SSM) of FIGS. 8 and 9 and inventive target firewall circuits.
FIG. 19 is a block diagram related to FIG. 9 and highlighting an inventive Interrupt Handler and inventive Secure FIQ Pre-emptive Masking Handler with related registers.
FIG. 20 is a block diagram of an inventive DMA Access Properties Firewall for use in the system of FIG. 18.
FIG. 21 is a partially block, partially hierarchical, diagram for showing an inventive structure and process of the DMA Access Properties Firewall of FIG. 20.
FIG. 22 is a flow diagram for showing an inventive process and structure of the DMA Access Properties Firewall of FIG. 20 and for other firewalls in FIGS. 9 and 18.
FIG. 23 is a schematic diagram of inventive circuitry for address checking, use of classifier signals and issuing security violation signals such as for firewalls in FIGS. 9, 18 and 20.
FIG. 24 is a block diagram of an inventive Secure Privilege Stack Firewall and an inventive Monitor Stack Firewall with related registers for use in the circuitry of FIG. 9.
FIG. 25A and 25B are two halves of a block diagram of an inventive Instruction Bus Firewall and an inventive Monitor Mode Data Firewall with related registers for use in the circuitry of FIG. 9.
FIG. 26 is a block diagram of an inventive security zone static configuration enforcement block and related fields in a Firewall Controller register for use in the circuitry of FIG. 9.
FIG. 27 is a block diagram of an inventive Platform events and configuration handler with related registers for use in the circuitry of FIG. 9.
FIGS. 28A and 28B are two halves of a block diagram of an inventive Security Violation handler with related registers for use in the circuitry of FIG. 9.
FIG. 29 is a partially block, partially flow diagram an inventive process of Monitor code, vectors and transitions and related to FIG. 5.
FIG. 30 is a block diagram of an inventive Debug section with related registers and in-circuit emulator for use in the circuitry of FIG. 9.
FIG. 31A and 31B are two halves of a block diagram of an inventive Trace instruction bus firewall and inventive Trace data bus firewall and related registers and a Trace block and related to FIG. 9.
FIG. 32 is a block diagram of inventive dual-CPU hardware and software for dual core operation.
FIG. 33 is a block diagram of inventive four-CPU hardware and software for four-core operation.
FIGS. 34A and 34B are upper and lower halves of a more detailed block diagram of inventive four-CPU hardware and associated inventive hardware-support for an inventive hypervisor process for the inventive four-core system.
FIG. 35 is a timing diagram of an inventive process of digital signal transitions of an inventive system including master counter, and of four CPUs in an inventive four-CPU system such as in FIGS. 34A/34B and 38A/38B, and showing interspersed interrupt signal transitions for various CPUs and types of operating systems for them.
FIG. 36 is an interrupt priority diagram for an inventive Generalized Interrupt Handler (GIC) and its inventive process of operation.
FIG. 37 is a partially-block, partially process diagram of inventive secure monitoring hardware (SSM) and inventive Monitor Mode processing.
FIGS. 38A - 38F are six portions of a composite block diagram of inventive four-CPU hardware and associated inventive hardware-support for an inventive hypervisor process for the inventive four-core system.
FIG. 39 is a flow diagram of an inventive process of manufacturing one or more integrated circuits, devices and systems of the foregoing Figures.

### DETAILED DESCRIPTION OF THE EMBODIMENTS

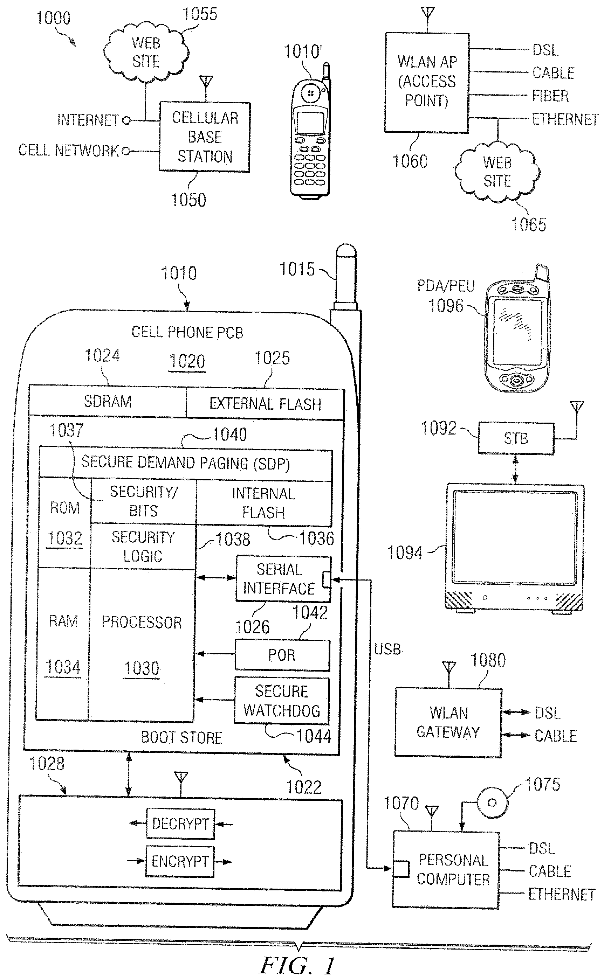

**In** FIG. 1, an improved communications system 1000 has system blocks as described next. Any or all of the system blocks, such as cellular mobile telephone and data handsets 1010 and 1010', a cellular (telephony and data) base station 1050, a WLAN AP (wireless local area network access point, IEEE 802.11 or otherwise) 1060, a Voice WLAN gateway 1080 with user voice over packet telephone 1085 (not shown), and a voice enabled personal computer (PC) 1070 with another user voice over packet telephone (not shown), communicate with each other in communications system 1000. Each of the system blocks 1010, 1010', 1050, 1060, 1070, 1080 are provided with one or more PHY physical layer blocks and interfaces as selected by the skilled worker in various products, for DSL (digital subscriber line broadband over twisted pair copper infrastructure), cable (DOCSIS and other forms of coaxial cable broadband communications), premises power wiring, fiber (fiber optic cable to premises), and Ethernet wideband network. Cellular base station 1050 two-way communicates with the handsets 1010, 1010', with the Internet, with cellular communications networks and with PSTN (public switched telephone network).

**In** this way, advanced networking capability for services, software, and content, such as cellular telephony and data, audio, music, voice, video, e-mail, gaming, security, e-commerce, file transfer and other data services, internet, world wide web browsing, TCP/IP (transmission control protocol/Internet protocol), voice over packet and voice over Internet protocol (VoP/VoIP), and other services accommodates and provides security for secure utilization and entertainment appropriate to the just-listed and other particular applications.

The embodiments, applications and system blocks disclosed herein are suitably implemented in fixed, portable, mobile, automotive, seaborne, and airborne, communications, control, set top box 1090, television 1044 (receiver or two-way TV), and other apparatus. The personal computer (PC) 1070 is suitably implemented in any form factor such as desktop, laptop, palmtop, organizer, mobile phone handset, PDA personal digital assistant 1096, internet appliance, wearable computer, content player, personal area network, or other type.

For example, handset 1010 is improved for selectively determinable security and economy when manufactured. Handset 1010 remains interoperable and able to communicate with all other similarly improved and unimproved system blocks of communications system 1000. On a cell phone printed circuit board (PCB) 1020 in handset 1010, there is provided a higher-security processor integrated circuit 1022, an external flash memory 1025 and SDRAM 1024, and a serial interface 1026. Serial interface 1026 is suitably a wireline interface, such as a USB interface connected by a USB line to the personal computer 1070 and magnetic and/or optical media 1075 when the user desires and for reception of software intercommunication and updating of information between the personal computer 1070 (or other originating sources external to the handset 1010) and the handset 1010. Such intercommunication and updating also occur via a processor in the cell phone 1010 itself such as for cellular modem, WLAN, Bluetooth from a website 1055 or 1065, or other wireless or wireline modem processor and physical layer (PHY) circuitry 1028.

Processor integrated circuit 1022 includes at least one processor (or central processing unit CPU) block 1030 coupled to an internal (on-chip read-only memory) ROM 1032, an internal (on-chip random access memory) RAM 1034, and an internal (on-chip) flash memory 1036. A security logic circuit 1038 is coupled to secure-or-general-purpose-identification value (Security/GPI) bits 1037 of a non-volatile one-time alterable Production **ID** register or array of electronic fuses (E-Fuses). Depending on the Security/GPI bits, boot code residing in ROM 1032 responds differently to a Power-On Reset (POR) circuit 1042 and to a secure watchdog circuit 1044 coupled to processor 1030.

Secure Demand Paging SDP circuitry 1040 effectively multiplies the memory space that secure applications can occupy.

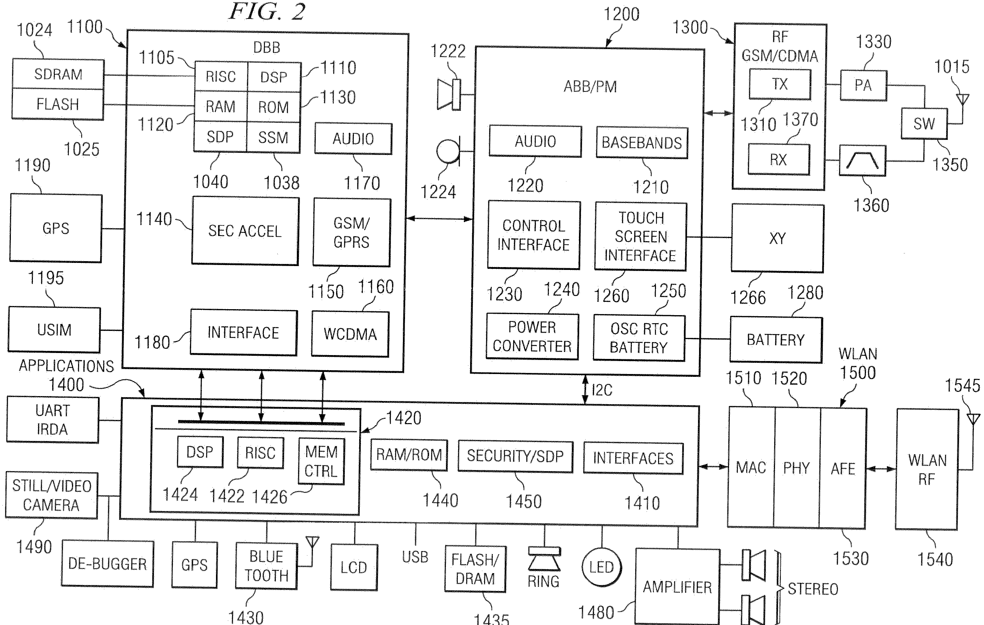

FIG. 2 illustrates inventive integrated circuit chips including chips 1100, 1200, 1300, 1400, 1500 for use in the blocks of the communications system 1000 of FIG. 1. The skilled worker uses and adapts the integrated circuits to the particular parts of the communications system 1000 as appropriate to the functions intended. For conciseness of description, the integrated circuits are described with particular reference to use of all of them in the cellular telephone handsets 1010 and 1010' by way of example.

It is contemplated that the skilled worker uses each of the integrated circuits shown in FIG. 2, or such selection from the complement of blocks therein provided into appropriate other integrated circuit chips, or provided into one single integrated circuit chip, in a manner optimally combined or partitioned between the chips.

**In** FIG. 2, an integrated circuit 1100 includes a digital baseband (DBB) block 1110 that has a RISC processor 1105 and a digital signal processor 1110 such as from the TMS320C55x^{™} DSP generation from Texas Instruments Incorporated or other digital signal processor (or DSP core) 1110, communications software and security software for any such processor or core, security accelerators 1140, and a memory controller. On chip RAM 1120 and on-chip ROM 1130 also are accessible to the processors 1110 for providing sequences of software instructions and data thereto. A security logic circuit 1038 of FIGS. 1 and 2 has a secure state machine (SSM) to provide hardware monitoring of any tampering with security features.

Digital circuitry 1150 on integrated circuit 1100 supports and provides wireless interfaces for any one or more of GSM, GPRS, EDGE, UMTS, and OFDMA/MIMO (Global System for Mobile communications, General Packet Radio Service, Enhanced Data Rates for Global Evolution, Universal Mobile Telecommunications System, Orthogonal Frequency Division Multiple Access and Multiple Input Multiple Output Antennas) wireless, with or without high speed digital data service, via an analog baseband chip 1200 and GSM/CDMA transmit/receive chip 1300.

Digital circuitry 1160 provides codec for CDMA (Code Division Multiple Access), CDMA2000, and/or WCDMA (wideband CDMA or UMTS) wireless suitably with HSDPA/HSUPA (High Speed Downlink Packet Access, High Speed Uplink Packet Access) (or 1xEV-DV, 1xEV-DO or 3xEV-DV) data feature via the analog baseband chip 1200 and RF GSM/CDMA chip 1300.

Audio/voice block 1170 supports audio and Speech/voice codec(s) voice functions and interfacing. An applications interface block 1180 couples the digital baseband chip 1100 to an applications processor 1400. Also, a serial interface in block 1180 interfaces from parallel digital busses on chip 1100 to USB. Chip 1100 is coupled to location-determining circuitry 1190 for GPS (Global Positioning System). Chip 1100 is also coupled to a USIM (UMTS Subscriber Identity Module) 1195 or other SIM for user insertion of an identifying plastic card, or other storage element, or for sensing biometric information to identify the user and activate features.

In FIG. 2, a mixed-signal integrated circuit 1200 includes an analog baseband (ABB) block 1210 and RF Control coupled to RF (CDMA) chip 1300. An audio block 1220 has audio I/O (input/output) circuits to a speaker 1222, a microphone 1224, and headphones (not shown).

A control interface 1230 has a primary host interface (I/F) and a secondary host interface to DBB-related integrated circuit 1100 of FIG. 2 for the respective GSM and CDMA paths. The integrated circuit 1200 is also interfaced to an I2C port of applications processor chip 1400 of FIG. 2. Control interface 1230 is also coupled via circuitry to the interfaces in circuits 1250 and the baseband 1210.

A power conversion block 1240 includes buck voltage conversion circuitry for DC-to-DC conversion, and low-dropout (LDO) voltage regulators for power management/sleep mode of respective parts of the chip regulated by the LDOs.

Circuits 1250 provide oscillator circuitry for clocking chip 1200. A touch screen interface 1260 is coupled to a touch screen XY 1266 off-chip.

Batteries such as a lithium-ion battery 1280 and backup battery provide power to the system and battery data to circuit 1250.

In FIG. 2 an RF integrated circuit 1300 includes transmitter block 1310 that drives a dual band RF power amplifier (PA) 1330. Off-chip switchplexer 1350 couples wireless antenna and switch circuitry to both the transmit portion 1310, 1330 and band-pass filters 1360 to receiving LNAs (low noise amplifiers) for frequency bands as appropriate. Depending on the band the output of LNAs couples to GSM/GPRS/EDGE/UMTS/CDMA demodulator 1370 to produce the I/Q or other outputs thereof (in-phase, quadrature) to the GSM/GPRS/EDGE/UMTS/CDMA baseband block 1210.

Further in FIG. 2, an integrated circuit chip or core 1400 is provided for applications processing and more off-chip peripherals. Chip (or core) 1400 has interface circuit 1410 including a high-speed WLAN 802.11a/b/g interface coupled to a WLAN chip 1500. Further provided on chip 1400 is an applications processing section 1420 which includes a RISC processor 1422 (such as MIPS core(s), ARM core(s), or other suitable processor), a digital signal processor (DSP) 1424 such as from the TMS320C55x^{™} DSP generation from Texas Instruments Incorporated or other digital signal processor, and a shared memory controller MEM CTRL 1426 with DMA (direct memory access), and a 2D (two-dimensional display) graphic accelerator. Speech/voice codec functionality is suitably processed in chip 1400, in chip 1100, or both chips 1400 and 1100.

The RISC processor 1420 and the DSP 1424 in section 1420 have access via an on-chip extended memory interface (EMIF/CF) to off-chip memory resources 1435 including as appropriate, mobile DDR (double data rate) DRAM, and flash memory of any of NAND Flash, NOR Flash, and Compact Flash. On chip 1400, the shared memory controller 1426 in circuitry 1420 interfaces the RISC processor 1420 and the DSP 1424 via an on-chip bus to on-chip memory 1440 with RAM and ROM. A 2D graphic accelerator is coupled to frame buffer internal SRAM (static random access memory) in block 1440. A security block 1450 in security logic 1038 of FIG. 1 includes an SSM analogous to SSM 1038, and includes secure hardware accelerators having security features and provided for secure demand paging 1040 as further described herein and for accelerating encryption and decryption. A random number generator RNG is provided in security block 1450.

On-chip peripherals and additional interfaces 1410 include UART data interface and MCSI (Multi-Channel Serial Interface) voice wireless interface for an off-chip IEEE 802.15 ("Bluetooth" and low and high rate piconet and personal network communications) wireless circuit 1430. Debug messaging and serial interfacing are also available through the UART. A JTAG emulation interface couples to an off-chip emulator Debugger for test and debug.

Interface 1410 includes external audio and touch screen (in/out) and LCD (liquid crystal display) and DLP^{™} (digital light processor) display.

An on-chip UART/IrDA (infrared data) interface in interfaces 1410 couples to off-chip GPS (global positioning system block cooperating with or instead of GPS 1190) and Fast IrDA infrared wireless communications device. An interface provides EMT9 and Camera interfacing to one or more off-chip still cameras or video cameras 1490, and/or to a CMOS sensor of radiant energy.

In FIG. 2, a WLAN integrated circuit 1500 includes MAC (media access controller) 1510, PHY (physical layer) 1520 and AFE (analog front end) 1530 for use in various WLAN and UMA (Unlicensed Mobile Access) modem applications. AFE 1530 is coupled by receive (Rx), transmit (Tx) and CONTROL lines to WLAN RF circuitry 1540. Still other additional wireless interfaces such as for wideband wireless such as IEEE 802.16 "WiMAX" mesh networking and other standards are suitably provided and coupled to the applications processor integrated circuit 1400 and other processors in the system.

Further described next are improved secure circuits, structures and processes and improved systems and devices for use in and with the systems of FIGS. 1 and 2 and all other systems to which their structures and processes commend their use.

**In** a type of embodiment, a hypervisor is established and copies virtually and non-virtually (normal) both the non-secure and secure worlds. The monitor mode is given hardware structural support called checker circuits or checkers to enable operation as a hypervisor. Security is protected from the public world side because the SSM (secure state machine) and the checkers are used together to establish one or more classifiers or classifier control signals. For example a classifier signal MreqSystem uniquely specifies virtual mode and non-virtual mode, and another classifier signal MreqSecure specifies secure mode and non-secure mode. Classifier signals are used collectively to specify combinations of virtual/non-virtual, secure/non-secure, and other modes. The hardware checker checks transactions and interrupts, and different access types. The Monitor mode operates as software on top of the checker hardware.

The hypervisor monitors which secure mode is being used and detects when a switch is happening from virtual mode to normal mode and insures the integrity of the architecture. Jumping between modes is mediated by the hypervisor instead of being permitted directly. Each time operations are to enter virtual mode or to leave virtual mode, the transition is arranged and structured to go through the Monitor mode as hypervisor under a specific process that is controlled by the SSM or is defined by SSM.

Added to that, the system has debug capability and trace controlled through SSM, so that blocks and functions that do not exist in the secure zone are put in the SSM outside the processor core. The SSM establishes the function of a secure zone to provide a minimum level of support for a variety of chips.

Some embodiments create virtual processors using an SSM-secured monitor mode acting as a hypervisor. Such architecture allows running in each of these virtual processors a complete operating system that is completely independent and isolated from any other operating system running in a different normal or virtual processor.

For example, in some embodiments, a 3^{rd}/4^{th} generation (3G/4G) wireless modem Protocol Stack runs under a real time operating system (RTOS) and is desirably isolated from the application operating system. Application processor devices desirably execute on the same processor core (MPU) a real time 3G/4G Modem Protocol Stack (PS) and a Secure Kernel, as well as a High Level Operating System (HLOS) for handling applications. The HLOS need not be a real time operating system.

Establishing an RTOS and modem protocol stack (PS) under a hypervisor and independent of an application operating system like an HLOS, then enhances security and real time operational reliability and stability, and confers tamper-resistance against updating an IMEI number by some other application running under the HLOS.

Application operating systems are often not architected to be real time. Thus, a real-time modem protocol stack running independently of a non-real time operating system prevents and obviates latencies and possible crash scenarios. The modem protocol stack memories are given enhanced stability because the modem protocol stack is independent of the application operating system.

The modem protocol stack is made HLOS-agnostic thanks to the monitor mode hypervisor and improved secure state machine (SSM) and checkers while providing strong timing accuracy for a protocol stack interrupt model and providing a hardware-ensured high priority fast interrupt request FIQ. Protocol stack activity benefits from complete hardware isolation from HLOS, for improved security and stability of the protocol stack. The improved interrupt model is agnostic to HLOS behavior and is timing accurate and predictable. High portability with other HLOS means that the same hardware design can be used with different HLOS, thereby reducing costs of designing products.

An example of a hardware mechanism includes a physical to virtual memory space checker. Some background information is described in incorporated patent application TI - 61407. The checker is added and used according to the teachings herein to detect when the processor core is developing and evolving the virtual cores memory space. The hardware mechanism checks different MPU core current status program register (CPSR) mode transitions to determine if the current processor state is allowed to be entered in order to detect any processor mode hijacking. In addition the proposed solution checks the current MMU configuration in order to detect any malformed or corrupted MMU configuration.

The improved secure state machine hardware issues bits or information signals to structure the environment for the software hypervisor and checkers. The hypervisor determines each particular type of processor core (normal or virtual; secure or public) it operates or determines shall operate.

When the processor MPU is detected to be evolving in a virtual core, a qualifier MreqSystem together with hardware security infrastructure differentiates processor core transactions belonging to the non-virtual processor or virtual processor through different hardware firewall stages.

Secure fast interrupts (Secure FIQ) pre-emptive masking technology is combined herein with the MreqSystem hardware security infrastructure and hypervisor to give real time properties to each virtual processor core, if needed. The Secure FIQ identifies the source of each interrupt by classifier states, e.g., normal or virtual processor core, and by other classifiers or qualifiers.

A DMA (direct memory access) component supports and is used by one or more of the operating systems. The MreqSystem classifier is added and provided as a qualifier for a DMA transaction issued when the MPU is evolving a virtual processor core in the secure mode.

Some hardware-based embodiments offer simplicity, a high level of security, resistance to software attacks and real time properties through FIQ to the modem protocol stack. Processor core caches and MMU are used efficiently while promoting very fast processing on each virtual and normal processor core context switch. As many virtual processor cores as needed are implemented in various embodiments. Two or more operating systems suitably co-exist on a given platform.

The Monitor Mode operation is hardware-checked, and Monitor Mode integrity is structured and preserved by physical address checking and virtual address checking coupled with execution status integrity checking and one or more hardware firewalls. Resistance to and prevention of buffer overflow attacks is provided and enhanced. Integrity of the security zone run-time configuration including MMU mapping and exception base vectors is protected. A dynamic hardware firewall protects Secure Privilege modes against buffer overflow attacks. Secure Privilege mode and User mode can fetch in a protectively regulated and structured manner from Secure RAM, Secure ROM and Secure Stacked SDRAM. Various modes are protected against fetching instructions in disallowed memory. Secure RAM and Secure ROM are hardware-protected from disallowed accesses. Secure Stacked SDRAM programmably establishes secure regions for virtual processors.

Inconsistency in MMU configuration is detected by monitoring for an attempt to fetch non-secure code in spaces reserved for secure mode access. Secure Privilege Debug Mode is protected against the Secure User Debug Mode. Virtual Processor modes are created, resource-isolated and MMU mapped. Attempted access by one virtual processor into the stack of another virtual processor is monitored and restricted or prevented.

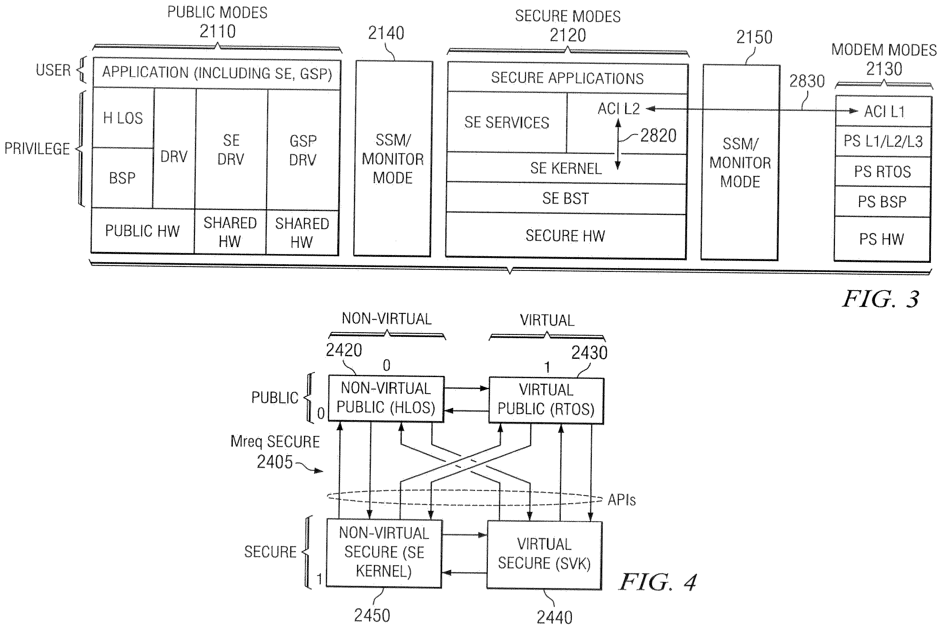

In FIG. 3, an example of hardware-supported hypervisor provides three virtual processors or resources: Public 2110, Secure 2120, and Modem 2130. Switching between each processor is made through a low latency SSM-supported monitor mode structured to act as a hypervisor and shown as two protective processing structures 2140 and 2150. Switching between Public resources 2110 and modem resources 2130 is done through the secure processor 2120 exclusively in this example. The Modem processor 2130 and Secure virtual processor 2120 preempt any public activity (IRQ/FIQ) inconsistent with their hardware security requirements, thereby guaranteeing integrity of the RTOS (real time operating system) and modem hardware properties.

In FIG. 3, from left to right, the worlds of the three processors 2110, 2120, 2130 are separated and protected by Monitor Mode structures 2140 and 2150. The Public, non-virtual processor 2110 has applications APP accessible in a non-privileged User mode in the upper layer. These applications are accessible even if they include calls to a secure environment (SE) and/or a modem process GSP. Privilege modes are occupied by a Public HLOS (high level operating system), by a board support package (BSP), and by a secure environment driver, a GSP driver or modem driver and other drivers DRV. Public hardware (HW) and shared Public/secure hardware are accessible in non-secure (public) mode. Public modes such as User mode, as well as Privileged modes can access resources 2110. Supervisor, IRQ, FIQ, Undef Undefined Exception, and Abort mode can access resources 2110.

In the secure resources 2120 of FIG. 3, reside Secure Applications, Secure Environment (SE) Services, SE Kernel, modem commands called AT Command Interface (ACI) Layer 2 (L2) coupled to SE Kernel, SE BSP, and Secure Hardware such as encryption/decryption accelerators and random number generator RNG. Only Secure modes are permitted to access resources 2120. Supervisor/System, FIQ, Undef, Abort, and secure User mode can access resources 2120.

The resources 2130 of FIG. 3 have real-time operations, also called modem modes in a telecommunications context herein. Protocol stack (PS) layers there include modules or entities which are running as OS tasks. These OS tasks communicate using messages via queues. The modem GSP API is used to support and provide the messaging services to the PS and a modem AT Command Interface (ACI) and to abstract from different operating systems the PS can run on. Communication with the application layer is performed in a manner depending on the hardware and operation system arrangements, such as one OS for Apps and PS, or different OS for Apps and PS, and using single processor hardware core or plural processor hardware cores. A secure driver for the PS is used to access IMEI (International Mobile Extended Identification) data and SIMlock (Subscriber Identification Module) data.

The real-time resources 2130 has layers including ACI L1, PS L1/L2/L3, PS RTOS, PS BSP. PS hardware (HW) supports the layers of resources of resources 2130. Modem command interface ACI L1 is coupled via the Monitor Mode protective interface process 2150 to ACI L2. In the example of FIG. 3, access to the real-time modes is provided for processor modes called Supervisor, FIQ, and Abort.

By contrast with the real-time RTOS and modem, for instance, the non-real-time HLOS and its applications do not expect to be scheduled real-time-accurately, and can wait their turn to execute. The non-real-time HLOS and its applications are therefore expected to be negligibly affected or unaffected by introduction of the embodiments taught herein. On the other hand, in a modem if server sync is not done in time, then a server at a wireless base station or a wireline central site can issue a time-out signal and break the communications protocol activity (phone call for example). Then a restart of the communication becomes introduced. At least some of the embodiments herein confront or ameliorate or prevent scenarios wherein the phone user might experience a bad transmission followed by a call interruption or unexpected crash. These undesirable event scenarios might happen if HLOS over-schedules multiple applications (display + file system + MMU allocation) at the wrong moment with IRQ and FIQ unmasked and misses a modem L1 Protocol Stack interrupt IRQ. Another undesirable situation might involve some non-synchronized timers or non-synchronized peripherals firing concurrently and creating many pending interrupts, and in some interrupt mode of HLOS IRQ/FIQ, the modem interrupts might be masked so that a call interruption does not occur or is not taken in time.

In some embodiments, multiple virtual processors reside inside the same category or world. By context-switching fully the MMU and processor registers, such embodiment places or accommodates as many different HLOS as desired. The MreqSystem qualifier is generated when operating in a virtual category in order for system interconnect firewalls to protect memories from other categories. Consequently for a complete and robust security scheme, some embodiments generate qualifiers to identify as many virtual processors as needed (MreqSystem1, MreqSystem2...). Some other embodiments provide HLOSes in a given single world (i.e., Virtual Public) that have exactly the same level of security where one HLOS cannot impact or is prevented from having any impact security-wise on any other HLOS.

In some other embodiments, the Monitor software code that acts as an hypervisor can configure the interconnect hardware firewalls to deny all accesses to one HLOS physical space while providing full access to other HLOSes when running in the same virtual world (other contexts described previously). The Monitor software code also configures the SSM hardware that supports the Monitor code as hypervisor to define new boundaries in accordance with this real-time resources protection configuration as well as the full MMU setting.

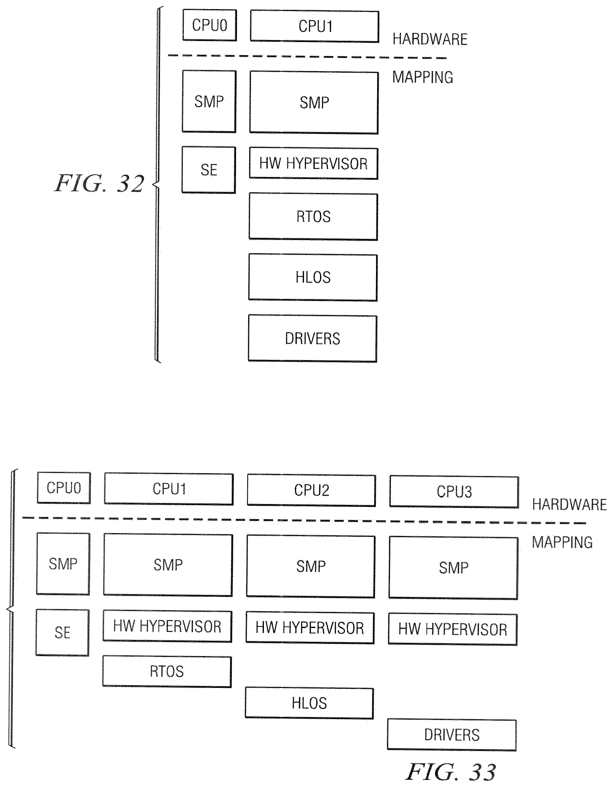

Multiple non-virtual processors suitably are made to reside inside the same Non-virtual world, e.g. Non-virtual Secure. Corresponding strategy is suitably used for the Non-virtual case as for a virtual category described just above herein. The virtual mode is created with the MreqSystem qualifier to provide strong security isolation between HLOS, RTOS and secure mode at system level. The Secure Virtual category is created or established by symmetry or analogously. There is no limit on how many virtual categories that are implemented (1 MreqSystem => 4 worlds as in FIG. 4; two (2) MreqSystem => 8 worlds , three (3) MreqSystem => 16 worlds (8 public, 8 secure)). In multi-core embodiments, see e.g. FIGS. 32-38F, these numbers apply to each CPU core and provide an extensive flexibility in establishing and organizing system embodiments herein.

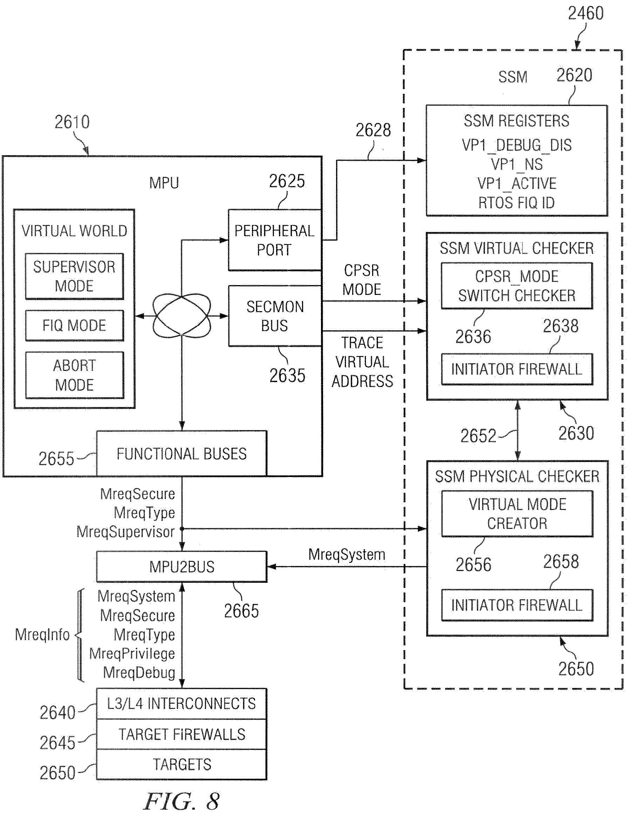

Refer briefly to FIG. 8. When in the secure mode, the processor MPU generates a bit CP15_NS = 0 for an example on an ARM^{™} core. The SSM herein maintains an SSM register bit designated VP1_NS corresponding to CP15_NS. Any MMU page programming or any transfer retained in cache is marked with an NS qualifier equal to or responsive to CP15_NS. The NS qualifier bit is used thereafter to generate a protection signal HPROT[] on a line of a system bus. The MPU2BUS interface 2665 creates the actual signal designated MreqSecure = NOT(HPROT[]). In other words, the MreqSecure qualifier is the logical complement of the logically equal signals HPROT[], NS_qualifier, and CP15_NS.

The SSM 2460 provides bit fields VP1_NS and VP1_Active. The VP1_Active bit field defines whether operations are transitioning from Monitor mode to a Non-virtual or Virtual category (VP1_Active), and the VP1_NS bit field defines whether the transition is going to Secure or Public category. The SSM 2460 is provided with protective circuitry coupled to MPU 2610. The protective circuitry is operable to couple a first qualifier MreqSecure to a system bus via interface 2665. MreqSecure is responsive to a line from MPU 2610 signaling Secure mode. The field VP1_Active is an example of a register field in the protective circuitry that is coupled as a second qualifier MreqSystem to the bus. For instance, in the case of virtual processor VP1 in some embodiments represents whether the processor is in a particular category (e.g., Public Virtual assigned to a real-time virtual processor such as a modem) or not for a given access. The protective circuitry is responsive to a line from MPU 2610 indicating that Monitor Mode is active. The protective circuitry permits alteration of the SSM register field by MPU 2610 in the Monitor Mode or Secure Supervisor mode and prevents at least some such alteration when MPU 2610 is in some other mode. In some embodiments Monitor Mode or Secure Supervisor mode access is required for all such alteration and firewalls are programmed in Monitor Mode or Secure Supervisor mode as well therein.

A Virtual Core or Virtual Processor (VP1) here is compared with a Virtual Machine Context (VMC) in Secure Demand Paging SDP 2745. The virtual machine (VMC of SDP) virtualizes HLOS tasks such as applications in User mode, and this virtualization is applied, if desired, to some kernel services in Supervisor mode. But, in an example, the VMC of SDP in some embodiments virtualizes the SDP kernel itself, and in other embodiments does not virtualize SDP nor IRQ/FIQ/ABORT/UNDEF vector and code, nor the MMU mapping, nor the MPU 2610 complete core configuration (e.g., debug and all other properties). By contrast, some information about a virtualized core is or may be ported to establish a Virtual Processor (e.g., VP1 for modem) on MPU 2610.

**In** FIG. 4, the Hypervisor differentiates categories of operation using MreqSystem qualifiers to identify in which world operations are running and thereby protect data and code in any category of FIG. 4 from other categories using interconnect firewalls. The Hypervisor effectively controls MreqSystem through register field VP1_Active and provides a virtualization of a real-time DSP application applied to the MPU 2610 itself. This keeps track of DSP-level functions in the system and/or achieves a higher level of virtualization that extends to the core or processor level, as the teachings herein make possible.

Qualifiers MreqModem and MreqSystem mean the same thing at DMA level and interconnect level, but have somewhat distinctive meanings in some different embodiments. Let a first embodiment have a DSP (digital signal processor) separate from the MPU 2610 operating as a modem engine. The SSM hardware and interface 2665 then generate a signal MreqModem active to accompany attempted accesses by this modem engine DSP core. **In a** second embodiment, suppose the DSP core is absent and the modem engine is established as software on the MPU 2610 which in some embodiments is a RISC processor core and not a DSP core. For expressiveness of signal designations, the SSM hardware and interface 2665 then generate a signal designated MreqSystem active to accompany attempted accesses by this virtual modem engine running on the MPU 2610. The significance of MreqModem and MreqSystem are both the same farther out in the system in that a process (e.g., modem) is attempting an access.

A first embodiment has an application engine including a RISC core, system DMA, and dedicated peripherals. Coupled to the application engine is a Modem engine including a DSP plus modem DMA plus dedicated peripherals. Shared memory such as SDRAM and Flash memory and shared peripherals such as USB serial bus are coupled to both the application engine and the modem engine.

A second embodiment is similar to the first embodiment except that the modem engine is virtualized onto the RISC core and uses the same system DMA, but has modem-dedicated peripherals. The second embodiment has the modem engine run on the same core MPU 2610 with a modem RTOS using the same system DMA and co-existing with a Public HLOS. To deal with the constraints of the second embodiment, recreation of the two distinct engines (application and modem) is accomplished by effectively virtualizing the distinct engines onto the RISC core and system DMA. They are transformed into categories in FIG. 4.

The signal MreqModem is generated and used in the first embodiment (RISC plus DSP) so that both the Application engine and Modem engine (subsystems in general) have access to a large number of DMA channels and as much DMA as is desirable for each engine (in effect a combination of the system DMA and modem DMA. Using the MreqSystem (or MreqModem) differentiates the application engine from the modem engine for accessing or preventing access to peripherals reserved for the application engine or reserved for the modem engine, for instance. **In** the first embodiment, the DSP is dedicated to modem engine and the DSP is operated or provided with circuitry to assert MreqModem active to differentiate each DMA channel programmed by the modem engine (DSP) from each DMA channel programmed by the application engine (MPU 2610 core). **In** the second embodiment MreqSystem is similarly used, from an interconnect/DMA point of view, and this provides economical design of different system products with complementing advantages using a very similar methodology or architectural scheme as described herein.

**In** the first embodiment, MreqModem (MreqSystem) goes active when the Modem DSP attempts access to a peripheral instead of MPU 2610 and inactive when MPU 2610 attempts access. **In** the second embodiment, the real-time process represented by the DSP code is suitably modified and ported to be compiled and run as a virtualized modem engine, for example, on MPU 2610 such as a RISC processor. MreqSystem goes active when the virtualized real-time process (e.g., modem) thus ported to MPU 2610 attempts access to a peripheral and inactive when the application engine attempts access.

The field VP1_Active when active in SSM registers 2620 signifies that MPU 2610 is in a Virtual category indicative of the modem for instance, so that the circuitry knows that it is in a Virtual world. The SSM register bit field VP1_NS is set equal to the Non-Secure/Secure bit CP15_NS described hereinabove. Bit field VP1_NS services an intermediate configuration state while in Monitor mode. For example, suppose CP15_NS =1 (context switching Public MMU) but operations are to go to a Secure category. VPI_NS provides a flag for Monitor Mode software. The Monitor code software structure sets, triggers and resets the bits CP15_NS and VP1_NS at different stages and times. An example architecture uses a Virtual Public category and an empty Virtual Secure category and consequently suitably provides only one set of banked registers for Virtual mode. These triggers are used also to select in the SSM address boundary checker register bank.

Logic circuitry of SSM responds to the bit field VP1_Active to generate the qualifier MreqSystem. The qualifier MreqSystem is a signal that accompanies or is attached to each transaction the MPU 2610 creates in the second embodiment (without physical DSP), and is the signal that accompanies or is attached to each transaction the DSP creates in the first embodiment that has DSP. Interconnect firewalls respond to qualifier MreqSystem to protect memories from accesses that are inconsistent with a currently operative category of operation.

In one group of embodiments a DSP with RTOS and real-time application(s) is virtualized onto a RISC processor that also runs non-real-time HLOS and non-real-time applications. In another group of embodiments a RISC processor with real-time application(s) is virtualized onto a DSP that also runs non-real-time HLOS and non-real-time applications. In still another group of embodiments, a RISC processor with a non-real-time HLOS and non-real-time applications(s) is virtualized onto a DSP that runs an RTOS and real-time application(s). In yet another group of embodiments, a DSP with non-real-time HLOS and non-real-time applications is virtualized onto a RISC processor that runs an RTOS and real-time application(s). In still other groups of embodiments, a first processor runs both an RTOS and HLOS and their applications is virtualized as a distinct virtual processor for system purposes onto a physical core MPU that runs both an RTOS and HLOS and their applications as a second virtualized processor maintained distinct from the RTOS, HLOS and applications of the first virtualized processor. Further groups of embodiments have the processors be physical (non-virtual) but provide MreqSystem qualifier(s) to indicate and identify to the system and to protective SSM hardware which physical processor is making an attempted access. Yet other groups of embodiments virtualize multiple distinct processors, as respective clusters of contexts identified to a virtual core, onto a physical core. Still other groups of embodiments include clusters of physical processors as in FIGS. 32-38B.

When one processor, e.g. real-time, is virtualized onto another processor (e.g., non-real-time, a single qualifier (e.g., MreqSystem) is suitably provided and has two states to respectively signify which of two virtualized processors are active. Thus, the inactive state of MreqSystem can indicate a virtualized processor distinct from the virtualized processor signified by the active state of MreqSystem. When more than one processor is virtualized onto another processor(s), then an MreqSystem qualifier is provided as a single field with more than two states to keep the virtual processors distinctly identified for hypervisor and system firewall purposes. Alternatively, multiple MreqSystem qualifiers are provided and represented by multiple fields or bits so that more than two states are analogously available to distinctly identify the virtual processors for hypervisor and system firewall purposes.

"GSP" herein is used as a software platform designator to refer collectively to a Modem, BSP with RTOS, ACI, Debug, Emulator, and Trace all together.

In FIG. 4, some categories of operation are defined as combinations of different modes Public and Secure and independently selectable modes Non-virtual and Virtual. A classifier signal MreqSecure determines whether a mode is Public or Secure. An additional classifier signal MreqSystem determines whether a mode is Non-virtual or Virtual. In this way a first category (00) is Non-virtual Public, a second category (01) is a Non-virtual Secure, a third category (10) is Virtual Public, and a fourth category (11) is Virtual Secure. Application port interfaces (APIs) in each category respond to a respective OS or kernel in each category to initiate transitions to another category.

In FIG. 4, the transitions are mediated and controlled by an SMI handler in the hypervisor or a Secure FIQ trap in the hypervisor. FIG. 4 is also conceived as a view downward by the hypervisor onto four exemplary categories, modes, or worlds of operation of the system.

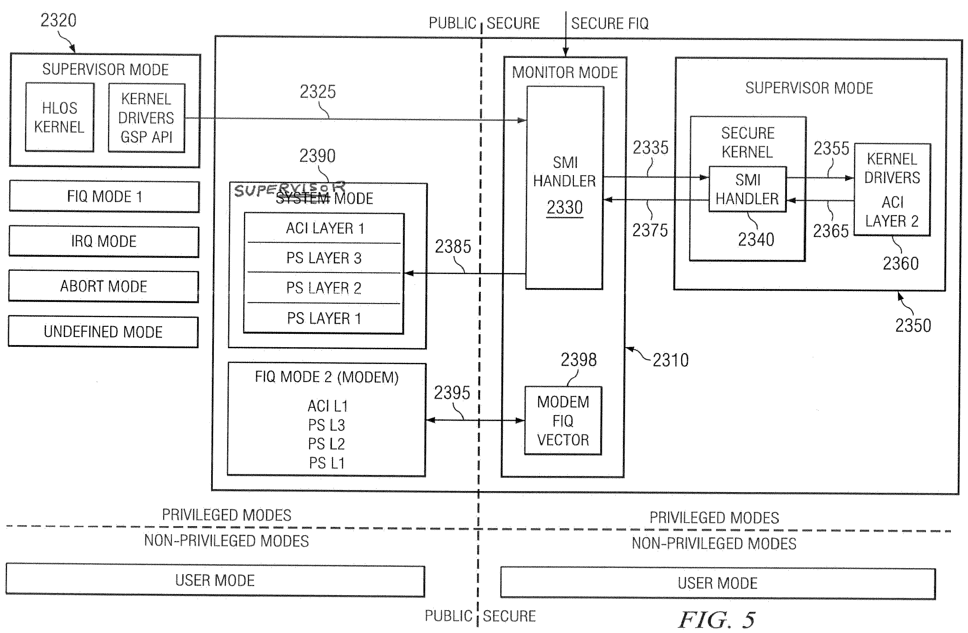

In FIG. 5, modes are divided into four quadrants indicated by a vertical dotted line and a horizontal dotted line. A classifier MreqSecure divides Public modes on left from Secure modes on the right. An additional classifier MreqPrivilege divides Privileged modes from Non-privileged mode(s) such as User Mode lower in FIG. 5. In the operation of the Privileged modes, various transitions can occur in a structured manner as taught herein and shown as examples by arrows in FIG. 5. A software monitor interrupt SMI instruction makes a transition from a given mode to the Monitor Mode.

In FIG. 5, one transition example goes from Supervisor Public mode 2320 wherein the HLOS kernel activates the GSP API. See also area 2110 of FIG. 3. It should be understood that this particular example is but one of many examples that could be given for transitions between any pair of categories based on one or another API. In this particular example, suppose the user wants to place a cell phone call, which involves activating the modem. The GSP API asserts SMI and arrow 2325 represents transition to Monitor Mode 2310 in Secure environment and activation of an SMI handler 2330 process therein. Compare with section 2140 of FIG. 3. A transition 2335 in the Secure Environment of FIG. 5 now occurs from the SMI handler 2330 process in Monitor Mode 2310 to an SMI handler 2340 process in a Secure Supervisor mode 2350. The SMI handler 2340 process further transitions via arrow 2355 to a block 2360 for Kernel drivers and for a modem command ACI Layer 2, which is an AT command interface in area 2120 of FIG. 3 and enforced by a 3G network hardware firewall.

In FIG. 5, the transition 2355 activates modem command interface ACI L2, and operation of ACI L2 is completed in due course and then transitions by an arrow 2365 back to the SMI handler 2340 process. Operations of SMI handler 2340 further transition from Secure Supervisor mode via an arrow 2375 to the SMI handler 2330 process of Monitor Mode in the Secure environment. Compare with section 2150 of FIG. 3. The SMI handler 2330 process, in its turn, transitions via an arrow 2385 from Monitor Mode in the Secure environment to a Public Supervisor mode 2390. In some embodiments, the Public System mode is used for mode 2390. Thus, plural mode choices are usable, and optimization exist to minimize context switch latency if we atrophy and steal System mode from the Public HLOS world. Also, various embodiments use varying amounts or none of the RTOS kernel in mode 2390.

In Public Supervisor mode 2390 of FIG. 5, ACI Layer 1 is initiated and modem protocol stack PS Layers L3, L2, L1 are activated. Compare with section 2130 of FIG. 3. Modem operation occurs on a real-time basis and generates a fast interrupt request FIQ mode 2 (modem) related to ACI L1, or PS L3, L2, L1. Note that Modem FIQ is always trapped in this example into the Monitor Mode by action of Secure FIQ as further described elsewhere herein. A bi-directional arrow 2395 shows transitions each way between the Supervisor mode 2390 FIQ Mode 2 (modem) and Monitor mode 2310. A Modem FIQ vector 2398 delivers and provides FIQ Mode 2 dynamic creation in Monitor Mode. Compare with section 2150 and arrow 2830 of FIG. 3.

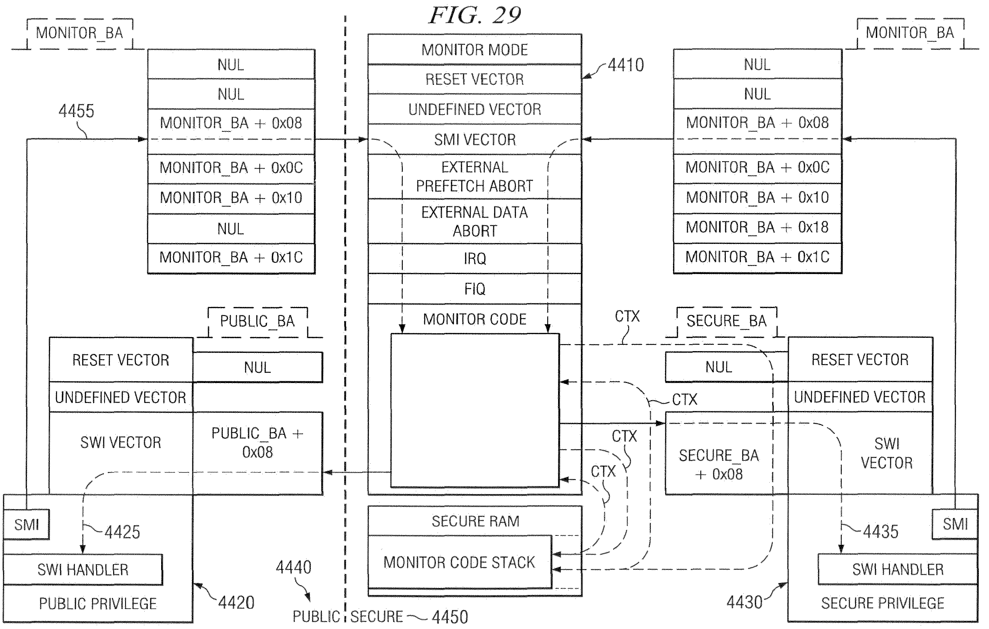

Examples of operation based on FIG. 5 in Public, Privileged modes are also indicated for a fast interrupt request FIQ Mode 1, an interrupt request IRQ mode, an Abort mode, and an Undefined (Undef) mode. Other process and structure embodiments such as those of FIG. 29 and TABLE 29 and TABLE 42 and description elsewhere herein can be compared with FIG. 5 and with each other.

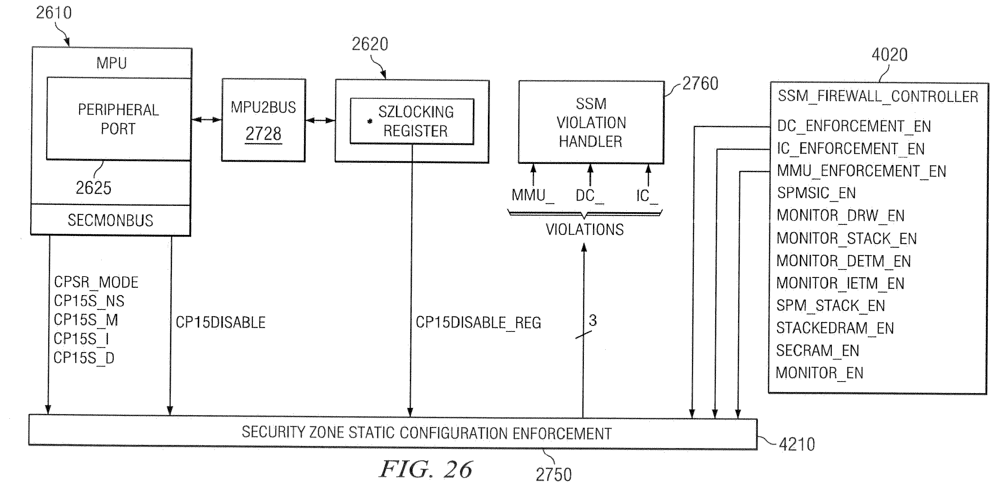

In some embodiments, the Virtual Public category 2430 (e.g., modem) generates one or more Secure FIQ even though secure environment SE Kernel generate Secure FIQ as well (but at other times). The SE Kernel is arranged non-interferingly so that the SE Kernel and its FIQ routine disables the FIQ masking (e.g. F bit) very rarely for only few clock cycles. And each time operations are in Monitor Mode before entering the Virtual Public category 2430, the Monitor code gives category 2430 (modem) the capability to disable the FIQ masking. FIQ masking capability is withheld from the Public Non-virtual category 2420 (for Public HLOS) because of the configuration of the security zone register (e.g., CP15S) and hardware enforcement thereof in FIG. 26. In other words, SE Kernel may have the capability to mask modem_FIQ but is coded so SE Kernel does not do such masking. Moreover, code in Virtual Public category 2430 (modem) can mask all FIQ when processing critical sections of modem code. Public HLOS cannot mask the Secure FIQ of either category 2430 nor 2450 (Modem or SE). In this way the modem runs in real time without interference. Some other embodiments provide dedicated modem FIQ and have the secure environment SE mask only public FIQ and secure FIQ but not the modem FIQ. In either type of embodiments, the modem virtual processor runs freely in real-time without interference from Secure FIQs from the SE Kernel in single core and multi-core examples as taught herein.

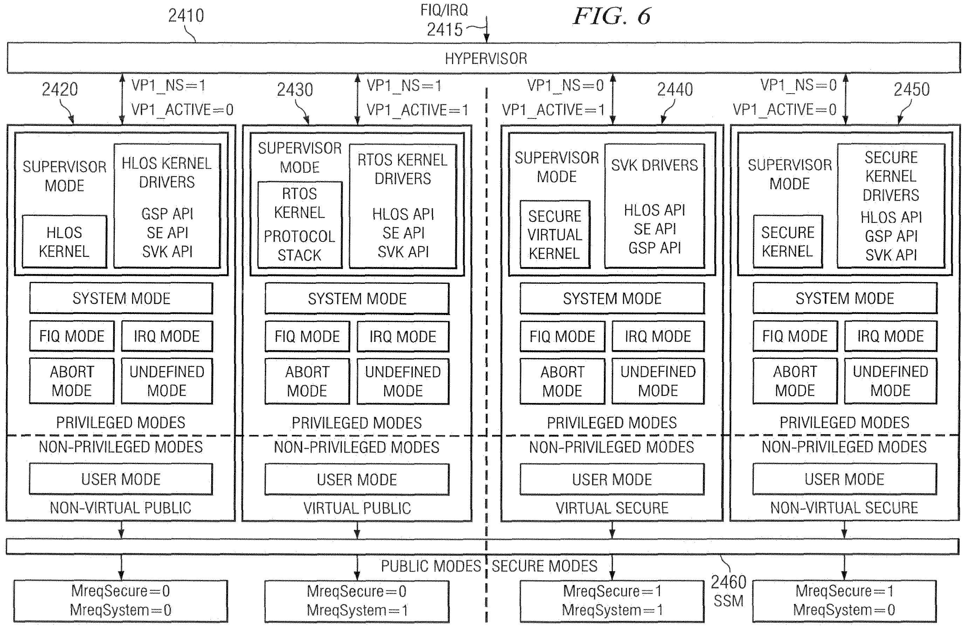

In FIG. 6, a SSM-supported processor core virtualization architecture switches between the different categories of FIG. 4 through the Monitor Mode which acts as an hypervisor 2410. FIG. 6 is conceived as a profile view of the categories of FIG. 4 viewed along a viewing direction 2405 and with the categories spread out from FIG. 4 into FIG. 6. The hypervisor is depicted above the categories. A viewing direction 2415 of FIG. 6 shows the direction of view for going from FIG. 6 to FIG. 4.

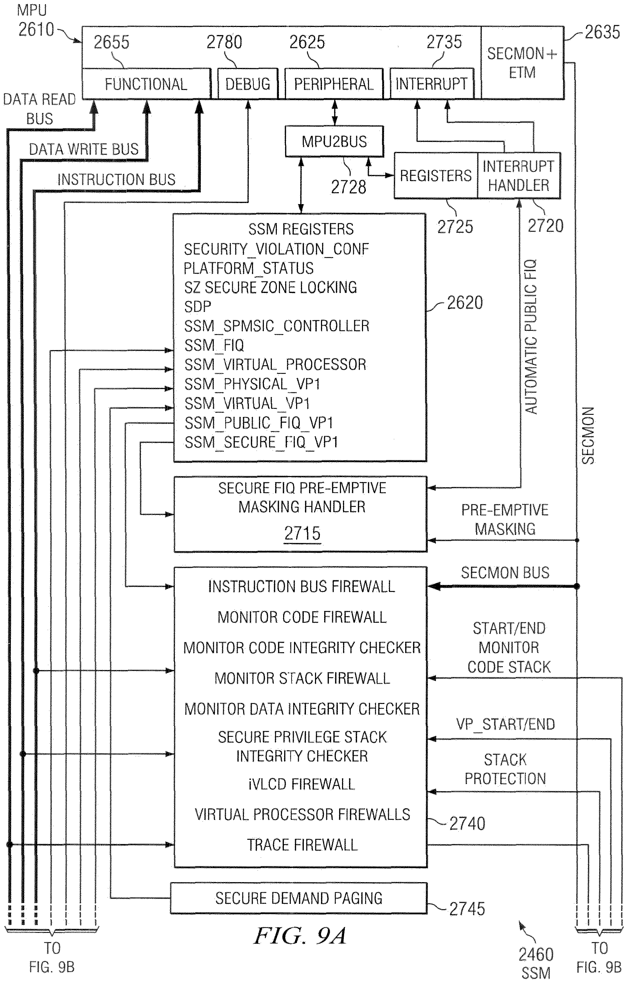

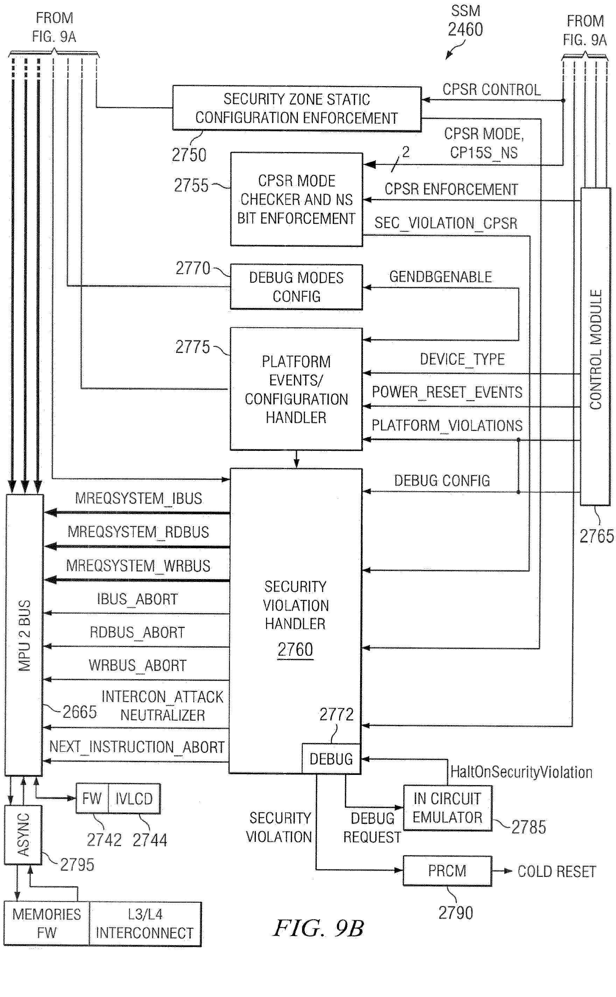

In this embodiment, switches between the categories are prevented except through Monitor Mode. Notice that the hypervisor 2410 controls or is structured by certain register bits. A CP15_NS bit or SCR bit is active or not to indicate and distinguish the Non-secure (Public) condition from the Secure condition. The SSM 2460 has a VP1_NS bit or field in a SSM_Virtual_Processor register (see FIG. 9) that mirrors the CP15_NS bit to also distinguish Non-secure (Public) from Secure condition for SSM hardware monitoring purposes.

Further in FIG. 6, the SSM 2460 has a VP1_Active bit or field provided elsewhere in the SSM_Virtual_Processor register. This bit or field indicates and distinguishes the Virtual condition from a Non-virtual (Normal) condition. The SSM issues the classifier signal MreqSystem as a function (e.g., same or complement) of the VP1_Active bit or field. Note that even in embodiments where Virtual/Non-virtual is simply two states that are represented by one bit, either or both of VP1_Active and MreqSystem are suitably one-bit or plural bits to avoid one-hot conditions where radiation error-resistance or otherwise highly reliable operation is required. The various categories established by a plurality of classifiers or qualifiers are in some embodiments suitably encoded, expanded, decoded or otherwise transformed and delivered as signals in the hardware and software of various embodiments as a further security feature.

In FIG. 6, the hypervisor 2410 sets the bits or fields VP1_NS and VP1_Active to establish the different categories of resources of FIG. 4 and otherwise. Accordingly, the hypervisor is shown as an expansive mantle over four columns of hypervisor-controlled categories 2420, 2430, 2440, 2450 as indicated or driven by states of the bits or fields. All the categories have, or can have a Supervisor Mode, a System mode, an FIQ mode, IRQ mode, Abort mode, Undef mode, and User mode. Fast interrupt requests FIQ are trapped by the Monitor Mode. Interrupt IRQ is trapped by the Monitor Mode for Virtual categories and Secure categories. An External Abort EA need not be trapped into the Monitor Mode in this example. As discussed in FIG. 5, SMI Handler in Monitor Mode handles transitions between categories where a software monitor interrupt SMI instruction is used to initiate the transition out of a particular category.

Each category 2420, 2430, 2440, 2450 has drivers to interface the kernel that operates in or controls each application in that category with each application in that category. Each category has APIs to interface the kernel to the other categories. These APIs make transitions that are trapped and mediated by hypervisor 2410.

For example, in FIG. 6, category 2420 is Non-virtual Public and has an HLOS kernel which is the operating system for category 2420. HLOS Kernel Drivers interface HLOS with each application in category 2420. GSP API, SVK API, and SE API respectively interface HLOS of category 2420 with the corresponding RTOS Kernel of category 2430, Secure Virtual Kernel (SVK) of category 2440, and the Secure Environment (SE) kernel of category 2450. Each of these-- GSP API, SVK API, SE API, makes an inter-category transition relative to category 2420 that is SMI-handled and mediated by hypervisor 2410. FIG. 5 illustrates a transition process as described hereinabove.

In FIGS. 6 and 4, category 2430 is Virtual Public and in this example has an RTOS kernel which is the real time operating system for category 2430, Modem Protocol Stack PS layers, and RTOS Kernel Drivers to interface RTOS with the PS layers. Compare with section 2130 of FIG. 3 and areas 2390 and PS layers of FIG. 5. In some embodiments this category 2430 is used for one or more other real time processes instead of or in addition to a modem. In category 2430, HLOS API, SVK API, and SE API provide respective interfaces between RTOS kernel of category 2430 and the corresponding HLOS kernel of category 2420, SVK of category 2440, and the SE kernel of category 2450. Each of the HLOS API, SVK API, and SE API, makes an inter-category transition relative to category 2430 that is trapped and mediated by hypervisor 2410.

Category 2440 is Virtual Secure and in this example has a Secure Virtual Kernel (SVK), and Secure Virtual kernel drivers and APIs. An example of an SVK is a secure OS for a content player, gaming box, and/or still imaging or camera system which is provided in category 2440. The SVK in category 2440 is used either by itself or in addition to a category 2430 wireline modem RTOS or wireless modem RTOS according to the type of system desired. In category 2440, HLOS API, GSP API, and SE API provide respective interfaces between the SVK kernel of category 2440 and the corresponding HLOS kernel of category 2420, RTOS kernel of category 2430, and the SE kernel of category 2450. Each of the HLOS API, GSP API, and SE API makes an inter-category transition relative to category 2440 that is trapped and mediated by hypervisor 2410.

Category 2450 is Non-virtual Secure and in this example has a Secure Kernel, and Secure Kernel drivers to interface the Secure Kernel with secure applications or protected applications in category 2450. In category 2450, an HLOS API, GSP API, and SVK API provide respective interfaces between Secure Kernel of category 2450 and the corresponding HLOS kernel of category 2420, RTOS kernel of category 2430, and SVK of category 2440. Each of the HLOS API, GSP API, and SVK API, makes an inter-category transition relative to category 2450 that is trapped and mediated by hypervisor 2410.

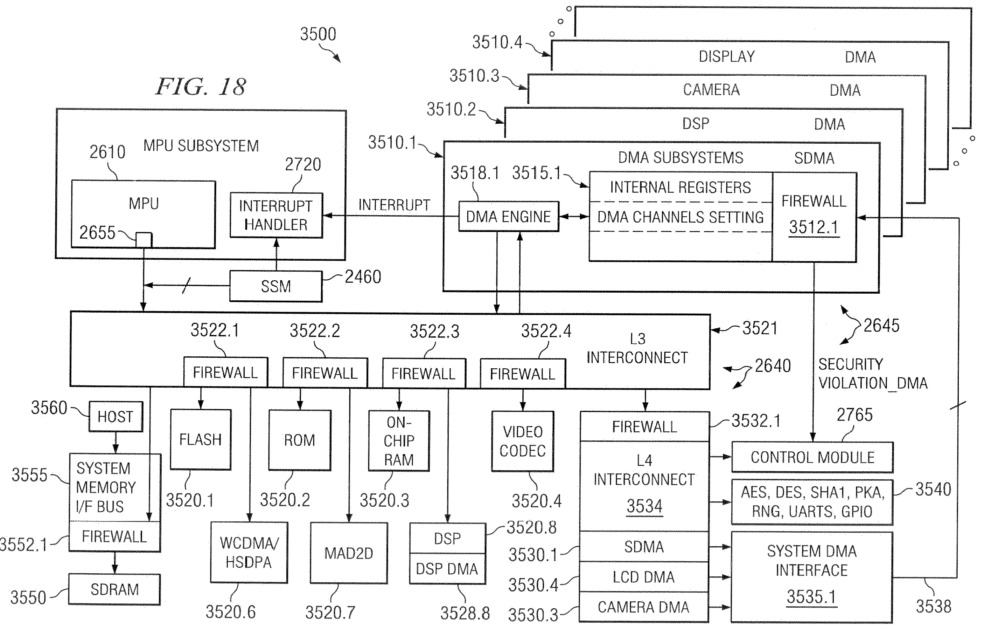

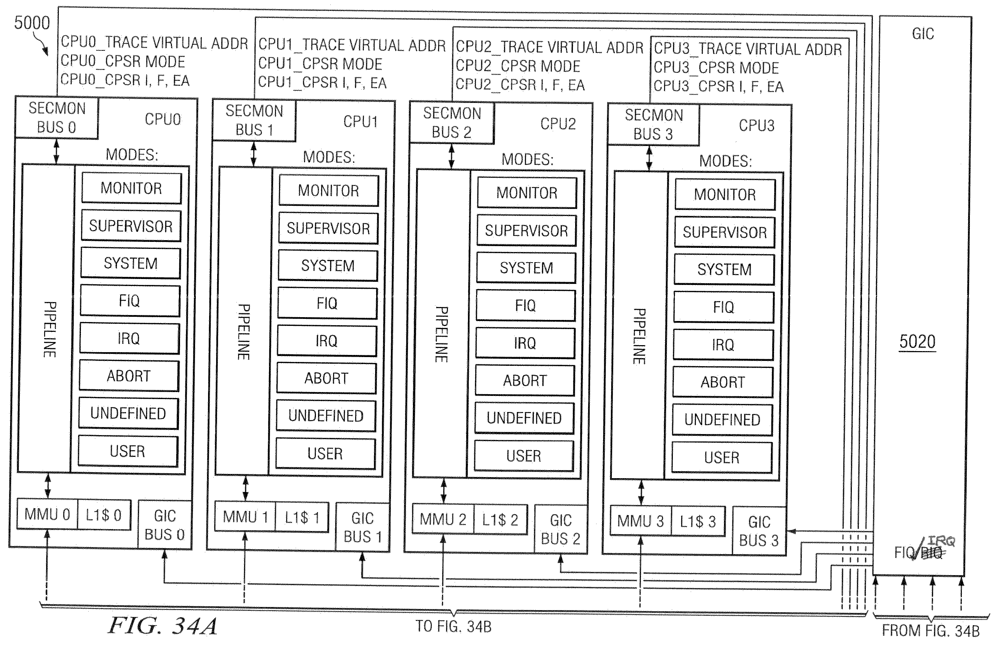

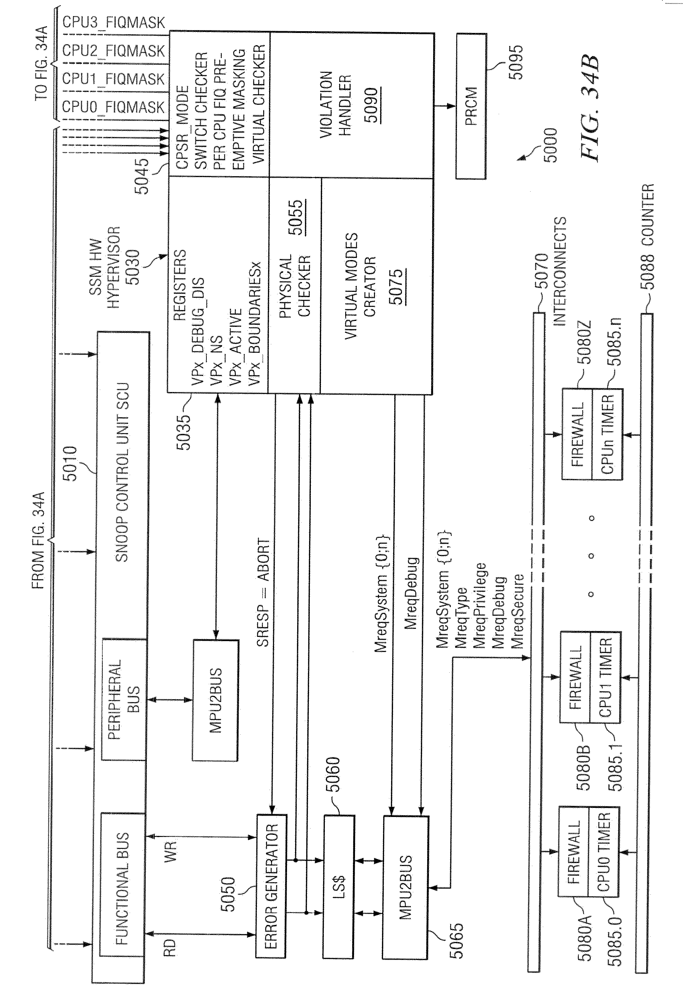

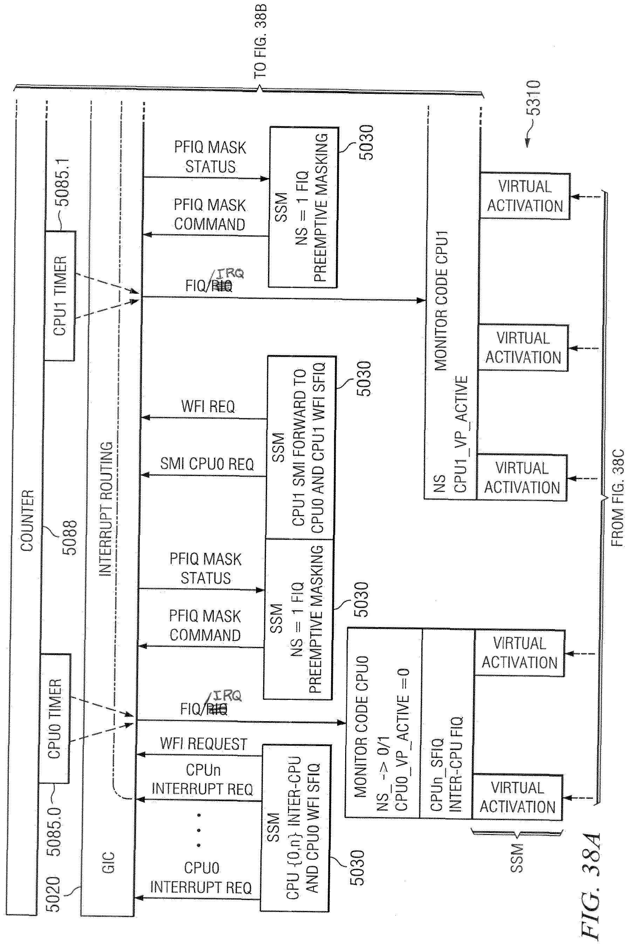

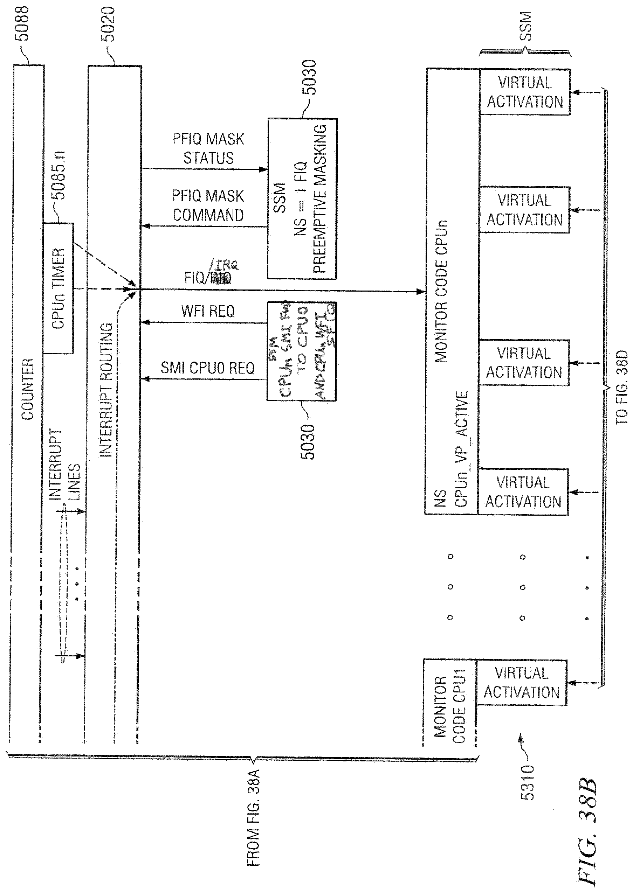

The arrangement is flexible so that one or more of the categories 2420, 2430, 2440, 2450 is or can be populated or empty. When a category is empty, the APIs in the other categories for interfacing to the empty category are suitably also omitted unless retained for upgrade purposes. Additional categories are suitably further established according to the teachings herein, and then additional APIs in the categories are added to interface to each additional category. SSM 2460 provides hardware monitoring and enforcement and issues classifier bits or fields MreqSystem, MreqPrivilege, MreqSecure, and other classifiers according to the teachings herein to regulate access to system peripherals of FIGS. 2 and 18, for instance. FIG. 6 can also be compared with multi-processor embodiments shown in FIGS. 34A/34B and FIGS. 38A/38B and description elsewhere herein.

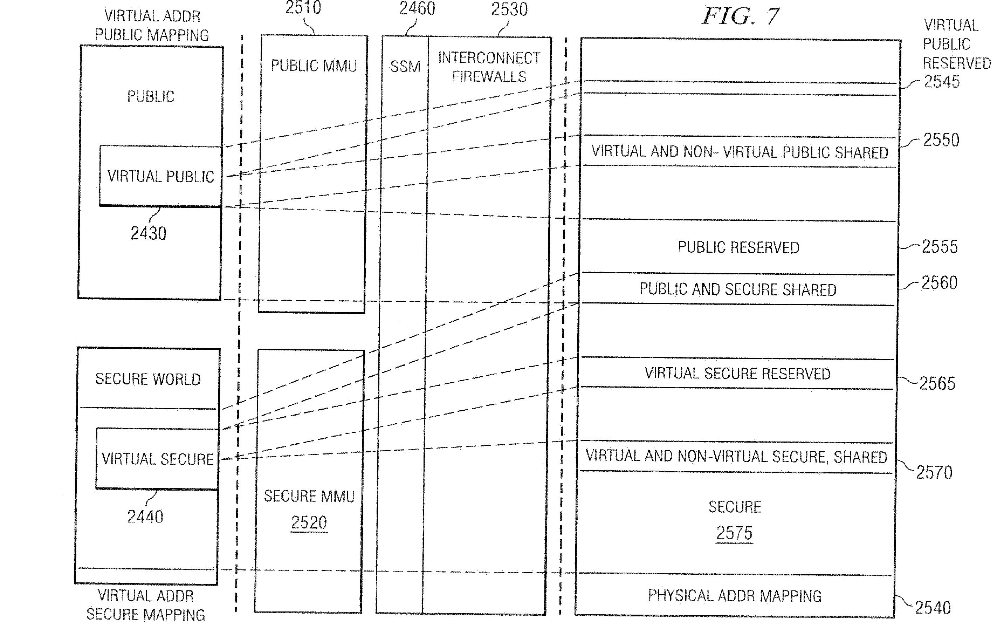

FIG. 7 shows an SSM MPU core virtualization MMU overview. An example system provides two (2) MMU components: a Public MMU 2510 and a Secure MMU 2520. Each MMU 2510 and 2520 has its own virtual memory space that can access the physical memory space according to a mapping. At MMU level, differentiation need not be applied as between the virtual processor and the Non-virtual processor of each category of resources 2410, 2420, 2430, 2440 of FIGS. 4 and 6. Categories 2430 and 2440 are shown for example in FIG. 7. The SSM 2460 of FIG. 6 creates for each memory space in FIG. 7 defined for a virtual processor the MreqSystem qualifier to distinguish transactions belonging to Virtual or Non-virtual modes. Concurrently, the MreqSecure qualifier distinguishes the Secure resources from the Public resources.

An interconnect firewall 2530 is enabled to reserve or isolate or enforce memory space allocated to a particular virtual processor or non-virtual processor. Shared memory space is provided as between various combinations of the four categories of resources of FIG. 4: Non-Virtual Public, Virtual Public, Non-Virtual Secure, and Virtual Secure. For example, a memory space 2540 has reserved spaces 2545, 2555, 2565, 2575 for Virtual Public, Public, Virtual Secure, and Secure respectively. Shared spaces 2550, 2560, and 2570 for instance are provided for respective sharing between Virtual and Non-virtual Public, Public and Secure, and Virtual and Non-virtual Secure as illustrated in FIG. 7.

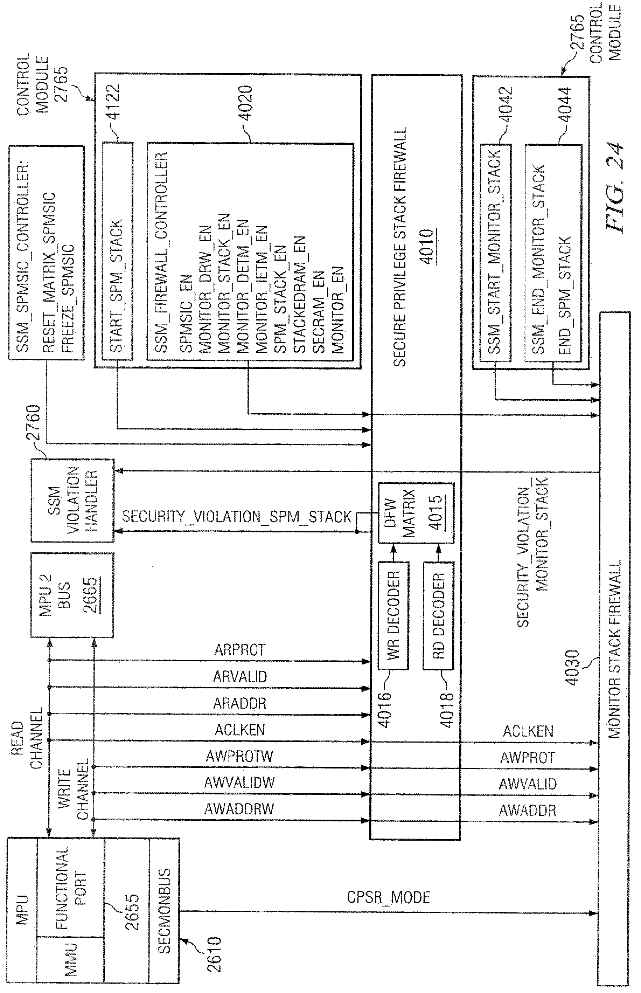

In FIG. 7, hardware monitoring of the Monitor Mode software code range of addresses for security violations is enabled by writing in a Monitor_EN field of a SSM_Firewall_Controller register of FIGS. 24-26 and of TABLE 19. The SSM_Firewall_Controller register is situated in a circuit called a Control Module as in FIG. 9, for example.

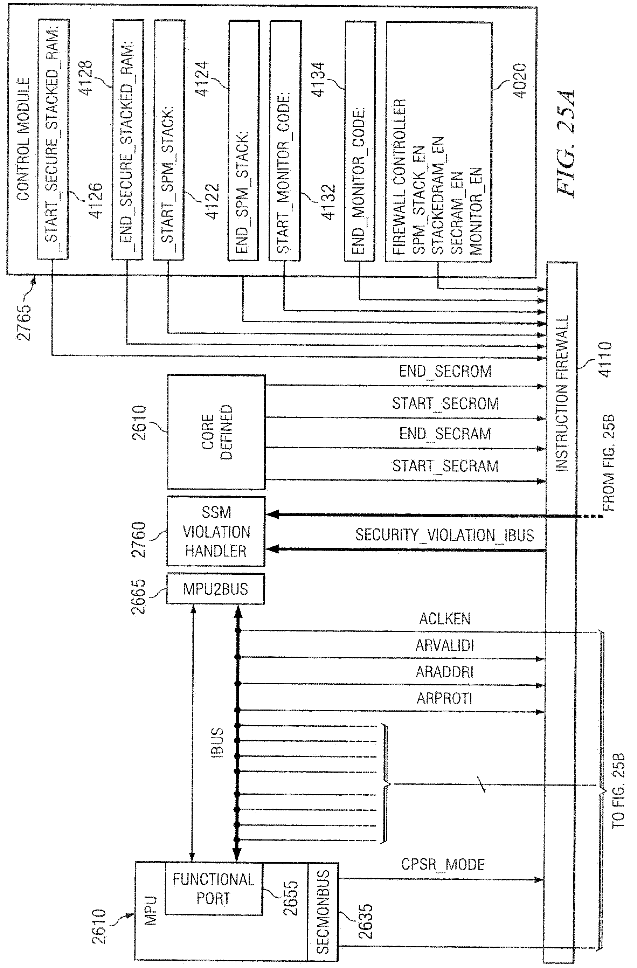

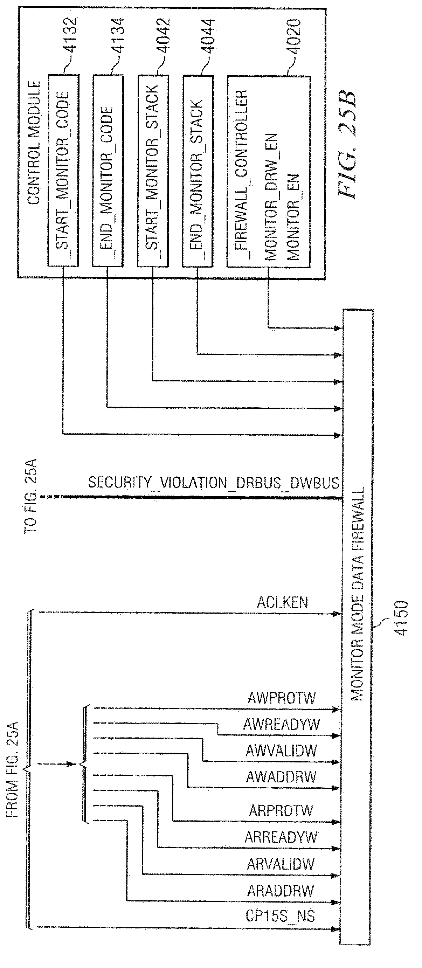

In FIGS. 7 and 25, when Monitor_EN is active, the SSM 2460 checks that the Monitor Mode software code only fetches instructions in an allowed memory range and only reads data from an allowed memory range. When Monitor_EN is active, the Start_Monitor_Code and End_Monitor_Code start address and end address registers are locked. If the Monitor Mode attempts to access an address outside the permitted address range(s) while the Monitor_EN field is active, a security violation signal is generated. This security violation hardware monitoring process is active when the MPU 2610 of FIG. 8 is physically in Monitor Mode (CPSR_Mode = Monitor). In this way, the SSM 2460 operation just described contributes, structures, or enforces addresses ranges for Monitor Mode so that hypervisor operation effectively occurs.

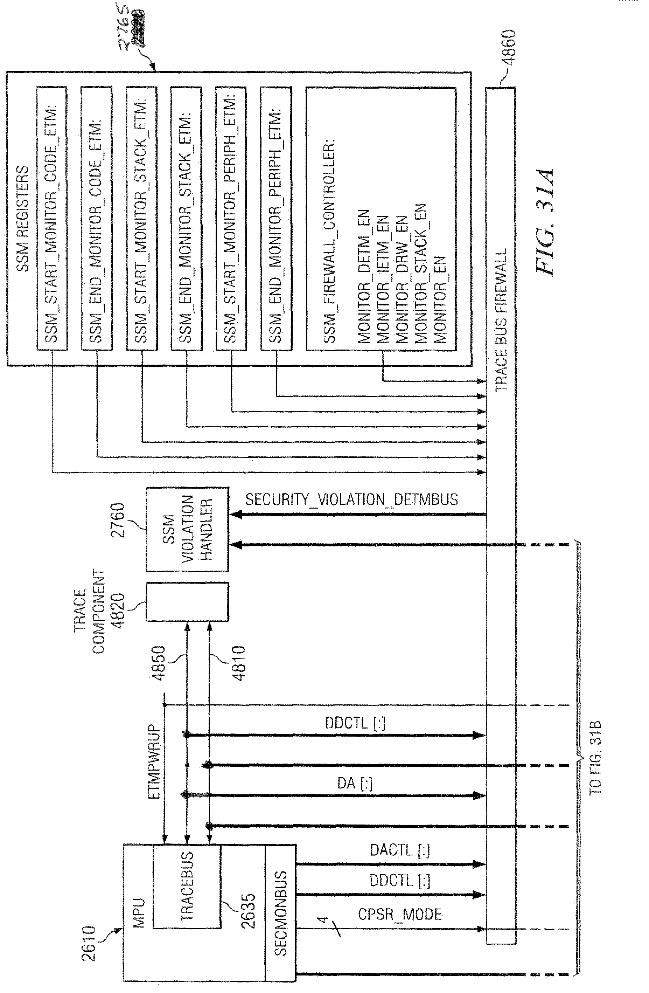

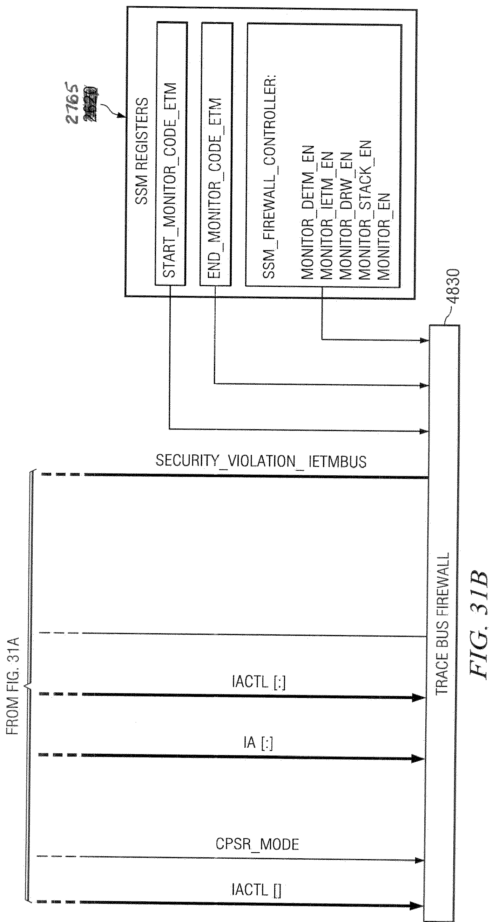

When the MPU is physically in Monitor Mode and the hardware monitoring mechanism is activated (Monitor_EN field active), the SSM hardware monitoring mechanism is configured to restrict the physical instruction fetch of the Monitor code to a ROM only location, for example. In that case, the Monitor mode RAM stacks are excluded. Execution in the monitor mode stacks is prevented because the stacks are not included in the ROM address range defined as permitted by the Start Monitor Code and End_Monitor_Code start address and end address registers. Moreover, the trace-related circuitry as described in FIG. 31A/31B allows detection of abnormal instruction flow activity. This prevention effectively impedes and resists basic buffer overflow attack. The Monitor Mode software code by this construction does not expose any API (FIGS. 4, 5, 6) to the external world.

Also, in some embodiments, the hypervisor code in Monitor Mode, context switches the MMU completely each time a switch is made from a Non-virtual category to a Virtual category. This provides a large system address space (e.g., 4 Gb or other large space size) for each category or world, physically differentiated with the classifier MreqSystem. An embodiment that hypervises two HLOSes suitably puts one HLOS in a Non-virtual category and the other HLOS in a Virtual category. Along with the circuitry and processes of FIGS. 5-8, a complete MMU context switch is added to accommodate such additional HLOS. Thus, alternative structure and process embodiments are provided depending on the target HLOS and/or target RTOS established in the architecture to run in a Virtual category.

In FIG. 7, the virtual section 2440 that is shown included respectively into public and secure mappings 2560, 2565, 2570 are quite suitable for a modem implementation that features desirably-high instruction rate (MIPS) and as little context switching as possible. In other embodiments, the MMU is completely devoted or 100% allocated to one category at a time while in Monitor, such as to have a 4 gigabyte address space for each category of FIG. 3. Accordingly, FIG. 7 is thoroughly revised for such other embodiments in respect of shared space.

FIG. 8 shows an embodiment of virtualization hardware architecture that includes a processor core MPU 2610 and the secure state machine SSM 2460. MPU 2610, for example, has an ARM^{™} core, MIPS^{™} core, or other processor core such as for core 1105 and/or 1422 of FIG. 2. MPU 2610 is coupled to SSM registers 2620 via a peripheral port 2625 and peripheral bus 2628. MPU 2610 has a virtual world with a Supervisor Mode, an FIQ mode, and an Abort mode in the virtual world. The SSM registers 2620 include a VP1_Debug_Dis debug disable for virtual processor 1 (VP1), a Non-secure/Secure qualifier VP1_NS, and a VP1_Active field for indicating a Virtual or Non-virtual category. An RTOS container FIQ **ID** interrupt identification for the RTOS is included in the SSM register 2620 area.

In FIG. 8, the processor core 2610 is coupled to an SSM Virtual Checker 2630 through a secure monitor bus SECMON 2635, which provides a signal and line CPSR Mode, and address lines to provide a Virtual Address for Virtual check 2630 and for a TRACE unit, (not shown). The Virtual Checker 2630 checks that the virtual modes execute properly in their own virtual address space. The Virtual Checker 2630 also includes a CPSR Mode switch checker 2636 and further includes an Initiator Firewall 2638.

An initiator firewall like Initiator Firewall 2638 is provided in each initiator in the system. An initiator is a circuit that initiates transfers of information. Each initiator firewall detects whether its associated initiator has been corrupted and can enforce specific security mechanisms, such as a buffer overflow checker or other checker. When an initiator is performing a transaction, in-transaction classifiers or qualifiers are generated. These in-transaction classifiers are, for example, any one or more of the following: MCMD for Read/Write qualification, and MreqInfo qualifiers such as MreqSystem, MreqSecure, MreqDebug, MreqType, MreqPrivilege and other suitable qualifiers. These qualifiers reflect the system state of the initiator at the time of the transaction, and the qualifiers are propagated to interconnect 2640. The interconnect 2640 generates a parameter designated ConnID to identify exactly which initiator made the transaction.

Each of several configurable Target Firewalls 2645 (e.g., each L4 interconnect firewall, system memory, and each L3 interconnect firewall) respectively dedicates a memory or a peripheral in the Targets 2650 to each initiator and isolates each such target among Targets 2650 from any other initiator so that corruption or attack from any other initiator is prevented. A firewall is configurable to share initiators, if desired. Either or both of an Initiator Firewall 2638 and a Target Firewall 2645 generate a Security Violation signal when an attempted bus-access by an initiator is inconsistent with permissions configured into a firewall.

A reset or power management transition may clear or erase a firewall configuration. The processor core 2610 boots in Secure Supervisor mode and reconfigures the firewalls 2645 to their default run-time configurations. Accordingly, upon reset, any memory or target 2650 that can be used for security is restricted to use by the processor core 2610 in Secure Privileged mode.

**In** FIG. 8, an SSM Physical Checker 2650 checks that the Virtual modes execute properly in their own physical address spaces. The SSM Physical Checker 2650 is bi-directionally coupled to the SSM Virtual Checker 2630 by an arrow 2652, representing defined Virtual and Physical memory space container boundaries from register 2620 and/or a Control Module 2765 of FIG. 9. The SSM Physical Checker 2650 is also coupled to Functional buses 2655. Physical Checker 2650 receives lines MreqSecure, MreqType, and MreqPrivilege (MreqSupervisor). The SSM Physical Checker 2650 has a Virtual Mode Creator block 2656 that creates the MreqSystem qualifier and supplies that signal MreqSystem to a bus interface 2665 designated MPU2BUS. Interface 2665 couples a bus protocol suitably used by MPU 2610 (e.g. AXI protocol) to a peripheral bus using another suitable bus protocol (e.g., OCP Open Core Protocol). MPU2BUS 2665 is bi-directionally coupled to Interconnects 2640 and Target Firewalls 2645 for various peripherals. Classifier signals such as MreqSystem, MreqSecure, MreqType, MreqPrivilege and MreqDebug are provided to the Interconnects 2640.

**In** FIG. 8, the SSM Physical Checker 2650 defines each virtual container physical memory space. The SSM Physical Checker 2650 also checks that when the processor MPU 2610 is executing in these containers and ranges there no fetch or data read outside each established boundary. **In** some embodiments, the SSM Physical Checker 2650 also uses classifier MreqType to check that each memory boundary defined as Data Only is not executed or accessed as if it were an instruction. This enhances buffer overflow attacks detection, for instance.

**In** FIGS. 5 and 8, the processor core 2610 is operated to execute in a virtual processor category (e.g., as a modem) in privileged mode. The SSM Physical Checker 2650 ensures that no unauthorized intruding User mode (MreqPrivilege=Non-privileged) accesses happen. The classifier MreqPrivilege facilitates checking by the Target Firewalls 2640 to intercept any non-privileged access to a peripheral or address space that is reserved for a virtual processor in FIG. 7.

The SSM Physical Checker 2650 is also coupled to the Write Data bus. Note that Physical Checker 2650 does not need to check for violation on the Write Data base in a case wherein the Data Cache and Write Buffer might not have been drained before entering the monitor mode in path to enter the virtual container. **In** such case, a possible writeback could result during this Monitor code and cause an unnecessary violation signal when no meaningful security violation has actually occurred. The Monitor Mode software code ensures the system coherency by executing the appropriate memory barriers before activating the VPx_Active to ensure that no undesired write takes place after entering the virtual container.

When leaving a virtual container to switch to the Monitor Mode, the Monitor Mode 2310 of FIG. 5 and 2410 of FIG. 6 executes a Data Memory Synchronization/Write Barrier (DMB_DSB/DWB) to ensure that all pending items in Data Cache belonging to the Virtual Processor are written to a physical address. See also FIG. 29 and TABLE 42. This reason is that when the virtual container is deactivated (VP1_ACTIVE = 0) then a write access belonging to the virtual container is no longer marked as Virtual by the MreqSystem qualifier being active. The implementer also defines or configures the virtual container or category to have a granularity such as page size and a permitted total memory space such as some substantial fraction of DRAM space.

In FIG. 8, an SSM Virtual Checker 2630 defines the virtual container virtual memory space. Also, the SSM Virtual Checker 2630 checks that when the processor core 2610 is executing in the virtual container there no fetch or data transfer outside the memory boundary. Memory boundaries defined as Data Only by classifier MreqType are not executed, which enhances buffer overflow attacks detection. By means of L1 cache physical to virtual indexing, the SSM Virtual Checker 2630 also ensures that the memory has not been corrupted by the non-virtual world to which it belongs. The SSM virtual checker also ensures that branch phantom instructions (see glossary TABLE 36) and executed instructions do not generate an exception. This facilitates detection of corrupted code in some attack scenarios.

In FIG. 9A, processor core 2610 is coupled via a peripheral port 2625 and bus interface 2728 to Registers 2620 in the SSM 2460. SSM 2460 also includes a Secure FIQ preemptive masking handler 2715 coupled to an Interrupt Handler 2720. The Interrupt Handler 2720 has various numbered inputs to which various interrupt sources in the system are assigned. Examples of interrupt sources are SSM (secure state machine) 2460, System DMA (SDMA), Display DMA, Camera DMA, Core, Emulation, and Peripheral.

Interrupt Handler 2720 is coupled to registers 2725 including an Interrupt Status Register ISR and Interrupt Register ITR, and is coupled to the peripheral port 2625 via the bus interface 2728. Interrupt Handler 2720 has FIQ/IRQ output coupled to the processor core 2610 via an interrupt bus 2735. The Secure FIQ preemptive masking handler 2715 delivers automatic public FIQ pre-emptive masking signals to Interrupt Handler 2720. In SSM Registers 2620, a Public_FIQ_VP1 register and a Secure_FIQ_VP1 register configure the Secure FIQ preemptive masking handler 2715.

A Firewalls and Checkers block 2740 includes an instruction firewall, monitor code firewall, monitor code integrity checker, monitor stack firewall, monitor data integrity checker, secure privilege stack integrity checker, variable length codec iVLCD firewall 2742, and virtual processor firewalls. Compare the SSM Virtual Checker 2630 and SSM Physical Checker 2650 of FIG. 8 with checker functions of the Firewalls and Checkers block 2740 of FIG. 9.

Further in FIG. 9, secure demand paging circuitry 2745 in effect expands secure memory space and has registers in SSM Registers 2620. Incorporated patent application TI-39617 describes some examples of secure demand paging technology that are suitably used in block 2745. A Security zone static configuration enforcement block 2750 is fed by CPSR control bits from the Security Monitor bus SECMON 2635. CPSR is monitored because CPSR determines modes and indicates transitions to and from Monitor Mode, for instance. A CPSR/NS block 2755 has a CPSR mode checker circuit and an NS bit Enforcement circuit. If a security violation event occurs, CPSR/NS block 2755 supplies a security violation output to a Security Violation Handler block 2760. The CPSR/NS block 2755 is fed with CPSR mode bits and MPU NS bit and is responsive to a signal designated CPSR Enforcement Mode supplied from a Control Module 2765. A Debug Modes Configuration block 2770 is activated by a general debug enable signal GenDbgEnable from a Platform Events and Configuration Handler block 2775. The Debug Modes Configuration block 2770 supplies a Debug Request to a Debug Port 2780 of the processor core 2610.

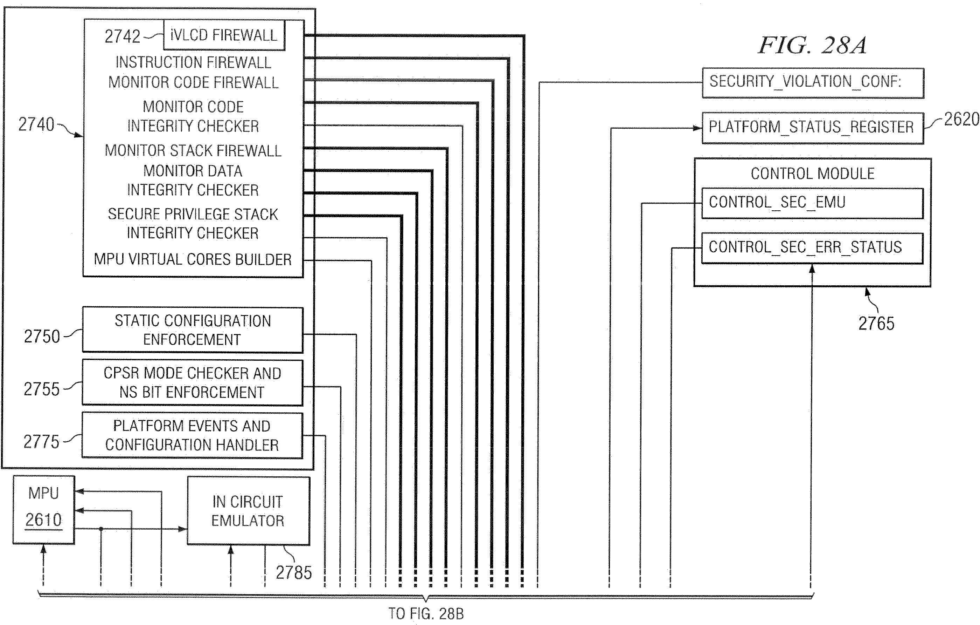

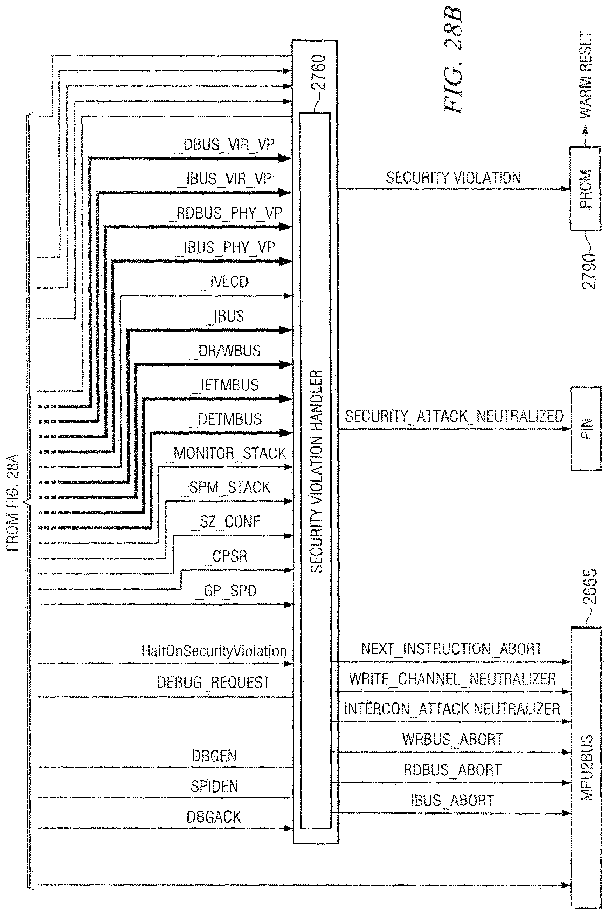

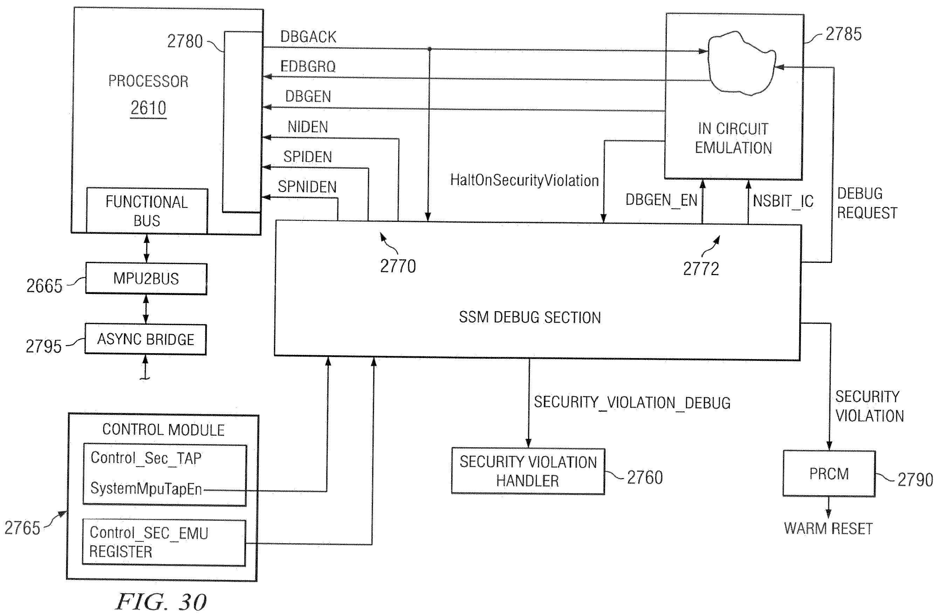

The Control Module 2765 supplies the Firewalls and Checkers block 2740 with information representing Start and End addresses of the monitor code and monitor stack, with the Start and End of the virtual processor resources, and with stacked memories protection and Secure privilege stack protection information. The Control Module 2765 supplies the CPSR/NS block 2755 with a CPSR Enforcement mode signal. Control Module 2765 supplies the Platform Events and Configuration Handler 2775 with signals along lines for a Device Type, for Platform Violations, and for Power Reset Events. Control Module 2765 supplies the Security Violation Handler 2760 with Platform Violations enables (compare with FIGS. 28A/28B) and supplies a debug section 2772 with information regarding Debug configuration (compare with FIG. 30).

Control Module 2765 in FIG. 9B has error log registers for access errors identified by various sources and firewalls in the system of FIG. 18, such as from SSM 2460, Secure Watchdog, Emulation Firewall, Peripherals Firewalls, DSP Firewall, MAD2D Firewall, SSM Firewall, Display DMA Firewall, Camera DMA Firewall, WCDMA Firewall, System Memory Functional Bus Firewall, Flash Firewall, On-Chip RAM Firewall, and On-Chip ROM Firewall. MAD2D means master asynchronous die to die, which is an electronic interface or optical-electronic interface or other communicative interface between stacked dice, wherein each die in the stack has an integrated circuit fabricated in that die. Each die in the stack is physically glued or otherwise affixed to any adjacent other die. Some embodiments have application processor 1400 (FIG. 2) and Modem processor 1100 on respective stacked dice, or application processor 1400 plus a graphic processor on each respective die, or plural application processors 1400 replicated on respective dice, and other embodiments provide other combinations of two or more stacked dice partitioning the electronic system of FIG. 2 and other systems. Separate error log registers of Control Module 2765 log errors in Debug mode for the various sources in the system of FIG. 2 and FIG. 18.

**In** FIG. 9B, Security Violation Handler 2760 is fed with violation information from Firewalls and Checkers block 2740, from Security zone static configuration enforcement block 2750, from CPSR/NS block 2755, and from Platform Events and Configuration Handler 2775. Security Violation Handler 2760 is bi-directionally coupled to the SSM Registers 2620.

**In** FIG. 9A, Functional Bus Interface MPU2BUS 2665 is coupled to the processor core 2610 by an Instruction Bus IBus, a Data Read Bus RDbus, and a Data Write Bus WRbus. **In** FIGS. 9B and 28B, Security Violation Handler 2760 supplies bus interface MPU2BUS 2665 with outputs MReqSystem_IBus, MReqSystem_RDbus, MReqSystem_WRbus, IBus_Abort, RDbus_Abort, WRbus_Abort, Intercon_Attack_Neutralizer, and Next_Instruction_Abort. The outputs named IBUS_Abort, RDBUS_Abort, WRBUS_Abort each go to interface MPU2BUS 2665 and cause the interface 2665 to destroy the current access transaction and send an error response ERR to MPU 2610. Some embodiments use outputs called Read Channel Abort and Write Channel Abort or Neutralizer where there is no separate IBUS.

Security Violation Handler 2760 generates an interconnect attack neutralization signal. This Intercon_Attack_Neutralizer signal is generated active when the SSM 2460 detects an attack attempt such as a stack buffer overflow. The attack neutralization is provided without damaging or impairing the memory functionality and the processor 2610 functionality. This Intercon_Attack_Neutralizer signal is also suitably delivered as a security attack indicator output of SSM 2460.

The output Intercon_Attack_Neutralizer goes to interface MPU2BUS 2665 and causes interface 2665 to generate a Prefetch Abort when a Data Abort is received. This operation kills an erroneous software application that is currently generating the Data Abort. By doing so, the erroneous software is wiped out from the MPU 2610 pipeline. Intercon_Attack_Neutralizer acts as a virus killer. The Interconnect Attack Neutralizer function generates a Prefetch Abort (on a valid instruction) each time any of the Interconnect firewalls (e.g., 3522.i or 3532.i of FIG. 18) generate a Data Abort to the interface 2665 and MPU 2610.

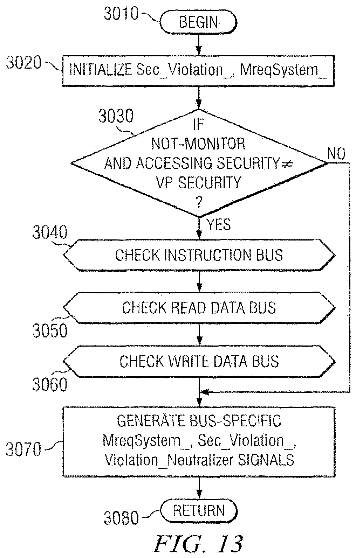

The Intercon_Attack_Neutralizer line and signal are fed to circuitry in interface 2665. Interface 2665, in turn, generates a Prefetch Abort to MPU 2610 when a system peripheral generates a Data Abort. Prefetch Abort is generated to trigger an Instruction memory barrier and thereby flush the MPU 2610 pipeline. The Prefetch Abort stops the prefetching of instructions of the currently-executing software. The reason for stopping the prefetching is because current software executing is quite probably responsible if a Data Abort has just happened. Since virus software may act in this faulty way, the Intercon_Attack_Neutralizer signal acts to stop virus software. Moreover, MPU instruction address register information is captured to enhance diagnostics and prevent a virus from concealing itself. Undesirable propagation of either a Data Abort or Instruction Abort is also prevented. See further Neutralizer description in connection with FIG. 13.

The output Next_Instruction_Abort also goes to interface MPU2BUS 2665 and causes interface 2665 to generate a Prefetch Abort when a Data Abort is received. Next_Instruction_Abort is useful when MPU 2610 processing time to respond to the error response ERR might be too long (several clock cycles) to resist a buffer overflow attack for instance. **In** other words, in such scenario, Next_Instruction_Abort can be more effective than generating the outputs IBUS_Abort, RDBUS_Abort, or WRBUS_Abort to generate the error response ERR.

By contrast with Interconnect_Attack_ Neutralizer, the Next_Instruction_Abort is generated by the Security Violation Handler 2760 in SSM 2460 when attacks are detected, such as a buffer overflow attack or boundary access violation. The generation of Next_Instruction_Abort may, but does not necessarily, imply that a Data Abort is generated to the MPU 2610. This is useful to resist a buffer overflow scenario in case a Data Abort is not generated.

**In** FIG. 9B, Security Violation Handler 2760 supplies a Debug request to an In-Circuit Emulation block 2785, which in turn delivers a HaltOnSecurityViolation signal to Security Violation Handler 2760. Security Violation Handler 2760 supplies a Security Violation signal to a Power, Resets, and Clocks Manager PRCM 2790 which outputs a Warm MPU Reset or a Cold Reset depending upon occurrence and nature of a Security Violation signal supplied to PRCM 2790. Either or both of Security Violation Handler 2760 and a Secure Watchdog Timer have security violation outputs coupled to PRCM 2790.

A security violation strategy is configurable in a Security Violation Configuration register Security_Violation_Conf in SSM Registers 2620. The Security_Violation_Conf register controls aborts depending on the configured abort type, and further determines whether or not a Warm CPU reset or a Cold Reset or no reset is generated for particular group of security violations. Configuring of this Security_Violation_Conf register by one or more write operations is suitably restricted and reserved to a predetermined mode such as Secure Privilege mode. Different security violations generated by the SSM 2460 are flagged in a Platform Status register in SSM Registers 2620. Security Violation flags are clearable by some restrictive mode of access such as Secure Privilege Mode access. A similar restrictive mode of access is suitably used for writing and reading the various SSM Registers 2620 and registers in Control Module 2765.

Among other things, SSM 2460 in FIG. 9 includes first and second checker circuits having first and second checker outputs coupled to Security Violation Handler 2760. The first checker circuit has input lines for receiving mode signals indicative of at least some of the processor modes. The first checker circuit has logic circuitry coupled to the input lines to detect mode transitions between the modes and activate the first checker output upon detection of a mode transition contrary to a permitted transition policy for the logic circuitry. For an example of a first checker circuit, see any corresponding portion of CPSR Mode Checker and NS Bit Enforcement circuit 2755. The second checker circuit has second input lines for receiving mode signals indicative of at least some of the modes, and further has third input lines for receiving address signals. The second checker circuit has second logic circuitry responsive to the mode signals and to the address signals to identify attempted transactions of different modes and activate the second checker output upon detection of an attempted transaction including an address and a mode contrary to a permitted transaction policy for the second logic circuitry. For an example of a second checker circuit, see any corresponding portion of the checkers in block 2740.

In FIGS. 9A/9B, Power Management circuitry is provided to establish and control different power domains in a single integrated circuit (IC) and/or in a multiple IC system. The power domains handle different levels of power hierarchy and facilitate proper switching from one power domain to another without losing already-configured parameters that are desired for use after the switching or upon return to operation of a given power domain. The power domains include an MPU Power Domain, a Wakeup Power Domain, a Core Power Domain, and a Peripheral Power Domain.

The MPU Power Domain includes the processor core 2610 and its ports and interfaces 2625, 2635, 2655, 2735, 2780, Functional Bus Interface 2665 and peripheral bus interface 2728, and SSM 2460 including blocks 2620, 2715, 2740, 2745, 2750, 2755, 2760, 2770, 2775, Interrupt Handler 2720 and its Interrupt Registers 2725, iVLCD 2744, 2742, and In-Circuit Emulation block 2785. SSM 2460 is suitably driven by a MPU core clock and a half-rate clock derived from the MPU core clock. The Wakeup Power Domain includes PRCM 2790. A Warm CPU reset and a Cold reset are provided. The Core Power Domain includes the Control Module 2765 and Memories. The Peripheral Power Domain includes various cryptographic accelerators and resources.

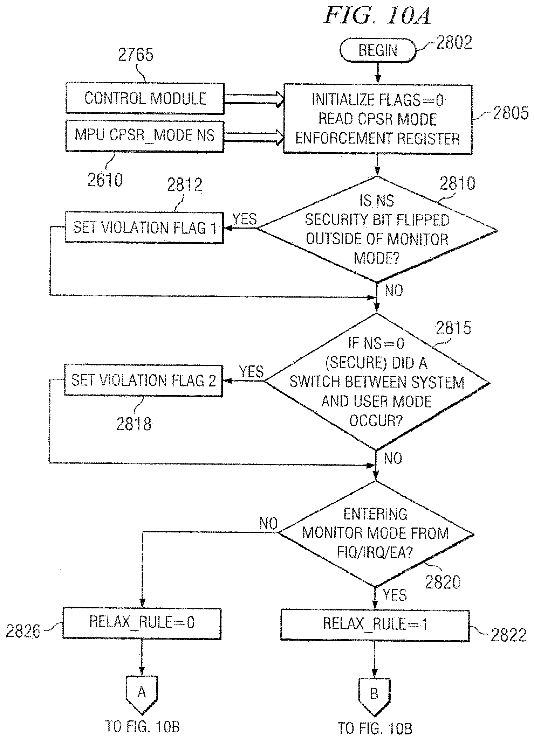

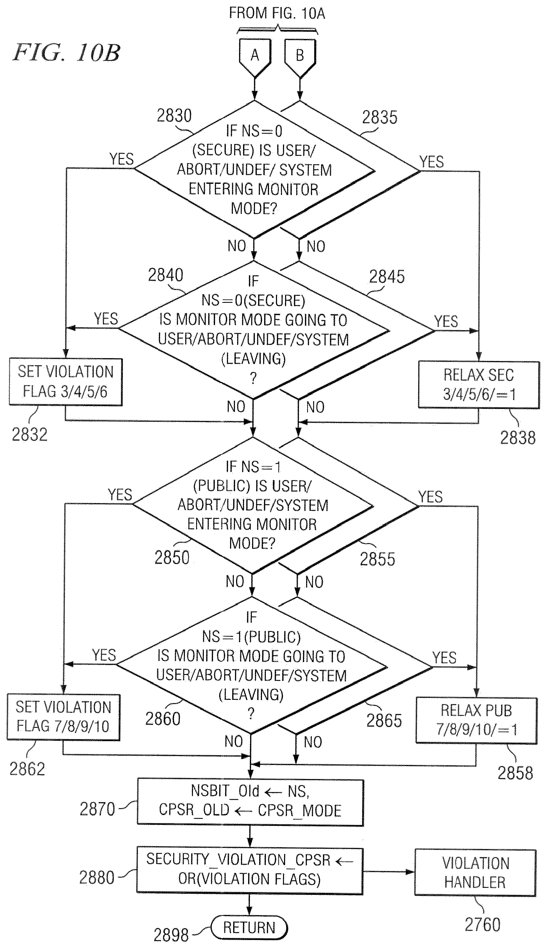

In FIGS. 9 and 10A/10B, SSM 2460 has the hardware CPSR mode enforcement block 2755. This block 2755 is configured by TABLE 8 fields in a

SSM_CPSR_Mode_Enforcement register in the Control Module 2765. These register fields are also identified in the _Enforcement signal names in various IF conditionals in block 2755 design code of TABLE 1. At reset, some or all of the enforcement fields of TABLE 8 in that SSM_CPSR_Mode_Enforcement register are activated according to a non-volatile configuration for the product unit.

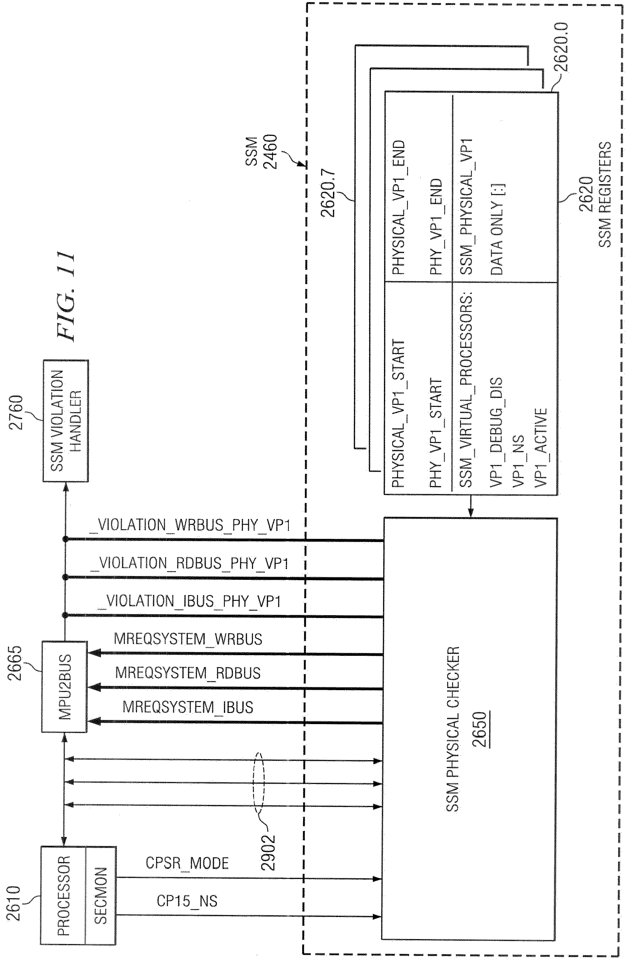

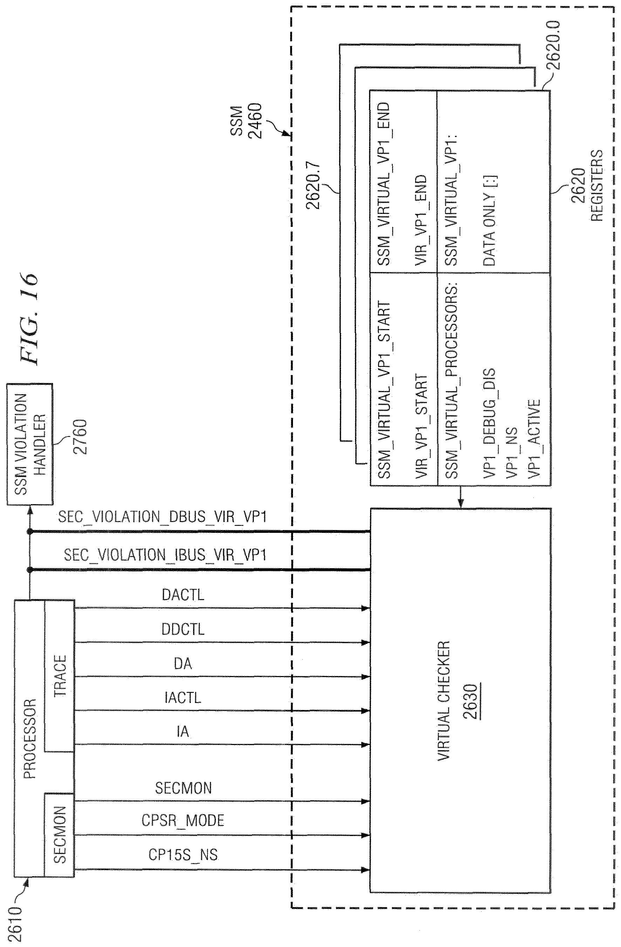

The CPSR Mode Checker and NS Bit Enforcement block 2755 contributes, specifies and structures the permitted transitions and non-permitted transitions so that the Monitor Mode operations can be and are effectively interposed in the architecture as shown in FIG. 3 areas 2140, 2150 and in FIG. 5. The CPSR mode enforcement block 2755 contributes and structures the permitted transitions and non-permitted transitions so that the Monitor Mode effectively provides a canopy or mantle of hypervisor control in FIG. 6. The various operational categories of FIG. 4 are established under hypervisor control by the Monitor Mode software and by the Physical Checker 2650 of FIG. 11 and Virtual Checker 2630 of FIG. 16 doing hardware control of address spaces, and by other blocks and firewalls in the system as described further elsewhere herein.

If a security zone mechanism associated with MPU 2610 has capability to change the NS (non-Security) bit in some or all Privilege modes, CPSR Mode Checker and NS Bit Enforcement 2755, in TABLE 1 and FIG. 10A, is arranged to restrict such capability to Monitor Mode in a step 2810. If the security zone has capability to switch from Monitor Mode to User mode (non-Privilege) by changing the CPSR mode bits, CPSR Mode Checker and NS Bit Enforcement 2755 is arranged at step 2815 of FIG. 10A to restrict such switching to Privilege mode instead. See further discussion of security zone mechanisms in FIG. 26.

In CPSR Mode Checker and NS Bit Enforcement 2755, hardware and process blocks in FIG. 10B are provided for detection of certain switches that are made impermissible by some embodiments herein. A block detects a switch from/to the Monitor Mode to/from Undefined mode, and hardware-provides a Security Violation in that case (MU bit). See TABLE 8 on CPSR Mode Enforcement Register in Control Module 2765. Detection of a switch from/to the Monitor Mode to/from the Abort mode triggers a hardware-provided Security Violation in that case (MA bit). Detection of a switch from/to the Monitor Mode to/from the System mode is provided for advanced layering capability in the Secure mode (MS bit). Detection of a switch from/to the System mode to/from the User mode is also provided for advanced layering capability in the Secure Mode (SU bit).

Three register bits or fields respectively designated FIQ_/IRQ_/EA_Trapped_in_Monitor are provided. When a respective FIQ/IRQ/EA_Trapped_in_Monitor bit is set, see step 2820 in FIG. 10A, all restrictions above are relaxed by setting Relax_Rule=1 if the nFIQ or nIRQ bit or EA bit is active at the MPU boundary. Monitor Mode is entered or exited in response to and as a consequence of an FIQ or IRQ or EA. For instance, the TABLE 8 FIQ_Trapped_In_Monitor field replicates part of the security zone mechanism static configuration to teach the CPSR Mode Checker and NS Bit Enforcement 2755 that a switch to Monitor Mode can appropriately happen when an FIQ occurs and thus no Security Violation should be generated. When this FIQ_Trapped_In_Monitor is activated, the Relax_Rule flag can be set, and block 2755 looks at Interrupt Handler 2720 output to MPU and detects when nFIQ signal is asserted/deaserted to MPU interrupt interface. In this way, hypervisor operation in Monitor Mode is further supported by hardware.

FIG. 9B and FIGS. 10A/10B and show the CPSR Mode Checker and NS Bit Enforcement block 2755 and example circuitry represented by hardware design code. The CPSR_Mode signal signifies whether the hypervisor Monitor Mode is active or operations have switched to another mode. Note that in FIG. 10B, the shorthand notation {User,Abort,Undef,System} acts as an index with four values and means that a variable or a block of design code is provided for User, and repeated analogously for Abort, and repeated analogously for Undef, and repeated analogously for System.

The variable CPSR_Old represents a next-previous value of the variable CPSR_Mode. CPSR_Old and CPSR_Mode are compared to determine whether the system is continuing in Monitor Mode, transitioning out of Monitor Mode, or transitioning into Monitor Mode, and to perform enforcements accordingly. The variable NSbit_Old represents a next-previous value of the MPU security signal CP15S_NS representing Non-secure or Secure.

In FIG. 10A, operations commence with a BEGIN 2802 and proceed to a step 2805 that initializes flags and variables (e.g., to zero). Step 2805 also inputs the information fields or bits from the CPSR Mode Enforcement Register in Control Module 2765 and also inputs from MPU 2610 the Non-secure/Secure signal NS and the CPSR Mode.

A decision step 2810 determines whether the NS bit has been flipped (state-changed) outside of Monitor Mode. If Yes, a security violation Flag1 is set at a step 2812. A succeeding decision step 2815 is executed after either step 2812 or after No at step 2810. Decision step 2815 determines whether NS=0 (Secure) and a switch either from System mode to User mode or from User mode to System mode occurred. If Yes, another security violation Flag2 is set at a step 2818.

A following decision step 2820 is executed after either step 2818 or after No at step 2815. Decision step 2820 determines whether operations are entering Monitor Mode from an occurrence of Fast interrupt FIQ, regular interrupt IRQ, or External Abort EA. If Yes, then a Relax_Rule flag is set (e.g. to one) at a step 2822, and if No, then the Relax_Rule flag is cleared (e.g. zero) at a step 2826.

For illustrative purposes in FIG. 10B, a series of paired decision steps represent the same decision but different outcomes in a particular pair. The pairs of decision steps are shown as pair 2830, 2835; pair 2840, 2845; pair 2850, 2855; and pair 2860, 2865. If Relax_Rule flag is clear (zero) in step 2826, then steps 2830, 2840, 2850, 2860 apply. If Relax_Rule flag is set (one) in step 2822, then steps 2835, 2845, 2855, 2865 apply. In TABLE 1, the flag values are handled by nested IF statements, and FIG. 10B shows a related alternative embodiment.

If step 2826 is reached and Relax_Rule = 0 therein, operations proceed to decision step 2830 to determine whether NS=0 (Secure) and if Monitor Mode is being entered from User/Abort/Undef/System mode. If Yes, then operations branch to set security violation Flag3, Flag 4, Flag5, and/or Flag6 in a step 2832 depending from which mode the entrance to Monitor Mode is being attempted. If No in step 2830, then operations proceed to decision step 2840, to determine whether operations are conversely leaving Monitor Mode to any of User/Abort/Undef/System mode. If Yes in step 2840, then operations branch to set security violation Flag3, Flag 4, Flag5, and/or Flag6 in step 2832 depending on to which mode the transition from Monitor Mode is being attempted. In other embodiments, separate additional flags are provided.

After step 2832 or after No in step 2840, then operations proceed to decision step 2850, to determine whether NS=1 (Non-secure, Public) and if Monitor Mode is being entered from User/Abort/Undef/System mode. If Yes, then operations branch to set security violation Flag7, Flag 8, Flag9, and/or Flag10 in a step 2862 depending from which mode the entrance to Monitor Mode is being attempted. If No in step 2850, then operations proceed to decision step 2860, to determine whether operations are conversely leaving Monitor Mode to any of User/Abort/Undef/System mode. If Yes in step 2860, then operations branch to set security violation Flag7, Flag8, Flag9, and/or Flag10 in step 2862 depending on to which mode the transition from Monitor Mode is being attempted. In other embodiments, separate additional flags are provided.

In FIG. 10B, if Relax_Rule step 2822 is reached instead of step 2826, operations proceed to decision step 2835 instead of 2830 to make the same determination whether NS=0 (Secure) and if Monitor Mode is being entered from User/Abort/Undef/System mode. If Yes at step 2835, then operations branch to a step 2838 to set a particular flag Relax_Rule_SEC_User/Abort/Undef/System (e.g. to one, and not indicative of a security violation) and proceed to a step 2855. If No at step 2835, operations go to step 2845, make the same determination as step 2840 and go to step 2838 if Yes at step 2845 and step 2855 if No at step 2845. At step 2855 the same determination as step 2850 determines whether NS=1 (Public) and if Monitor Mode is being entered from User/Abort/Undef/System mode. If Yes, then operations instead branch to a step 2858 to set a particular flag Relax_Rule_PUB_User/Abort/Undef/System (e.g. to one, and not indicative of a security violation) and proceed to a step 2870. If No at step 2855, operations go to step 2865, make the same determination as step 2860 and go to step 2858 if Yes at step 2865 and step 2870 if No at step 2865.

Following any of steps 2860 (No), 2862, 2865 (No), or 2858, a step 2870 prepares for a subsequent cycle of transition monitoring. Step 2870 updates NSBIT_Old with the value of NS, and NS is updated on a subsequent cycle. Step 2870 also updates CPSR_Old with the value of CPSR_Mode, and CPSR_Mode is updated on a subsequent cycle. After step 2870, a composite security violation flag SECURITY_VIOLATION_CPSR is updated with a logic function such as an OR of all the diagnostic security violation flags Flag1, Flag2,...Flag10 described above in connection with steps 2812, 2818, 2832, 2862. The Security_Violation_CPSR flag is fed to Security Violation Handler 2760 of FIGS. 9 and 28A/28B. Then a RETURN 2898 is reached and hardware operations go back to BEGIN 2802 for a subsequent cycle of monitoring various transitions so as to structure and protect Monitor Mode to effectively act as a hypervisor.

To protect a security zone, the SSM CPSR Mode Checker and NS Bit Enforcement block 2755 ensures that no CPSR_Mode switch can occur from User mode directly to Monitor Mode while bypassing the Secure kernel or bypassing Supervisor mode contrary to the operation of FIG. 5. This protection is provided because such a switch-bypass is likely to be associated with a compromise of security.

In FIG. 10A, the Relax_Rule flag in one example of the circuitry provides a signal for SSM 2460 showing the security zone configuration in embodiments wherein the MPU 2610 might not provide all MPU2610 CP15 register bits as hardware signals on the SECMON bus. Other embodiments provide auto-detection hardware of the MPU 2610 CP15 configuration as well as for MMU and caches.

The flag Relax_Rule is set to '1' when FIQ or IRQ are detected (fired to the MPU hardware inputs) and IRQ/FIQ_traps in Monitor Mode are configured to '1'. If there is a transition User mode to Monitor Mode and Relax_Rule = 0, meaning that the more-permissive case of Relax_Rule = 1 is absent, then the SSM hardware generates a Security Violation if Monitor_vs_User register field of TABLE 8 in the SSM_CPSR_Mode_Enforcement register in Control Module 2765 is set active. Otherwise if the Monitor_vs_User bit is inactive, no violation is taken. In this way, the hardware uses or takes the Monitor_vs_User register bit to make an implicit decoding of whether or not to generate a Security Violation.

If Relax_Rule = 1, a flag is set or kept that represents that a jump back is expected and not a security violation. When the jump back occurs, no FIQ/IRQ is asserted to the MPU 2610. The condition of Relax_Rule = 1 facilitates switching back and forth between modes starting from Public User mode, such as for example, Public User to Monitor Mode and back to Public User mode. Suppose an interrupt FIQ fires during a software application. The improved SSM 2460 traps FIQ/IRQ/EA into Monitor Mode, and the system hardware is established (static configuration, architecture defined, for instance) to create a CPSR_Mode switch from User mode to Monitor Mode. Respective signals designated {FIQ/IRQ/EA}_Trap_in_Monitor allows control over mode switches between User and Monitor Mode by detecting that these events have happened, and ensure that a switch that could be associated with a security attack is prevented. From a software viewpoint FIQ trapping directly into Monitor Mode further enables the hardware to structure and establish Monitor Mode code as a hypervisor.

A further embodiment of the hypervisor prevents and detects inter-virtual mode switches, such as from Non-virtual Public User mode to Virtual Public Monitor Mode. Another embodiment implements eight categories instead of the four shown in FIG. 4.

Note that more or fewer flags are suitably used in various embodiments depending on the amount of diagnostic detail desired in case a security violation occurs.

In FIG. 11, an integrated circuit has processor core 2610 coupled via the MPU2BUS block 2665 to the SSM Violation Handler 2760. The processor core 2610 is coupled via various functional bus lines 2902 to the SSM Physical Checker 2650. Bus lines 2902 in an example are Clock as well as Protection, Address, and Valid lines for each of an Instruction bus, Data Read bus, and a Data Write Bus. Physical Checker 2650 determines whether any physical address is in the Modem physical address range. The FIG. 11 example has eight ranges Start/End defined by registers 2620.0-.7 "Modem" is used in the discussion without limitation for a system block controlled by an RTOS in Virtual Public category 2430.

Hardware Firewalls FW permit Data accesses by Modem or by Secure mode, and this is called multi-share herein. For multi-sharing, CPSR_Mode information from the SECMON bus is used with a suitable Data Memory Barrier established in Monitor Mode. SSM Physical Checker 2650 generates the MreqSystem classifier. Physical Checker 2650 performs MreqType checking of Data versus Instruction and checks the MMU coherency, and issues the Security Violation signal if these checks detect a problem.

In FIG. 11, a secure access (NS=0, MreqSecure ='1') to a location in Modem physical address space is seen as a permitted secure access even if the access is not originated by the Modem. Such normal secure access is permitted, with firewall and run-time integrity checks.

The concepts are applicable to different embodiments with different bussing structures. For example, some embodiments have a single bus for instructions and data, and other embodiments have an instruction bus and a separate data bus for data. Yet other embodiments have the data bus separated into a data read bus and a data write bus. Still other embodiments have multiple width bus structures and other bus structures for increasing bandwidth and parallelism and for other purposes.

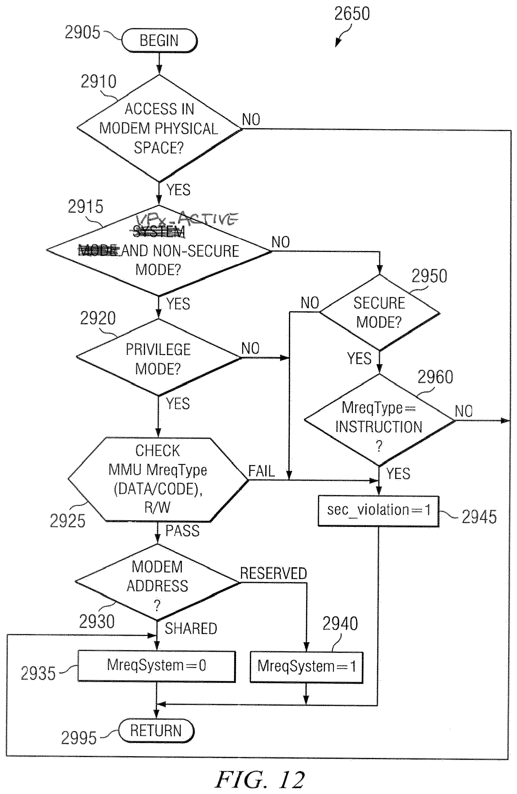

FIG. 12 depicts operations of the hardware defined in TABLE 2. Operations commence at a begin 2905 and proceed to a decision step 2910 to check one or busses to determine whether an access in Modem physical space has occurred. If so, then operations proceed to a decision step 2915 to determine whether the mode is a Public (non-secure) mode and the virtual processor field VP1_Active (VPx_Active in general) is active concurrently. In the modem virtual processor example, passing step 2915 (Yes) means that the modem so far appears to be attempting an access in modem physical address space. If so, then operations proceed to a further decision step 2920 to determine whether the mode is a Privilege mode. If so, then operations proceed to a checking step 2925 to check the MMU based on whether a Data or Instruction access is involved and whether the access is a read or write access.

If the checking at step 2925 passes, then the MMU passes and operations go to a decision step 2930 to determine whether the Modem address to which access is attempted is a Shared address or a Reserved address. If Shared address, then operations go to a step 2935 to set the classifier MreqSystem to a predetermined inactive value (e.g., zero). If a Reserved address in step 2935, then operations go instead to a step 2940 to set the classifier MreqSystem to an active value (e.g., one). If the checking at step 2925 fails, then the MMU is incoherent and operations instead branch from step 2925 to a step 2945 to set a Security Violation SEC_VIOLATION flag active (e.g., one) for the applicable bus in FIG. 11.

In FIG. 12, if the mode is not a Privilege mode in step 2920, then operations branch to step 2945 to set the Security Violation SEC_VIOLATION flag active. If in step 2915 the mode is not both VPx_Active and Public (non-secure), then operations branch to a step 2950 to determine whether the mode is a Secure mode. If not, then operations go to step 2945 and set the Security Violation SEC_VIOLATION flag active, since a non-secure, non-virtual-processor access is not permitted in modem space, for example. If the mode is a Secure mode at step 2950, it might be making a data access, but an instruction access is not permitted. If Secure mode at step 2950, then operations instead go to decision step 2960 to determine whether the type of access is for an instruction (MreqType=instruction). If not, then the access is a permitted access for Data and operations go from step 2960 to the step 2935 to set the classifier MreqSystem inactive (zero). If the access is for an instruction (Yes at step 2960), then the access is not a permitted access into Modem space, even though it is in Secure mode, and operations go from step 2960 to the step 2945 to set the Security Violation SEC_VIOLATION flag active. After completion of any of steps 2935, 2940 or 2945 to issue MreqSystem or set the Security Violation, then operations go to a RETURN 2995 and the hardware goes back to BEGIN 2905 to evaluate another access.

FIG. 11 shows an example of a Physical Checker in an embodiment having a separate instruction bus, data read bus, and data write bus. Physical Checker 2650 supplies signals on MreqSystem lines for instruction bus, read bus, and write bus. SSM Physical Checker 2650 also is coupled by Security Violation lines for instruction bus, read bus and write bus to the SSM Violation Handler 2760. Security Monitoring bus SECMON delivers CP15S_NS and CPSR Mode signals to Physical Checker 2650. Physical Checker 2650 is coupled to SSM Registers 2620 that configure and control the operations of Physical Checker 2650. Physical Checker 2650 of FIG. 11 includes portions of block 2740 of FIG. 9 that support and perform physical checking.

Eight sets of SSM Registers .0-.7 each include physical start address PHY_VP1_START0, physical end address PHY_VP1_END0. The addresses are suffixed with an index x (e.g., 0,1,..,7). Index x represents any one of a predetermined number of different contexts (e.g., eight) permitted in the example, and the registers establish that number of physical address ranges specified by physical Start/End address boundaries and that same number of virtual address ranges specified by virtual Start/End address boundaries.

**In** this example, the Virtual Public category 2430 of FIGS. 4 and 6 has an address space which is the composite of eight physical address ranges defined by the eight pairs of Start and End registers. These physical start/end registers are useful for hardware-determining the Boolean designated Access_in_Modem_Physical_Space in TABLE 2 that goes active when an access is attempted into Modem physical address space. They are explicitly identified in the logic of TABLE 3.

**In** FIG. 11, the SSM Registers also include virtual processor registers SSM_VIRTUAL_PROCESSOR, and register SSM_PHYSICAL_VP1, and Virtual Processor (VP1) information VP1_DEBUG_DIS, VP1_NS, and VP1_ACTIVE. The register SSM_PHYSICAL_VP1 has eight (8) single-bit entries that when set high respectively indicate that a corresponding physical memory space 0, 1, ..., 7 is data only. These entries are useful as in TABLE 2 because checking whether an access is permitted can depend on whether the access is for instructions or for data.

When VP1_DEBUG_DIS is high, enable lines designated DBGEN and NIDEN are activated before entering the VP1 CPSR modes and are reset to previous value before exiting. When VP1_NS is low in FIG. 11, the Virtual Secure category 2440 or Non-Virtual Secure category 2450 is active in FIGS. 4 and 6. When VP1_NS indicates Public and VP1_Active represents Virtual (active), the CPSR modes are active for Virtual Public category 2430. See also FIG. 30, TABLE 30 and TABLE 36.

SSM_VIRTUAL_PROCESSORS holds the Secure Demand Paging (SDP) Page Usage Level which relates to the priority of the page for demand paging purposes, see incorporated patent application TI-39617.

**In** FIG. 11, the Physical Checker 2650 maintains and detects violations of a definition of a Physical Modem space range that includes On-Chip RAM for modem, system peripheral space for Modem and Emulation, WCDMA modem, Flash memory section, SDRAM Reserved section and SDRAM Shared section, MMU TTB Shared section, and their related registers that are suitable for mapping into modem address space.

The Physical Checker 2650 hardware checks both that the mode is not Monitor Mode and that the Virtual_processor mode is active. The hardware verifies that the Virtual processor VP1 is coherent, such as that CP15S_NS has the configured value for it.

The hardware 2650 also checks whether the current access at this clock cycle is occurring in one of the defined physical address ranges indexed x for an allowed context. If it is not in a permitted range, then the circuitry generates a security violation. When software is hijacked, it is like to be executing or attempting access outside the permitted physical address ranges. For example, the designated..PROT[2] line provides Data/Opcode type information for checking. If the checks pass, then the hardware generates the MreqSystem qualifiers. The MreqSystem qualifiers are propagated, along with the now-checked bus signals representing the access, to interconnect firewalls for system peripherals for further checking and isolation of any problems according to the firewall hardware scheme.

For write bus monitoring, notice that the hardware does not need to check whether the mode is not Monitor Mode. This latitude is mainly due to posted write that can occur anytime even in Monitor Mode. Some CPU cores can post Read and Write addresses before any accesses physically happen. Some embodiments of SSM herein respond to this posting capability, when present, to send back an External Prefetch/Data Abort (In_Band) signal SRESP response before any physical Data Read or Data Write takes place. The MPU2BUS interface 2665, either directly or via Monitor code, responds to that In-Band signal to neutralize an attack by intercepting the actual Read or Write transaction. A damage scenario is prevented because memory is not corrupted or one or more attacker instructions are not executed.

Consider a case wherein Secure FIQ happens, operations directly enter Monitor Mode, and posted writes are issued at that time. Security remains uncompromised nevertheless. The reason is that even if an attacker process running in Public mode attempts to exploit this case, the Public mode attacker process is unable to modify the VP1_Active bit. Physical Checker 2650 therefore does not tag the access with MreqSystem active, and the access is caught and prevented by the interconnect firewalls 3522 of FIG. 18, which are reserved for the Modem by requiring MreqSystem active. Before a process can set the VP1_Active bit to an active state (e.g., one), a flush write buffer (responsible for posted write) is established. In this way security robustness is enhanced.

If the checks regarding non-Monitor, security NS, and VP1_Active pass and then any of the eight address range checks (contexts indexed x) activate the corresponding MreqSystem_x classifier, then an OR-ing process in the TABLE 3 hardware 2650 generates MreqSystem active for the access. More specifically, the Physical Checker 2650 tags the current transaction with MreqSystem active on the applicable bus IBUS (instruction), RDBUS (read data), or WRBUS (Write data). This MreqSystem active signal or tag is encapsulated in the current bus transaction by the MPU2BUS interface 2665.

If a security violation is detected, SSM hardware of TABLE 3 generates a security violation flag for status flag recordkeeping. The security violation flag is used to trigger a Warm CPU reset/interrupt or other suitable security response.

In FIGS. 13, 9, and 28B, Intercon_Attack_Neutralizer in some embodiments has bus-specific circuitry. For instance, Violation _IBUS_Neutralizer hardware generates a Prefetch Abort directly to the MPU core 2610 to prevent any further execution and jump to the appropriate exception state for Prefetch Abort. Hardware for Violation_RDBUS_Neutralizer and Violation_WRBUS_Neutralizer generates a Data Abort directly to the MPU core 2610 to prevent any further execution and causes a jump to the appropriate exception state for Data Abort.

Violation_IBus_Neutralizer has a first mechanism that detects a violation on the IBUS instruction bus (non-allowed address, wrong MReqInfo values). The Physical Checker 2650 of FIG. 9 and TABLE 3 generates neutralizer signals for Security Violation Handler 2760. Security Violation Handler 2760 is coupled to interface MPU2BUS 2665 to neutralize the access and return a response (HRESP= ERR) to the MPU 2610. The error signal ERR response forces the MPU enter a Prefetch Abort exception state directly in the CPSR current program status register, for instance.

In FIGS. 13, 9, and 28B, the Neutralizer has a second mechanism that responds to reception of a Data abort on a read data bus RDBUS or a write data bus WRBUS, such as from Interconnect 3521 of FIG. 18. Security Violation Handler 2760 forces generation of a Prefetch Abort on the instruction bus IBUS_Abort, RDBUS_Abort, or WRBUS_Abort. Some embodiments use a single Next_Instruction_Abort signal for this purpose. The type of abort is chosen as one that is not maskable in the MPU 2610 when received. For example, when a Prefetch Abort exception occurs, it is non-maskable and the MPU 2610 pipeline is flushed, and the instruction that was executing is obliterated, destroyed, or wiped out.

Generally, the particular software application generating the data abort should be terminated and is the particular one currently in the pipeline.

Some embodiments provide and take two successive exceptions. First a data abort is taken. Second, the data abort is followed by a prefetch abort. The prefetch abort is adapted to obliterate, erase or kill the program link (relative address) register in the MPU 2610 register file for the particular software application. Consequently, from a system point of view, the particular software application that caused the violation does not exist anymore because no branch back is possible. No branch back is possible because the relative address needed by a branch back process is absent. The Neutralizer mechanism(s) thus provides a useful virus killer.

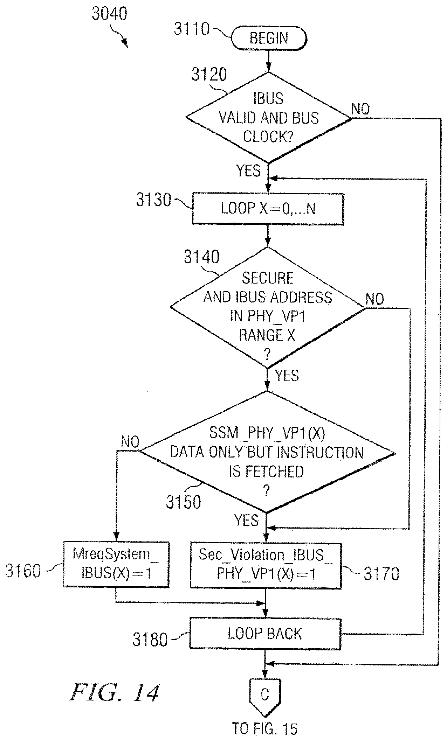

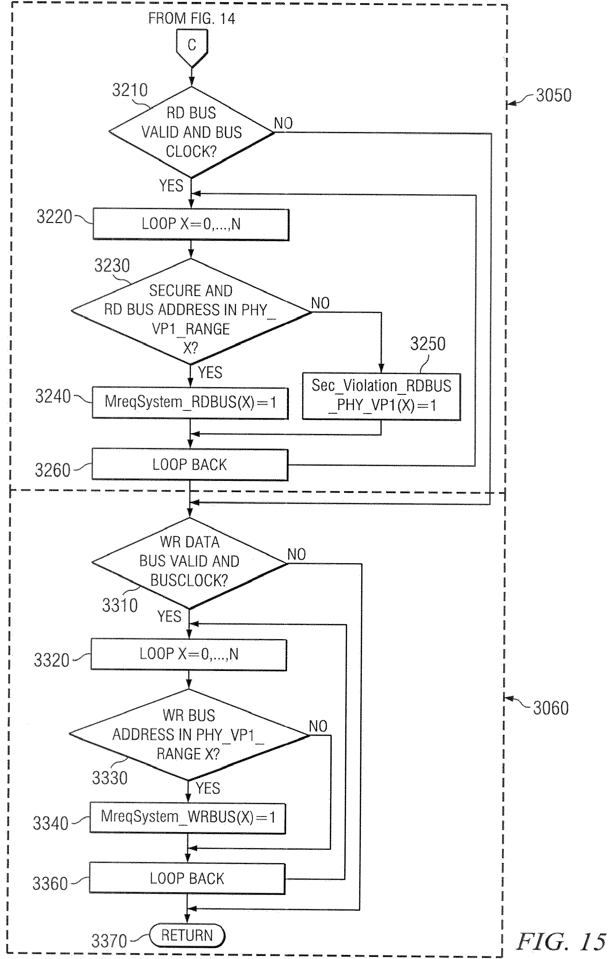

FIGS. 13, 14, 15 illustrate the operations of the hardware in TABLE 3. FIG. 13 provides an overview wherein operations commence at a BEGIN 3010 and proceed to a step 3020 to initialize various bus-specific fields inactive for bus-specific Security Violation SEC_VIOLATION_(bus), and bus-specific classifier MreqSystem(bus). Next a decision step 3030 determines whether the mode is both not the Monitor Mode, and the type of access security is the not the same as the security level of the virtual processor. For example, step 3030 suitably determines whether the access security is Secure mode from the Secure Environment SE when the Modem is Public (non-secure mode) Virtual. **If** Yes at step 3030, operations proceed to check an Instruction bus in step 3040 as detailed in FIG. 14. Upon completion of step 3040, operations proceed to step 3050 and then to step 3060 as detailed in FIG. 15 or all the operations 3040, 3050, 3060 are parallel in the hardware. In step 3050, an access on a Read Data Bus is checked. **In** step 3060, an access on a Write Data Bus is checked. **In** FIGS. 14 and 15, loops occur over indexed portions of physical address space assigned to the Modem. Index-specific MreqSystem flags and Security Violation flags are suitably set. Then operations proceed to a step 3070 to generate bus-specific signals for MreqSystem and Security Violation and Violation Neutralizer that involve OR-ing the corresponding index-specific flags.

If in step 3030, the mode is Monitor Mode or the access is from the Modem into its own space, or otherwise No in step 3030, then operations branch from step 3030 to step 3070 to set the bus-specific signals accordingly. After operations in step 3070, a RETURN 3080 is reached and the hardware goes back to BEGIN 3010 to evaluate the next access.

In FIG. 14, evaluation of an access on an Instruction bus IBUS commences at a BEGIN 3110 and proceeds to a decision step 3120 to a determine whether an IBUS access is occurring as indicated by a Valid line active and Bus Clock active. If so, operations proceed to a step 3130 to start a loop over index x for indexed portions of the physical address space assigned to the Modem. In the loop, a decision step 3140 determines whether both 1) the mode is a Secure mode and 2) the Instruction bus address is in a given range x of physical addresses between the Start and End register values inclusive for range x. If Yes at decision step 3140, then operations go to a step 3150 to determine whether SSM_PHY_VPI(x) register flags that this address range is for Data accesses only, and that an Instruction access is being attempted on the IBUS. If No at step 3150, then the IBUS access is permitted and a step 3160 sets an index-specific classifier MreqSystem_IBUS(x)=1 for that address range x. If Yes at step 3150, the IBUS access is not permitted, and operations go to a step 3170 to set an index-specific Security Violation SEC_VIOLATION_IBUS_PHY_VP1(x) active. After either step 3160 or step 3170 operations at a loop-back step 3180 loop back to step 3130 until the loop is completed for all the address ranges corresponding to the index x values 0,1,...7. After the loop is completed or if no IBUS access was detected (No at step 3120), then operations go to point C and on to FIG. 15.

In FIG. 15, evaluation of an access on a Data Read bus RDBUS has a decision step 3210 to a determine whether an RDBUS access is occurring as indicated by a RDBUS Valid line active and Bus Clock active. If so, operations proceed to a step 3220 to start a loop over index x for indexed portions of the physical address space assigned to the Modem. In the loop, a decision step 3230 determines whether both 1) the mode is a Secure mode and 2) the Data Read bus address is in a given range x of physical addresses between the Start and End register values inclusive for range x. If Yes at decision step 3230, the RDBUS access is a permitted access and operations go to a step 3240 to set an index-specific classifier MreqSystem_RDBUS(x)=1 for that address range x. If No at step 3230, the RDBUS access is not permitted, and operations go to a step 3250 to instead set an index-specific Security Violation SEC_VIOLATION_RDBUS_PHY_VP1(x) active. After either step 3240 or step 3250 operations at a loop-back step 3260 loop back to step 3220 until the loop is completed for all the address ranges corresponding to the index x values 0,1,...7. After the loop is completed or if no RDBUS access was detected (No at step 3210), then operations go on in FIG. 15 to a step 3310.

Further in FIG. 15, evaluation of an access on a Data Write bus WRBUS has a decision step 3310 to a determine whether an WRBUS Data Write access is occurring as indicated by a WRBUS Valid line active and Bus Clock active. If so, operations proceed to a step 3320 to start a loop over index x for indexed portions of the physical address space assigned to the Modem. In the loop, a decision step 3330 determines whether the Data Write bus address is in a given range x of physical addresses between the Start and End register values inclusive for range x. If Yes at decision step 3330, the WRBUS access is a permitted access and operations go to a step 3340 to set an index-specific classifier MreqSystem_WRBUS(x)=1 for that address range x. After step 3340, or if No at step 3330, operations at a loop-back step 3360 loop back to step 3320 until the loop is completed for all the address ranges corresponding to the index x values 0,1,...7. After the loop is completed or if no WRBUS access was detected (No at step 3310), then operations reach a RETURN 3370 in FIG. 15 and proceed to step 3070 of FIG. 13.

The location of the protocol stack (PS) software of FIG. 3 is situated in privileged mode because it is not used by the HLOS of Non-virtual Public category 2420 of FIG. 4. The protocol stack PS is not in Secure mode in this example and thus does not complicate particular security features that may be provided in Secure mode. The ACI upper layer(s) is ported to Secure mode and links with the SE kernel driver communication interface as indicated by FIG. 3 arrows 2820, 2830. Thus, the Modem protocol stack PS is made HLOS agnostic (independent of HLOS) while providing ACI security through a secure command interface.

Protocol stack PS is still in a Public Privilege mode, thus no software architecture changes are needed (direct porting on upgrade). Protocol stack PS is not in Secure mode and thus poses no threat to Secure mode under a security scenario of execution when protocol stack PS resides in Flash/SDRAM memory 1435 of FIG. 2. The protocol stack PS executes when resident in Flash/SDRAM without necessarily using Secure Demand Paging (SDP) 2745 of FIG. 9. HLOS access to protocol stack PS is done through ACI layer2, which is established as an SE secure kernel service as shown in FIG. 5. If a currently-used HLOS is replaced with a new HLOS, the modem driver GSP is simply ported to the new HLOS.

Monitor Mode dynamically creates a second FIQ mode designated Modem FIQ mode of FIG. 5, which is not visible by HLOS. Any Modem-related interrupt is sent as a Secure FIQ and identified in the Monitor Mode. Each time a Modem FIQ occurs, the Monitor Mode changes the FIQ Mode base address to a predetermined address location of the Modem and Pushes/Pops the context. Such processing is referred to herein as the Secure FIQ served in Public mode.

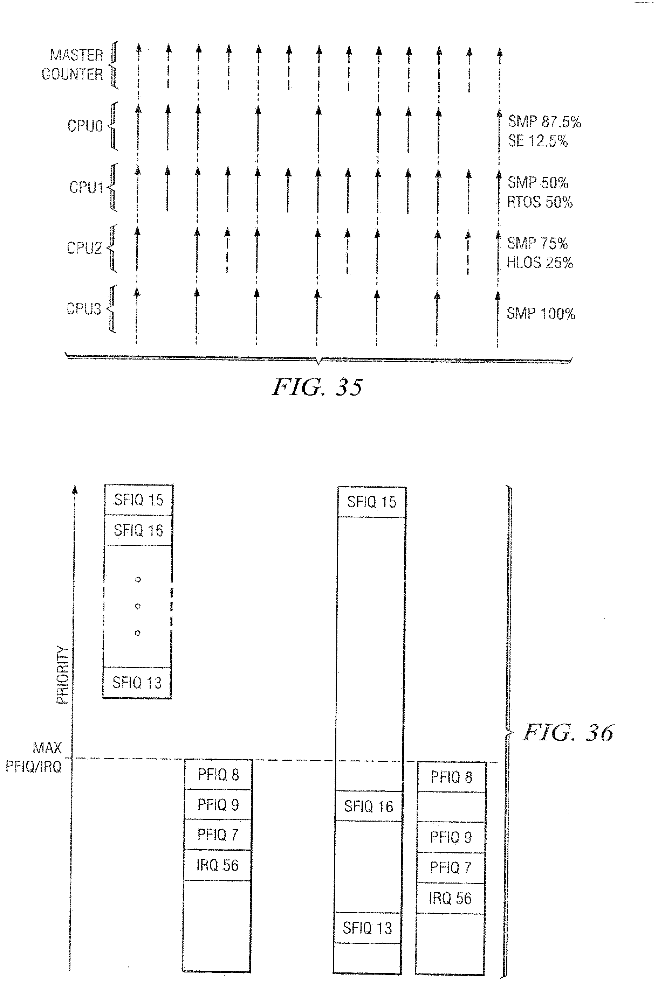

The interrupt model is also HLOS agnostic. Modem FIQ interrupts are physically secure FIQ interrupts with high speed processing, and they are made to be higher priority than HLOS operation. See FIG. 36 also. Modem FIQ evolves in parallel with HLOS context. Modem FIQ takes priority over and coordinates with HLOS IRQ/FIQ. Secure FIQ thus provides atomic sectioning of the processing categories in FIGS. 3-6.

Hardware isolation architecture creates an MreqSystem qualifier and intelligently uses software and hardware security features. Using the MreqSystem qualifier, firewalls are improved to hardware-isolate any Modem resource dynamically. Monitor Mode is enforced, with acceptable impact on interconnect operation.

In regard to the pseudocode example of TABLE 2, the MMU mapping is enforced by the following measures. When in appropriate Privilege mode, the processor core 2610 evolves in a predefined Physical/Virtual memory space. Any change in the mapping is detected when in Privilege mode. The caches are physically indexed. The SSM 2460 architecture detects and responds to any non-permitted address overlap or MMU trashing. An example protocol stack PS is suitably executed in Virtual Public Privilege, and MMU is not be trashed in ordinary operation since MMU is setup by Monitor Mode and is not accessible by Public HLOS.

In order to preserve the integrity of the system operations, accesses to Modem reserved space 2545 of FIG. 7 are permitted only in a suitable mode such as Secure Privilege mode. A Read operation (L1/L2 cacheable) is permissible even if it originates from a Secure mode operation outside the Modem. A Write operation is permissible due to L1/L2 Cache line eviction in Others mode and Write Buffer drain. One example of the Modem reserved memory 2545 operates according to a L1/L2 cache write through policy. On privilege mode exit, a hardware enforced data memory barrier DMB is performed. On privilege mode exit to Modem FIQ mode, the Monitor Mode performs a DMB to resolve any conflict. A Modem shared section 2550 of address space in FIG. 7 is defined for an MMU page table walk. The MMU mapping is programmed by the HLOS Public Kernel or kernel drivers appropriately.

All Modem related FIQ is defined in privilege mode as Secure FIQ, and provides high speed, non-maskable, and HLOS-agnostic properties. The Monitor Mode is updated to encompass a list of the possible Modem FIQ interrupt number(s) (Modem reserved resources) and creates an additional FIQ mode (2nd Public FIQ mode).

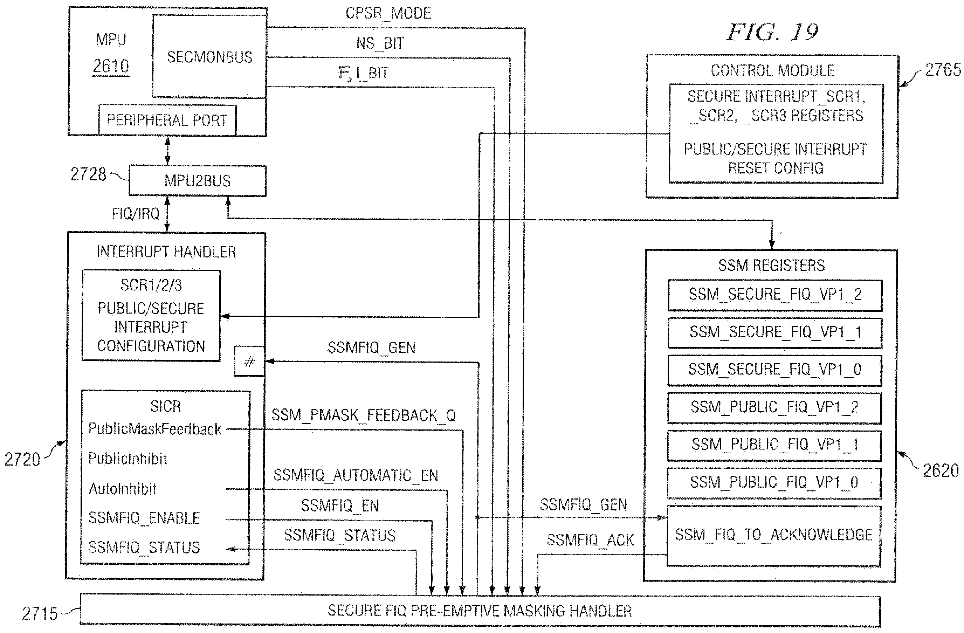

Another aspect creates in Interrupt Handler INTH 2720 of FIG. 9 a Modem interrupt identifier as for the Secure FIQ (three SCR registers), see FIG. 19. In one application processor example, any FIQ is trapped in Monitor mode under a security zone. The Monitor Mode decides to branch appropriately to Public FIQ mode or Secure FIQ mode.

In another aspect, the Monitor Mode creates a new Modem FIQ mode in the modem resource memory. That Modem FIQ is not correlated to other FIQ mode, and Modem FIQ physically evolves in Public FIQ mode. The secure interrupt is hardware controlled, and the CPSR F-bit public masking capability is re-allowed for this specific processing. Thus, the Modem software is fully isolated under Secure mode control. This method confers and ensures HLOS-agnostic properties when servicing Secure FIQ in Public mode.

In FIG. 16, the processor core 2610 is coupled to SSM Virtual Checker 2630 by SECMON bus lines CP15S_NS, and CPSR_MODE, and other SECMON bus lines. The processor core 2610 is further coupled to the SSM Virtual Checker 2630 by Trace Port lines Trace IA, TraceIACtl, TraceDA, TraceDDCtl, and TraceDACtl. The symbolism [] represents a bus line or bit, and the symbolism [:] represents multiple bus lines or bits. Some embodiments apply pipeline-specific trace to each pipeline of a superscalar processor (plural execute pipelines) as TraceIA0 and TraceIA1.

In FIG. 16, the SSM Virtual Checker 2630 is coupled by security violation lines for instruction bus and data bus to the SSM Violation Handler 2760. These lines are designated Sec_Violation_IBUS_VIR_VP1 and Sec_Violation_DBUS_VIR_VP1.

Analogous to FIG. 11, SSM Registers 2620.0-.7 for eight corresponding contexts in virtual space support the Virtual Checker 2630. Eight sets of SSM Registers 2620.0-.7 each include virtual start address SSM_VIRTUAL_VP1_START0, virtual end address SSM_VIRTUAL_VP1_END0, and virtual processor registers SSM_VIRTUAL_PROCESSOR, and SSM_VIRTUAL_VPI. For example, the register SSM_VIRTUAL_VP1 has eight (8) single-bit entries that when set high respectively indicate that a corresponding virtual memory space 0, 1, ..., 7 is data only. The VP1 information VP1_DEBUG_DIS, VP1_NS, and VP1_Active are as discussed above in connection with FIG. 11.

The Virtual Checker 2630 maintains and detects violations of a definition of a Virtual Modem space range that includes on-chip RAM modem, Modem Peripherals and Emulation, WCDMA modem, Flash memory section, SDRAM Reserved section and SDRAM Shared section, MMU TTB Shared section, and related registers.

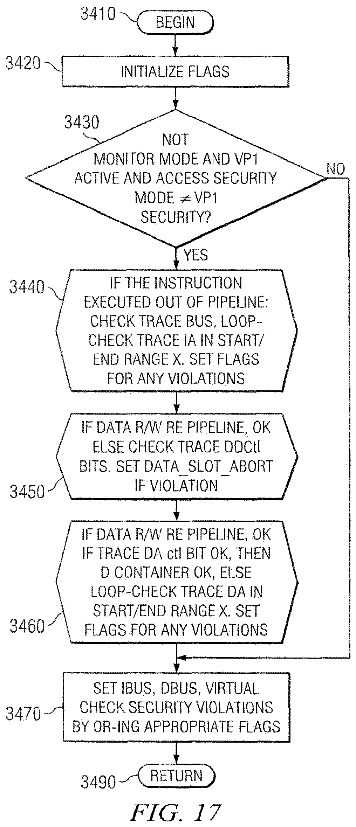

In FIG. 17, an embodiment of Virtual Checker 2630 is described by a flow of operations of the hardware. Operations commence at a BEGIN 3410 and initialize flags in a step 3420. Then a decision step 3430 determines whether both 1) mode is not Monitor Mode, 2) the VP1_Active bit is set for virtual processor operation, and 3) mode of security of the bus access is not the same as the mode of security of the Modem (an example of virtual processor VP1 herein).

If Yes at step 3430, operations proceed to a checking step 3440 that operates if an instruction is involved and is executed out of the MPU 2610 pipeline. Checking step 3440 then checks various Trace bus (e.g., ETM bus) signals for any violations and sets corresponding flags. These include MPU Instruction Not Valid, Branch Phantom Not Valid, and Data Instruction Not Valid in the example. Also, the Trace bus Instruction Address TraceIA is loop-checked for each of several Start/End virtual address ranges x allowed for contexts, and a respective Out of IContainer_x Flag x is set for any violation in a range x.

Further in FIG. 17, operations proceed to a checking step 3450 that checks for permitted Data read or write by the MPU 2610 pipeline. If the read/write operation is not out of the pipeline, the trace bus Trace Data Data Control bits are checked. If the Control bits are not as expected, then a Data_Slot_Abort violation flag is set.

A succeeding checking step 3460 checks for a permitted Data read or write address. If the Data read or write pertains to the MPU 2610 pipeline, it is permitted. If not, the trace bus Trace Data Address Control bit is checked and if not an expected value, then a loop on ranges x checks the Trace Data Address to make sure it lies within one of the permitted virtual address ranges permitted to the Virtual Processor VP1 category 2430 of FIG. 3 and FIG. 6. If not then an Out_of_DContainer_x flag is set.

Operations in FIG. 17 next go to a step 3470 to set Virtual Checker 2630 Security Violations for respective buses IBUS and DBUS by applying logic functions of the appropriate flags. Also, if the decision step 3430 yields No, wherein further virtual checking is unnecessary, then operations go to step 3470 (or Return 3490 in another embodiment).

In step 3470, Instruction related flags are high-active ORed for example, The Out_of_IContainer flags are ANDed (low-active ORed) together so that if the access is directed to a virtual address outside all of the permitted ranges x then the composite of those flags goes active high as output for generating a security violation. Analogously, the Data-related flags are high-active ORed in the example, and the Out_of_DContainer_x flags are ANDed (low-active ORed) together and then ORed with Data_Slot_Abort. When Security Violations step 3470 is completed, the hardware operations reach RETURN 3490 and go back to BEGIN 3410 to evaluate the next access.

In FIG. 18, a system 3500 has DMA subsystems 3510.i. DMA is integrated into the system 3500 in such a way that it can perform target accesses via target firewalls 2545 of FIG. 8 connected on the interconnects 2640. A target is a circuit block targeted or accessed by an initiator. In order to perform such accesses the DMA channels are programmed. Each DMA channel specifies the source location of the Data to be transferred and the destination location of the Data.

Data exchange between the peripheral subsystem and the memory subsystem and general system transactions from memory to memory are handled by the System SDMA. Data exchanges within a DSP subsystem 3520.8 are handled by the DSP DMA 3528.8 and/or by DSP DMA 3510.2. Data exchange to refresh a display is handled in display subsystem 3510.4 using a DISP DMA 3518.4 (numeral omitted). Data exchange to store camera capture is handled using a Camera DMA 3518.3 in camera subsystem 3510.3.

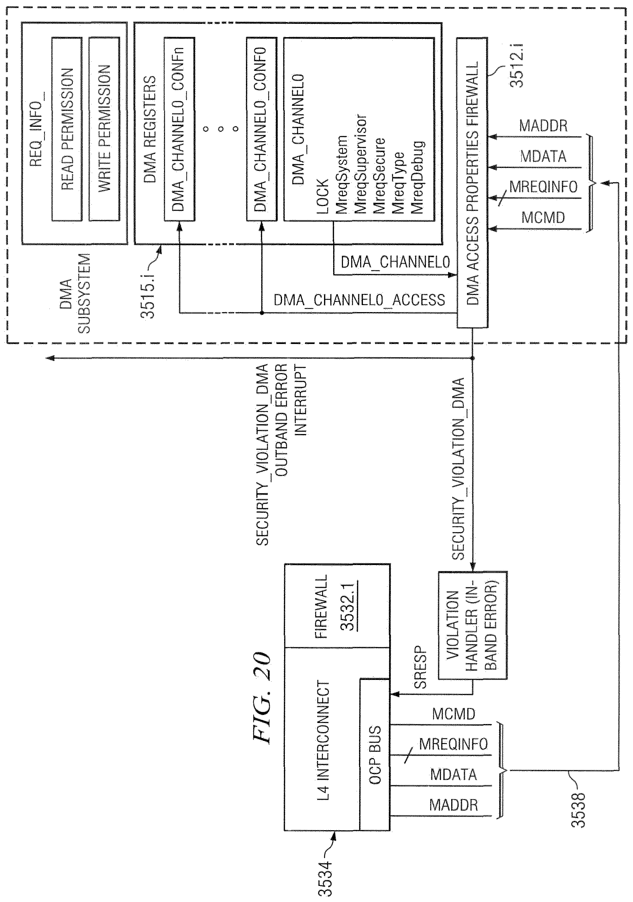

A hardware security architecture including SSM 2460 propagates qualifiers on the interconnect as shown in FIG. 18. The MPU 2610 issues bus transactions and sets some qualifiers on Interconnect 3521. SSM 2460 also provides the MreqSystem qualifier(s). The bus transactions propagate through the L4 Interconnect 3534 and then reach a DMA Access Properties Firewall 3512.1of FIGS. 20-22. Transactions are coupled to a DMA engine 3518.i in each subsystem 3510.i which supplies a subsystem-specific interrupt to the Interrupt Handler 2720. Interrupt Handler 2720 is controlled by the SSM 2460 as shown in FIG. 19.

Firewall protection by firewalls 3522.i is provided for various system blocks 3520.i, such as Flash memory, ROM, on-chip RAM, Video Codec, WCDMA/HSDPA, MAD2D and DSP. Various initiators in the system are given 4-bit identifying codes designated ConnID. Some Initiators and their buses in one example are Processor Core MPU 2610 [RD, WR, INSTR Buses], digital signal processor direct memory access DSP DMA 3510 [RD, WR], system direct memory access SDMA 3510.1 [RD, WR], Universal Serial Bus USB HS, virtual processor PROC_VIRTUAL [RD, WR, INSTR], virtual system direct memory access SDMA_VIRTUAL [RD, WR], display 3510.4 such as LCD, memory management for digital signal processor DSP MMU, camera CAMERA 3510.3 [CAMERA, MMU], and a secure debug access port DAP (FIG. 30).

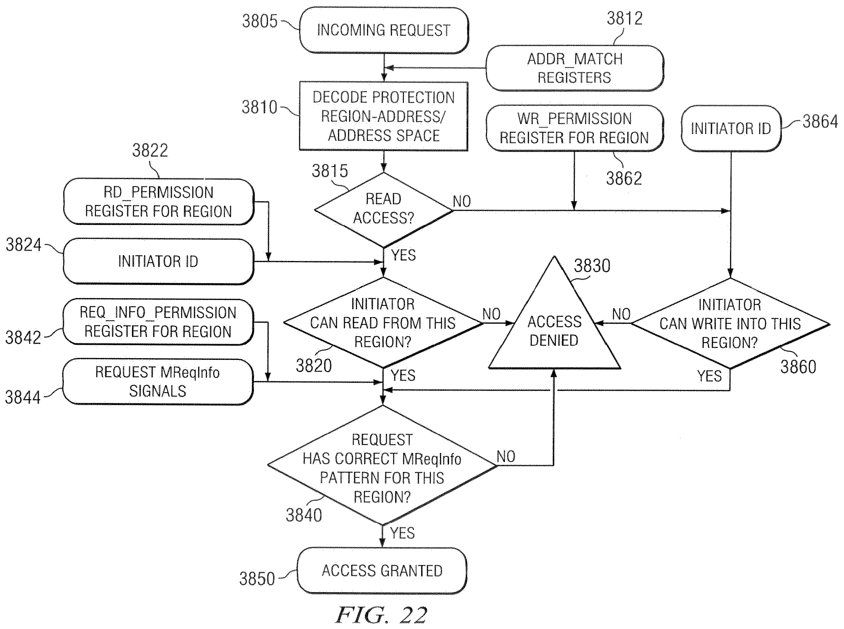

The DMA channels support interconnect qualifiers collectively designated MreqInfo, such as MreqSecure, MreqPrivilege, MreqSystem in order to regulate access to different protected memory spaces. The system of FIG. 22 configures and generates these different access qualifiers in a security robust way and delivers them to hardware firewalls 3512.1, 3512.2, etc. and 3522.1, 3522.2, etc. associated with some or all of the targets. The improved hardware firewalls protect the targets according to different access rights of initiators.

The DMA channels 3515.1, .2, etc. are configurable through the L4 Interconnect 3534 by the MPU 2610. A circuitry example provides a Firewall configuration on a DMA L4 Interconnect interface that restricts different DMA channels according to the configuration previously written to configuration register fields. This Firewall configuration implements hardware security architecture rules in place to allow and restrict usage of the DMA channel qualifiers used in attempted accesses to various targets.

When an attempt to configure access for DMA channels in a disallowed way is detected, in-band errors are sent back to the initiator that made the accesses and out-band errors are generated to the Control Module 2765 and converted into an MPU Interrupt. Some background on security attack detection and neutralization is described in the incorporated TI - 37338 patent.

In FIG. 18, the MPU 2610, Others block, and System DMA (SDMA) 3530.1, 3535.1 each supply or have some or all of the MreqInfo signals MreqSystem, MreqSecure, MreqPrivilege, MreqDebug, MreqType, and other signals for various embodiments, with the signals as described in TABLE 7. L4 Interconnect 3534 supplies the MreqInfo signals to the DMA Firewall 3512.1 and other firewalls 3512.i. Interconnect 3534 is also coupled to Control Module 2765 and cryptographic accelerators and blocks 3540.

**TABLE 7**

| Firewall Qualifier | Definition |
|---|---|
| MReqSystem | 0/1 Non-virtual/virtual transaction |
| MReqPrivilege | 0 User mode access, non-privileged |
| (Or MreqSupervisor) | 1 Supervisor or other non-user mode privileged access |
| MReqSecure | 0/1 Public/Secure transaction |
| MReqDebug | 0/1 Application/Emulaor access |
| MReqType | 0/1 Data/Opcode access |
| Additional Qualifiers for L3 | Interconnect Firewalls 3522.i |
| MReqCacheable | 0/1 Non-cacheable/cacheable data |
| MReqElementSize | Natural data type of the access. 00 Byte, 01 16-bit, 10 32-bit |
| MReqEndianness | 0/1 Bit/Little Endian |
| MReqEndianLock | 0 Endianness can be changed if target mismatch is detected. |
| | 1 Lock transaction endianness on the whole path to target. |
| MReqEndianConvResp | 0 No endian conversion needed on the response 1 Response data is endian-converted before return to initiator |

A signal ConnID is issued onto the various buses by each initiator in the system 3500. The signal ConnID is coded with the 4-bit identifying code pertaining to the initiator originating that ConnID signal. System Memory Interface 3555 in some embodiments also has an adjustment made to ConnID initiator code so that if incoming ConnID = MPU AND MreqSystem = '1', then ConnID = MPU_Virtual. If incoming ConnID = SDMA AND MreqSystem = '1', then ConnID = SDMA_Virtual. In this way the special signal MreqSystem identifies a virtual world for these initiators to protect their real time operation.

The System Memory Interface 3555 in some embodiments provides a HOST 3560 qualifier to represent a Host access (or non-Host modem access) in the System Memory Interface firewall 3552.1 to SRAM 3550. A new ConnID is suitably generated each time the processor core MPU 2610 or system SDMA 3530.1, 3535.1 perform an access in the case when the MreqSystem qualifier is one (1).

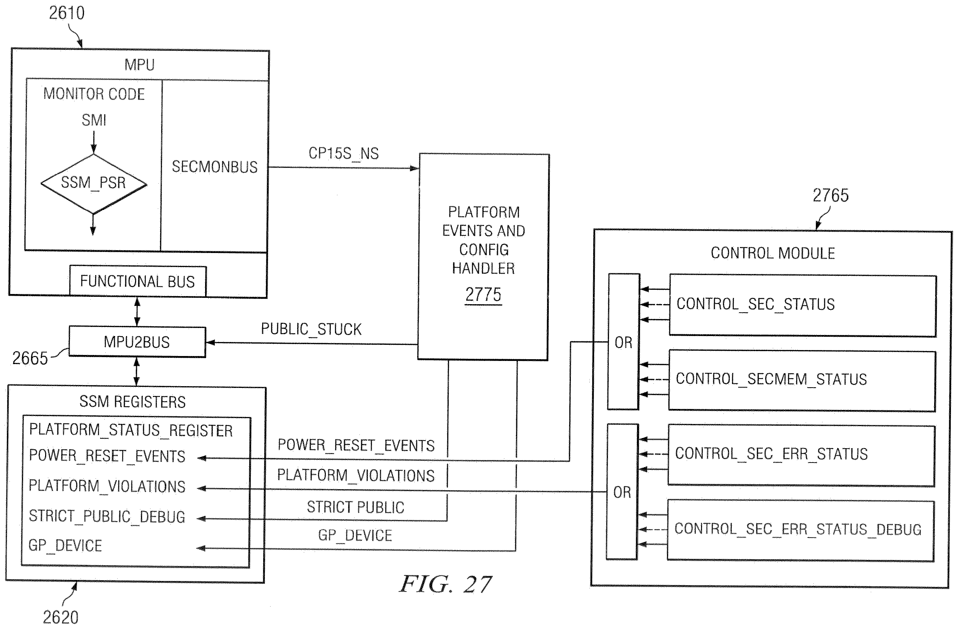

In FIGS. 18 and 9, Control Module 2765 between Interconnect 3534 and DMA Firewall 3512.1 receives the Security Violation signal from DMA Firewall 3512.1. In FIGS. 27 and 28, a Flag pertaining to the Security Violation is activated in Control_Sec_Err_ Status register and is forwarded to SSM Platform _Status_Register of FIGS. 9 and 27. This flag is read on every Monitor Mode switch or otherwise frequently read, or interrupt handler 2720 generates an interrupt each time one of the Flag bits is updated or activated by the hardware.

FIG. 19 depicts an embodiment of a Secure Fast Interrupt Request (SFIQ) Preemptive Masking Handler 2715. When Preemptive Masking Handler 2715 is enabled, it operates to prevent Public FIQ from Public non-privileged and even privileged Public processes from contending, competing, or interfering with the operations of Monitor Mode and other Secure processes. Preemptive Masking Handler 2715 thus further provides hardware support so that Monitor code can operate as a hypervisor and so that the categories of FIG. 4 can be separated from each other in the manner shown in FIG. 3 and FIG. 5, for example.

Suppose an Interrupt request is sent by a target (e.g., 3510.i) to the Interrupt Handler 2720 of FIGS. 18 and 19. The Interrupt Handler 2720 has a global mask enable field in an internal register of Interrupt Handler 2720. If the global mask is not set to mask the particular target interrupt request, the Interrupt Handler 2720 after sorting its different inputs generates an IRQ or FIQ to the MPU 2610. If Interrupts are not masked inside the MPU (by I, F bits for IRQ, FIQ disable in current program status register CPSR), the MPU 2610 traps this interrupt. The trap is performed into a Public or Secure interrupt mode such as IRQ, FIQ or Monitor mode depending on whether the interrupt was received by the MPU 2610 when in Public or Secure mode and whether the IRQ or FIQ are configured to be trapped into the Monitor Mode by the FIQ/IRQ_Trapped_In_Monitor fields of TABLE 8.

Secure Configuration Register SCR1/2/3 registers of FIG. 19 also control the interrupt mapping and Secure/Public interrupt priorities configuration from Control Module 2765 in the Core Power Domain backing up and using and Interrupt Handler 2720 registers SCR1/2/3 in the MPU Power Domain. The applicable interrupt vector (FIG. 29) depends on the configuration and points to correspondingly applicable software code. The applicable software code is then executed.

**TABLE 8**

| SSM CPSR MODE ENFORCEMENT REGISTER FIELDS | |
|---|---|
| EA_Trapped_In_Monitor | Trap External Abort EA in Security Zone SCR. |
| FIQ_Trapped_In_Monitor | Trap Fast Interrupt FIQ, ditto. |
| IRQ_Trapped_In_Monitor | Trap Interrupt IRQ, ditto. |
| MASK_Pub_Secure | Enable Interrupt Masking in Secure mode only |
| SYSTEM_VS_USER | (SU)Enforce SYSTEM VS USER Mode switch. |
| MONITOR_VS_SYSTEM | (MS)Enforce MONITOR vs SYSTEM Mode switch |
| MONITOR_VS_UNDEFINED | (MU)Enforce MONITOR vs UNDEF Mode switch |
| MONITOR_VS_ABORT | (MA)Enforce MONITOR vs ABORT Mode switch |
| MONITOR_VS_USER | (MT)Enforce MONITOR vs USER Mode switch |
| SECURITY_ZONE_CPSR | Ensure Security Zone default properties |
| SECURE_MODE_ENABLE | Set or unset the Secure mode |

IRQ Trapped In Monitor. When this IRQ trap bit is inactive and unless an IRQ is taken in Secure mode, all IRQ are treated as Public by default. When this IRQ trap bit is set active, then each time an IRQ (Public or Secure) is taken, operations jump to Monitor Mode.

FIQ Trapped In Monitor. When this FIQ trap bit is inactive, FIQ are processed by MPU 2610 in FIQ mode. When active, then each time an FIQ (Public or Secure) is taken, a jump to Monitor Mode occurs.

MASK_Pub_Secure. When this masking configuration bit is inactive, masking of interrupts is made possible by the Public or Secure modes, i.e., that masking is permitted to be activated in either the Public or Secure modes. When this bit is set active, masking of interrupts is made possible only by the Secure modes.

In FIG. 19, upon occurrence of an interrupt request, an ITR register in Interrupt Handler 2720 is updated to indicate that an interrupt request has been received, even if the request is not served and whether or not the Interrupt Handler 2720 global mask is set. The MPU 2610 can be prevented from receiving these interrupts by any of a global mask in the Interrupt Handler 2720, interrupt disabling inside MPU 2610 using a core register (e.g. CPSR I, F bits), or disabling the interrupt generation function in a system component (e.g. 3510.i). Firewall out-band errors in FIG. 20 are routed as interrupts from each firewall to the Interrupt Handler 2720 of FIG. 19.

In some embodiments SSM 2640 distinguishes PFIQ generated by the Public Virtual (modem) category 2430 from PFIQ generated by Public Non-virtual category 2420 (using active state of VP1_Active and/or MreqSystem). This is because Modem FIQ are served in the Virtual mode when Modem RTOS is in the Modem FIQ mode (Virtual Public FIQ mode). Otherwise, masking all Public FIQ would undesirably mask Public FIQ from the VP1 modem in some embodiments too. In FIGS. 5 and 19, FIQ Mode 2 refers to hardware support by Preemptive Masking Handler 2715 separating PFIQ generated by Public Non-virtual world (FIQ Mode) from PFIQ generated by Public Virtual modem (FIQ Mode 2).

In some other embodiments, Modem FIQ are interrupt-mapped or tagged as Secure FIQ and not Public FIQ. In embodiments where in a given hardware architecture or policy makes Secure FIQ non-maskable by Public HLOS, then the second type of embodiments that interrupt-map or tag Modem FIQ as Secure FIQ have benefits of that policy.

In FIG. 19, the Control Module 2765 provides Secure Interrupt registers coupled to Interrupt Handler 2720 SCR configuration registers (3 registers because 96 interrupt lines). The Secure Interrupt registers SCR in FIG. 19 flag if any given interrupt is Virtual or not (e.g., Modem or not). In this way, Monitor Mode code acting as a hypervisor switches or transfers execution to any user-requested category or hypervisor-dictated category in FIG. 4, and interrupt servicing is correct. Thereupon, the correct and effective ISR (interrupt service routine) services the Public FIQ from Public HLOS category 2420, or services Modem_FIQ (Secure FIQ when MreqSystem is active to indicate modem operation in category 2430), or services Secure FIQ pertaining to Secure Environment SE 2450, or services FIQ from Virtual Secure category 2440. Compare Monitor Mode pseudo-code example of TABLE 42, which describes cases of hypervisor controlled transitions or switches to various cases of FIQ handling, such as from a mode with no hardware real-time FIQ support to exigent modem real-time hardware interrupt servicing capability.

Turning to Automatic/Manual control of Preemptive Masking Handler 2715, suppose Automatic_EN is high active, meaning Automatic method occurs when the signal is high. SSM_PMASK_FEEDBACK_Q is taken into account in Automatic mode.

When in Automatic method, Public Non-Virtual HLOS can mask only its own FIQ from the Public Non-Virtual category 2420, and HLOS is prevented from masking FIQs from the Secure Environment 2450. Also, Public HLOS is prevented from masking FIQs from the Public Virtual (e.g., modem) category 2430 nor Secure Virtual 2440. The Automatic method operates in a manner transparent to the system and thus no instruction cycles in MPU 2610 are occupied with the process.

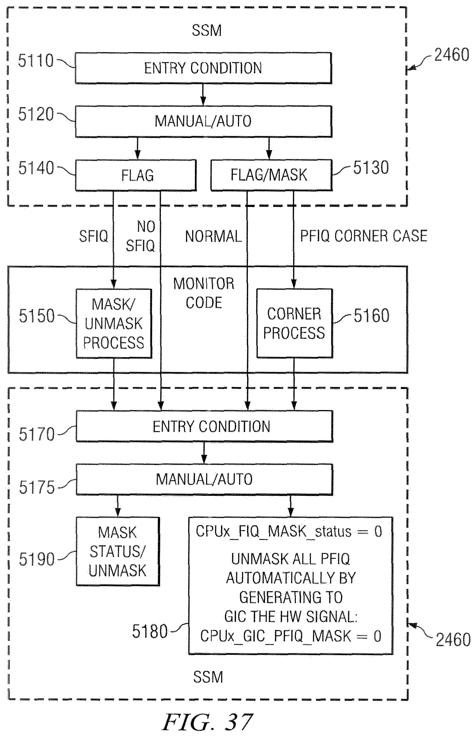

By contrast, the Monitor Mode method does occupy some instruction cycles in the MPU 2610. Assume IRQ_Trapped_In_Monitor is active and also that the virtual processor Modem is running. When in Monitor Mode method (also here called Manual mode), then when a Public HLOS FIQ occurs, the Monitor Mode is entered. Monitor Mode code responds to signal SSMFIQ_Status via Interrupt Handler 2720 of FIG. 19 so that only HLOS FIQ are masked (several lines of Monitor code as in FIG. 37). PublicInhibit in Secure Interrupt Control Register SICR is activated to mask any subsequent HLOS FIQ that might occur. Monitor code also generates a newFIQ agreement NEWFIQAGR in Interrupt Handler 2720 to release the current hardware signal (nFIQ) that just occurred. Monitor code thus acts to nullify the current Public FIQ event and avoids interrupt vectoring and avoids executing any interrupt code. Then Monitor code returns to the originally-interrupted software. The whole operation may occupy on the order of a hundred or more MPU clock cycles. In Manual mode, suppose Preemptive Masking Handler 2715 detects that Public HLOS is attempting to mask all FIQ. Then Preemptive Masking Handler 2715 (transparently to and independently of MPU 2610) sends the request signal SSMFIQ_Status to Interrupt Handler 2720. Interrupt Handler 2720 responds by masking only HLOS FIQ (Public Non-Virtual category FIQ), and no MPU clock cycles are occupied.

In Interrupt Handler 2720, an active high state of SSM_PMASK_FEEDBACK_Q represents a handshake or an acknowledgement to Preemptive Masking Handler 2715 that Public FIQ are indeed masked by Interrupt Handler 2720 in response to the earlier request SSMFIQ_Status. The signal SSM_PMASK_FEEDBACK_Q when inactive tells Preemptive Masking Handler 2715 information about the Interrupt Handler state too. A request to mask Public FIQ can go unfulfilled for a number of clock cycles (PublicInhibit active but SSM_PMASK_FEEDBACK_Q still inactive during sorting) when some interrupts are in the sorting machine of Interrupt Handler 2720.

If the CPSR_Mode is FIQ Mode, Public, then SSMFIQ_Status is set active by Preemptive Masking Handler 2715. In another case, if CPSR_ Mode is Supervisor or System, and NS bit is Public and the IRQ mask I-bit CPSR_I is active, then SSMFIQ_Status is also set active as an enforcement mechanism to mask Public FIQ as well. If a security zone mechanism in MPU 2610 does not disable Public FIQ when in FIQ mode because the configuration of a security zone register (e.g., CP15S) is configured so that Public mode cannot mask FIQ, then Preemptive Masking Handler 2715 activates SSMFIQ_Status to enforce masking of the Public FIQ regardless. In yet another case, if MPU 2610 is in Monitor Mode or any Secure mode, and the SSMFIQ_Status_Global_REG is activated, then SSMFIQ_Status signal is activated or maintained activated if already activated. In this way, the Preemptive Masking Handler 2715 propagates a Public FIQ mask hardware state to Monitor Mode and Secure mode. Otherwise, Public FIQ might get unmasked upon an explicit Public HLOS request. Compare FIG. 5, FIG. 29.

In some typical HLOS, RTOS, and SE kernel software it appears that the IRQ mask and FIQ mask bits of MPU 2610 are toggled in the same way concurrently. A security attack might be underway if these mask bits were not toggled the same way concurrently. Accordingly, such concurrent toggling is enforced in some embodiments of the SSM herein. In other cases, HLOS may manipulate these bits without strategy in a system that might destabilize real-time processes (e.g., modem). SSM hardware linking the I-bit and F-bit hardware-supports the hypervisor by accommodating an RTOS (real-time operating system such as for Modem) and effectively have the MPU 2610 dedicated to RTOS with the assurance that all RTOS and modem interrupts will be real-time when RTOS is running. By hardware linking the I-bit and F-bit, then HLOS will not mask any FIQ, and hypervisor is protected and made safe from a scenario of interference by HLOS with a currently-running RTOS process that has been launched by hypervisor.

In FIG. 19, the Monitor code is coded to inactivate the IRQ_Trap_In_Monitor field in the SCR of Interrupt Handler 2720 of FIG. 19 to turn off the IRQ trap when Public HLOS is switching within the Public Non-virtual mode(s) for swift interrupt operation in category 2420 of FIGS. 4 and 6. Monitor Mode is coded to activate IRQ_Trap_In_Monitor when switching in the Secure world. In this way, the Interrupt Handler 2720 SCR and IRQ_Trap_In_Monitor of TABLE 8 are used to reserve different treatment for IRQ in the Public world relative to the Secure world. As a result, interrupts IRQ pertaining to Secure modes and both Secure FIQ and Public FIQ interrupts are trapped into Monitor Mode.

Boot software is coded to run in Secure Supervisor mode at Boot time to set an FIQ_Trap_In_Monitor bit or field of TABLE 8. SCR register circuitry of Interrupt Handler 2720 is also made so it is configurable to make any interrupt a Secure FIQ. A Secure FIQ means an interrupt that is handled only in a Secure mode. For the present example, one determines according to desired system architecture which interrupt(s) are to be Secure FIQ and boot-configures the SCR to make the thus-determined interrupts Secure FIQ.

The Interrupt Handler 2720 circuitry has interrupt masking circuitry as noted. Boot software is further coded in Secure Supervisor mode to clear MPU 2610 IRQ and FIQ masks to non-masked state for FIQ. Non-maskable Public FIQ means that a Public mode RTOS for a wireless or other modem, for instance, operates freely in real-time under the Monitor Mode hypervisor code. Some embodiments use MreqSystem to make Public FIQ non-maskable qualified by MreqSystem active. In this way, Public mode RTOS operates freely in real time in Public Virtual category 2430, and Public mode HLOS (Public Non-virtual 2420) can mask or unmask Public FIQs without interfering with interrupt operation of Public Virtual category 2430.

A Monitor Mode software handler is responsible to control the MPU 2610 IRQ mask (e.g. CP15S_I) and/or SICR PublicInhibit for masking and unmasking the Public FIQ when needed. The Monitor Mode software handler dispatches each pending FIQ to the Public world or Secure world according to the information provided by the Interrupt Handler 2720. The Monitor Mode software handler thus acts as an efficient intermediary for fast interrupts FIQ.

External Prefetch Abort and External Data Abort exceptions from interface 2665 to MPU 2610 are also trapped into Monitor Mode, such as by activating EA_Trapped_In_Monitor. Boot software operating in Secure Supervisor mode configures an External Abort trap active in MPU 2610 and this Abort trap is correspondingly configured in EA_Trapped_In_Monitor of TABLE 8. External Prefetch Abort and Data Abort are triggered for instructions and data respectively when a Security Violation signal SRESP is generated by an interconnect firewall 3522 (constructed analogous to firewall of FIGS. 20-23 and configured for its position in the system) or when a major memory component error occurs.

The Monitor Mode is configurable to be interruptible when not processing a trapped IRQ, FIQ or External Prefetch Abort/Data Abort. The Monitor Mode is coded to re-enable CPSR bits I, F, EA pertaining to mask/unmask IRQ, mask/unmask FIQ, and mask/unmask External Aborts upon a Software Monitor Interrupt SMI exception. Software code for the Monitor Mode is illustrated in FIG. 29 and discussed elsewhere herein.

In FIG. 19, secure interrupt architecture in one example provides hardware interrupt lines routed to MPU 2610 IRQ/FIQ/SFIQ under control of the Secure_Interrupt_SCR1, _SCR2, _SCR3 register of Control Module 2765 and Interrupt Handler 2720 for Public/Secure Interrupt configuration. When an interrupt line is configured as Secure in the Secure Control register SCR, the interrupt is automatically represented by configuration as a Secure FIQ, or SFIQ. An interrupt can be masked by an appropriate entry in a Maskable Interrupt Register (MIR) in Interrupt Handler 2720. However, when an interrupt line is configured as Secure in the SCR register, the MIR mask, if any, for that interrupt line is overridden and the interrupt is treated as if not masked. A Secure Privileged access can set or reset any bit in the SCR register.

In FIG. 19, configuration of Secure Interrupt Control Register SICR field SSMFIQ_ENABLE (e.g., at Boot time, and when Monitor code activates the virtual processor modem) activates the Preemptive Masking Handler 2715 via a line SSMFIQ_EN. In response, the Preemptive Masking Handler 2715 uses IF conditionals to detect when the Public FIQ needs to be masked and generates a SSMFIQ_Status signal to the Interrupt Handler 2720 that masks Public FIQ. If the Interrupt Handler 2720 does not mask the Public FIQ immediately (some clock latencies might be introduced) a not yet masked Public FIQ can fire and be trapped in the Monitor Mode. To handle the latencies, the Monitor Mode is coded to perform a NEWFIQAGR operation (see TABLE 40) and let the respective Interrupt Handler PublicMaskFeedback SICR bit become active and generate SSM_PMASK_FEEDBACK_Q before switching back to the interrupted code and thereby effectively nullify the Public FIQ occurrence.

Suppose the field IRQ_Trapped_In_Monitor is configured or set active. When a Public FIQ fires and is consequently trapped in the Monitor Mode, the Monitor code may determine that the Public FIQ masking signal SSMFIQ_ Status should be activated. Consequently, the Monitor Mode is coded to set the PublicInhibit bit in the Interrupt Handler 2720 before generating the NEWFIQAGR in order to enter the Public FIQ mode with Public FIQ masked. Concurrently and protectively, when the Public FIQ mode is entered, the Preemptive Masking Handler 2715 automatically activates the SSMFIQ_ Status signal. As long as the SSMFIQ_ Status is activated, the Public FIQ are masked. When the Preemptive Masking Handler 2715 detects that Public FIQ are to be unmasked (Case 1: CPSR I bit reset so IRQ unmasked, or Case 2: CPSR_Mode not in FIQ mode any more), the SSMFIQ_ Status is cleared and SICR PublicInhibit bit is automatically inactivated for software reset and hardware reset. The Public FIQ are then automatically unmasked. See TABLE 29 and Monitor code transitions.

Preemptive Masking Handler 2715 itself further supports Public FIQ masking by circuitry that generates an interrupt SSMFIQ_GEN. This SSMFIQ_GEN interrupt is distinct from the masking flag SSMFIQ_STATUS. The circuitry of Handler 2715 provides two different operational options or processes-- a fully automated process (SICR AutoInhibit active) and a Monitor Mode method (AutoInhibit inactive). The process to use is selectable by establishing and setting or clearing the AutoInhibit field or bit in the Interrupt Handler SICR register such as at Boot time. The embodiment of FIG. 37 can also be compared to that of FIG. 19 and each may be used to supplement the other.

In FIG. 19 in an automated method process embodiment, AutoInhibit when active in the Interrupt Handler 2720 causes a signal SSMFIQ_Automatic_EN to be fed to the Secure FIQ Pre-emptive Masking Handler 2715 and control the interrupt SSMFIQ_GEN. See also TABLES 38, 41, 42 and description hereinabove and elsewhere herein.

A partially underlying process embodiment, designated the Monitor Mode method herein, is active in Preemptive Masking Handler 2715. Handler 2715 uses its IF-conditionals to detect when the Public FIQ should be masked and thereupon generates the SSMFIQ_ Status signal. Then, if an FIQ occurs, the FIQ is trapped in the Monitor Mode. In the Monitor Mode method, the Monitor Mode code is also coded to read the Interrupt Handler SICR register SSMFIQ_Status field to determine that Public FIQ should be masked. If the SSMFIQ_ Status is set, then the Monitor Mode is coded to respond to SSMFIQ_Status being active by disabling the Public FIQ by activating the SICR PublicInhibit and Monitor Mode also performing a NEWFIQAGR operation. This process automatically masks and clears all Public FIQ. The Monitor Mode switches or transitions back to the interrupted code if a PFIQ latency has occurred.

Suppose that the SSM detects that Public FIQ should be unmasked due to an inactivity of all the main IF-conditions. Preemptive Masking Handler 2715 then clears or inactivates SSMFIQ_ Status and generates its own Secure FIQ designated SSMFIQ_GEN at a predetermined Interrupt Handler 2720 input line or numbered input, to force entry to Monitor Mode. The Monitor Mode is coded to thereupon check that SSMFIQ_ Status is cleared and thereupon inactivates or resets the Interrupt Handler SICR PublicInhibit to unmask all Public FIQ. The Monitor Mode then switches back to the code that was interrupted by SSMFIQ_GEN.

In FIG. 19, the SSMFIQ_GEN signal is acknowledged by an SSM register field SSMFIQ_ACK. The Security Violation Handler 2760 of FIGS. 28A/28B and the Platform_Violations register logic and flip-flops of the Platform Status Register in FIGS. 9 and 27 are under control of the Cold reset in order to avoid a racing loop with the Warm CPU reset generated by PRCM 2790 of FIG. 9 when a Security Violation is generated by Security Violation Handler 2760. The register field SSMFIQ_ACK is provided in order to not reset the mask signal SSMFIQ_GEN or SSMFIQ_Status in FIG. 19 when a Security Violation occurs.

The racing loop scenario for Cold Reset and Warm Reset is that when Security Violation Handler 2760 generates a violation, all paths might be asynchronous. Then the MPU 2610 subsystem could receive a glitch instead of a well-formed Warm Reset pulse signal in a circuitry wherein and because the SSM 2460 itself was reset asynchronously relative to the MPU 2610. In such asynchronous architecture, Security Violation Handler 2760 is further improved to avoid a racing loop by providing register with D-flip-flop (DFF) on Cold Reset in the violation logic. In that way, a stable Warm Reset generation is protectively provided.

In FIG. 20, DMA access properties firewall 3512.i has configuration hardware security rules for example as follows.
1) A secure access is required to configure or program a DMA channel 3515.i as Secure, i.e., the access is restricted to be a secure access to make the configuration happen. This can effect a substantive change to the firewall configuration even if the firewall configuration is already set to Secure because configuring or programming the same mode in a given hardware security rule here can involve re-configuring another MreqInfo qualifier (such as MreqType) subject to compliance with the other configuration hardware security rules here. If a Public access attempts to program a DMA channel as Secure, the action is prevented and produces a security violation. Secure accesses are able to program a DMA channel 3515.i as Public or Secure subject to compliance with the other configuration hardware security rules.
2) Setting of any DMA channel 3515.i as Virtual is restricted to occur only when the access to program the DMA channel is made by accesses initiated by the MPU 2610 in Virtual mode. A Non-virtual access is allowed to configure DMA channel as Non-virtual, provided the other configuration hardware security rules are complied with. However, if a Non-virtual access attempts to program a DMA channel as Virtual, the action is prevented and a security violation is issued.
3) Setting of any DMA channel 3515.i as Public Privilege is restricted to occur only when the access to program the DMA channel is made by Public Privilege, Secure User or Secure Privilege accesses to an address of the channel register DMA_CHANNELi to be programmed. Setting of any DMA channel as Secure Privilege is also restricted to occur only when the access to program the DMA channel is made by Secure Privilege access. Analogously, a Public User access is allowed to configure DMA channel as Public User, subject to compliance with the other configuration hardware security rules. However, if a Public User access attempts to program a DMA channel as Public Privilege, the action is prevented and a security violation is issued. A Secure User access is allowed to configure a DMA channel as Secure User. However, if a Secure User access attempts to program a DMA channel as Secure Privilege, the action is prevented and a security violation is issued. On the other hand, Privilege accesses are able to program a DMA channel as User or Privilege without restriction in their own Public or Secure mode, subject to compliance with the other configuration hardware security rules.

Hardware security rules are applied as follows. When a channel rights configuration for DMA channel 3515.i is successfully made according to the configuration hardware security rules implemented in the hardware (e.g., see TABLE 10), the MreqInfo TABLE 7 qualifiers of the accesses that made that configuration are recorded or entered and thereby establish the channel rights in the channel rights register for regular (non-configuration) run-time accesses to DMA subsystem 3510.i (source, destination). Then operation of the DMA subsystem 3510.i is started and uses these MreqInfo qualifiers configured into the channel rights register DMA_CHANNELi 3515.i for firewall evaluation of a regular transaction issued on the interconnect.

In FIG. 20, the DMA registers 3515.i include eight registers DMA_CHANNELi_INT[] that temporarily or internally hold the DMA channel i attempted configuration. Index i is replaced by a digit 0, 1, ...7 in the register name for an eight-channel example. Also, a further eight registers DMA_CHANNELi hold the actual current DMA channel rights for the respective channel indexed i, where index i is replaced by a digit 0, 1, ...7 in the register name. Each DMA_CHANNELi register has bits/fields for Lock, MreqSystem, MreqPrivilege, MreqSecure, and any other MreqInfo bits/fields appropriate to administer the DMA channel indexed i.

The Lock bit, if set, locks the DMA_CHANNELi register to which it pertains. The various Mreq-prefixed bits MreqSystem, MreqPrivilege, MreqSecure, and so forth, in the DMA_CHANNELi register are issued to the DMA Access Properties Firewall 3512.i on occurrence of an attempted regular (non-configuration) DMA transaction via the corresponding DMA channel from Interconnect 3534. The attempted DMA transaction is represented by signals on lines in FIG. 20 for memory command MCMD for Read or Write (R/W), memory request information MReqInfo, memory data MDATA, and memory address MADDR. In FIG. 20, the interconnect 3534 has a bus that supplies those memory-related signals.

A security violation is recognized by the Firewall 3512.i upon an attempted configuration access wherein the MReqInfo supplied from Interconnect 3534 is non-compliant or inconsistent with the configuration hardware security rules hereinabove for a given attempted configuration access and implemented in the firewall 3512.i to which the attempted configuration access is made. Then the DMA Access Properties Firewall 3512.i issues an active signal on a line SECURITY_VIOLATION_DMA to a Violation Handler in FIG. 20 for in-band error that in turn supplies a Security System Response signal SRESP to the Interconnect 3534. In this way, the hardware protection by the firewall 3512.i over its own configuration is achieved for configuration accesses. If the attempted configuration access is compliant with the configuration hardware security rules hereinabove, then a grant signal called DMA_CHANNELi_ACCESS is activated in FIG. 20 and the configuration process is completed.

TABLE 11 shows an example of Allowed Access Modes to a DMA Firewall. The heading Current Mode refers to lowest level of permission established by configuration in the channel rights register DMA_CHANNELi of FIG. 20, which is required to access a target. That level of permission is expressed in terms of a selected plurality of Mreq qualifiers, which are MreqSecure, MreqSystem, and MreqPrivilege in this example. Security Hierarchy designates each Current Mode possibility by a letter V for Virtual and N for Non-virtual, and by a numeral wherein 3 is a low, more-accessible level and 0 is a high, less-accessible level.

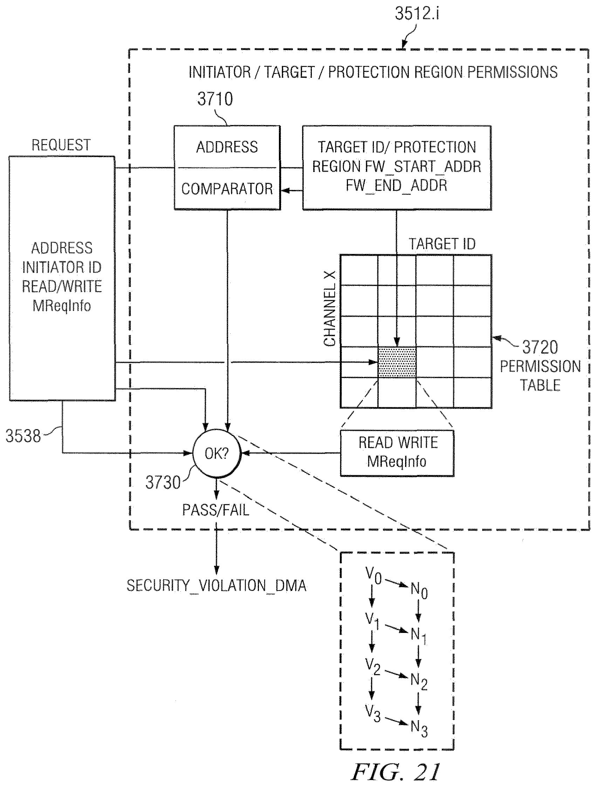

In FIG. 21, an example of a Security Hierarchy is visually depicted as two columns N and V. Any lower-numbered Non-virtual N mode Initiator can access any equal or higher-numbered N mode (Current Mode of Target), and any lower-numbered Virtual V mode Initiator can access any equal or higher-numbered V mode (Current Mode of Target). Any Virtual mode Initiator having a given number can access a Non-virtual N mode having the same number or higher (Current Mode of Target). Any Initiator mode that attempts to access, but is not allowed to access, the Current Mode of TABLE 11 generates X*Secure_Error, Y*System_Error and Z*Supervisor_Error.

**TABLE 11**

| DMA FIREWALL ACCESS MODES PERMISSION TABLE EXAMPLE | | |
|---|---|---|
| Current Mode DMA_CHANNELi | Current Mode Signifiers | Allowed Initiator Access Modes (X=MreqSecure, Y=MreqSystem, Z=MreqPrivilege) |
| Public Non-Virtual User | N3 (000) | All modes can access N3. |
| Public Non-Virtual Privilege | N2 (001) | (0,0,1);(1,0,1); (1,1,1); (0,1,1) (1,1,0); (1,0,0) |
| Secure Non-Virtual User | N1 (100) | (1,0,1); (1,0,0); (1,1,1); (1,1,0) |
| Secure Non-Virtual Privilege | N0 (101) | (1,0,1); (1,1,1) |
| Public Virtual User | V3 (010) | (0,1,0); (0,1,1); (1,1,0); (1,1,1) |
| Public Virtual Privilege | V2 (011) | (0,1,1); (1,1,0) ; (1,1,1) |
| Secure Virtual User | V1 (110) | (1,1,1); (1,1,0) |
| Secure Virtual Privilege | V0 (111) | (1,1,1) |

The various categories running on MPU 2610 act as Initiators. Other system components can be Initiators. For instance, Display Subsystem 3510.4 of FIG. 18 can act as another Initiator and handle even secure transactions with secure targets (such as on-chip RAM frame buffer or DDR SDRAM).

The Display Subsystem registers 3515.4 are configured to be accessible only by Secure accesses using interconnect 3534 protection groups. The Display subsystem 3510.4 is used integrally inside the Secure mode for securing display events such as banking display when needed. When configured as Secure, the Display subsystem does not need the MPU 2610 to be in Secure mode to receive or transmit Secure transactions.

For Secure transaction configuration, the Display Subsystem DMA 3518.4 is configured to full Secure state by setting a DISP_Control Secure register bit field. This bit field is only accessible by the MPU 2610 in Secure mode of the MPU to access the DISP_Control register field to set/reset it. Once configured, all transactions issued by the Display subsystem 3510.4 are tagged as Secure (MreqSecure active). When the Secure bit has been set, the MPU 2610 software in Secure mode is responsible for checking the Display Subsystem configuration. The video layers are disabled by software operating on MPU 2610 in Secure mode of MPU 2610. A secure Camera DMA 3510.3 transaction is configured for Secure or Non-secure operation in a way analogous to that described for the Display subsystem 3510.4.

**TABLE 14**

| INTERFACE 3555 SECURITY CONTROL REGISTER FIELDS | |
|---|---|
| Register Field Name | Function |
| RotCtxt<#>Lock (# for each context) | Inactive: Any transaction allowed to program the context |
| | Active: Only Secure transaction allowed to program the context |
| ArbitrationRegsLock | Inactive: Any transaction allowed to program the arbitration |
| | Active: Only Secure transaction allowed to program the arbitration |
| RegionlRegsLock | When this bit is active, the region 1 is restricted to secure access only and do not depend anymore on the state of the FirewallLock field |
| SoftResetLock | When this bit is active, the interface 3555 component soft reset is triggered only by a secure access. |
| ErrorRegsLock | When this bit is active, ERR_TYPE and ERR_ADDR registers in interface 3555 are read and clear only by Secure access. |
| FirewallLock | Once set to active, the firewalls registers are programmable only with Secure accesses. |
| SecurityControlRegLock | When this field is set to active, only a Secure access is effective to change its state. |

FIG. 21 shows a Target Firewall protection structure and process.

Target Firewall 3512.i has a comparator 3710 that first checks whether the address MADDR of the access on bus 3538 matches with a defined firewall permitted Start_Addr/End_Addr address range fields in channel rights register DMA_CHANNELi_ADDR.

In FIG. 21, if the address MADDR of the access is within the range configured for the Target Firewall 3512.i, then the access qualifiers asserted on the MreqInfo lines of bus 3538 are compared using another comparator 3730 with the Target Firewall permissions table 3720 configuration for them. MCMD has four states for example: Read only = Read access, Write only = Write access, No access = IDLE, All Access = Read/Write access.

The associated decoder circuit is of such as type as would be used for address decoding but fed instead with the MreqInfo bits, MCMD, and ConnID bits. Each individual register bit from the Permission register is active/inactive to represent permission/no-permission for a particular combination of MreqInfo bits, MCMD read or write access, and particular Initiator represented by a particular combination of ConnID bits. When a particular combination of these bits is fed to the associated decoder circuit, the Permission register is muxed out and coupled to a Permission output line that delivers the appropriate particular permission bit in the Permission register representing whether the attempted access is permitted or not.

If the access qualifiers and the firewall permissions compare successfully at comparator 3730, then the access is allowed to proceed through the Firewall 3512.i to the subsystem 3510.i that Firewall 3512.i protects. Otherwise, a Security_Violation_DMA signal is generated in case the subsystem 3510.i was addressed by the attempted access and a FAIL was generated by comparator 3730.

In FIG. 22, a process of operation is shown for a firewall such as 3512, 3522, 3532, or 3552 of FIG. 18. Operations commence with an Incoming Request 3805. In a step 3810, an asserted access address MADDR is decoded and compared to determine whether the access is within a permitted address range for a target in the protection region. A succeeding decision step 3815 determines whether MCMD indicates a read access or write access is attempted. If a read access (Yes), operations go to a decision step 3820 to determine an Initiator ID 3824 (ConnID) of the initiator has permission from a register RD_Permission 3822 (rd) for the region to indeed read from this region. If not, then operations branch from step 3820 to a step 3830 where Access is denied.

If Yes at step 3820, then operations proceed to a further decision step 3840 to determine by comparison with contents of a firewall register Req_Info_Permission 3842 (subfield attr, compare register DMA_CHANNELi of FIG. 20) whether the request itself (the attempted access) has the correct Mreq qualifiers, collectively called MreqInfo, to permit access to the region or target (compare to element 3730 of FIG. 21). If not at step 3840 (Fail), then operations branch to step 3830 where Access is denied. If Yes (Pass) at step 3840, then operations proceed to a step 3850 where Access is granted.

If a write access is indicated by MCMD at decision step 3815, operations go from step 3815 (No) to a decision step 3860 to determine the Initiator ID 3864 (or 3824) of the initiator has permission from a register WR_Permission 3862 (subfield wr) for the region to indeed write to this region. If No at step 3860, then operations branch to step 3830 where Access is denied. If Yes at step 3860, then operations proceed to the further decision step 3840 to determine whether the request has the correct Mreq qualifiers. If No at step 3840, then operations branch to step 3830 where Access is denied. If Yes at step 3840, then operations proceed to step 3850 where Access is granted.

Notice that the configuration of each firewall is a special case in a uniformly-applied general plan of configurable firewall hardware of FIGS. 20-23 for any particular system and product of FIG. 18, FIG. 2 and FIG. 1.

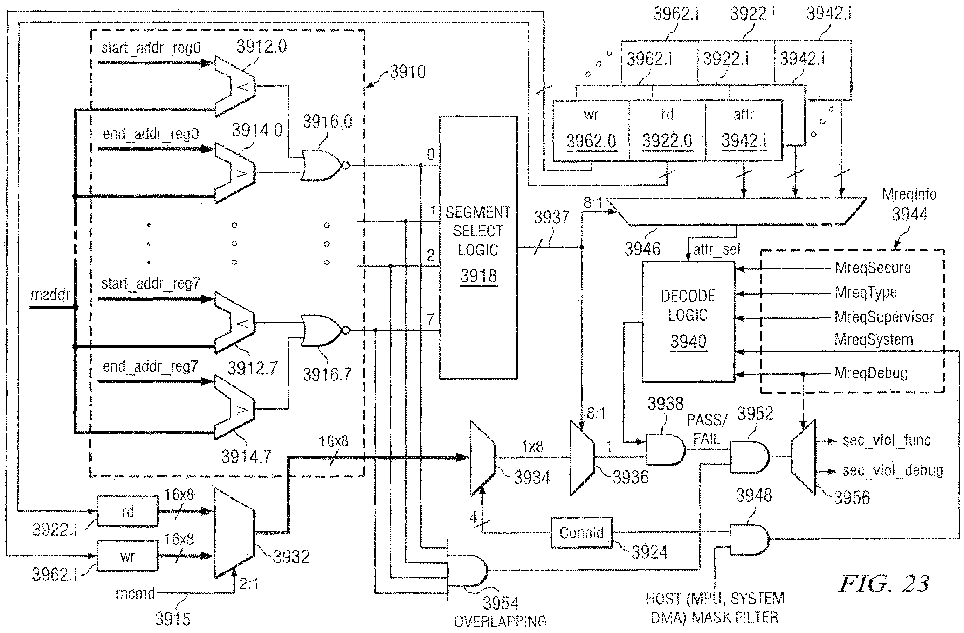

In FIG. 23, the MreqInfo decoder accesses all the Protection Groups together. A given access permission from each group is fed to mux circuitry 3936, 3946. The mux circuitry 3936, 3946 has a selector control fed with a signal corresponding to the subsystem or segment i (e.g., 3510.i) to which access is attempted. The output of the mux represents access permission or denial of access.

As used herein, "in-band errors" refer to errors that are embedded in a response transaction to an initiator. A firewall violation signal for out-band error interrupt, activate either Monitor Mode code and/or SSM 2460, and thereupon commence diagnostics, recovery of regular system operation, error reporting, and/or countermeasures as appropriate against the offending code. The MPU responds to in-band errors to kill the applicable process thread.

An in-band error due to a Security violation can come from any of the firewalls due to an MPU Read or Write transaction or an instruction transaction as applicable to the firewall. When a posted write fails, an Out-of-Band error is generated. Out-of-Band errors are suitably generated by various DMA firewalls and Interconnect firewalls and are flagged in the Control Module 2765 and reported in the Platform_Violation field of the SSM Platform_Status Register (PSR) in registers 2620 of FIG. 9B.

TABLE 13 describes various error-reporting registers.

**TABLE 13**

| ERROR REPORTING REGISTERS | |
|---|---|
| Register Type | Register Description |
| Initiator | Out-Of-Band error reporting of debug errors |
| | Out-Of-Band error reporting of functional errors |
| | Error Status |
| | Value of Bus Memory-error signal |
| Interface | Out-of-Band error reporting of debug errors |
| | Out-Of-Band error reporting of functional errors |
| | Error Status |
| | Value of Bus Memory-error signal |
| | MReqInfo bits of the request that causes the error |
| | Multiple errors detected |
| | Indicates whether a security violation was a primary or a secondary error (Debug errors) |
| Register | Initiator Request Errors Codes: |
| | No Errors |
| | Address hole error |
| | Security violation |
| | ConnID of request causing the error |
| | Command that causes the error |

In FIG. 23, an address compare section 3910 compares the address MADDR of the attempted access with various Start/End addresses configured for the firewall. If address MADDR is lower/higher than the respective Start address start_addr_reg<i> for an address segment for target i = 0, 1,...n (n=7 in this example), then each subtractor 3912.i goes high/low at a first input of its respective NOR-gate 3916.i. If address MADDR is higher/lower than the End address end_addr_reg<i> for address segment for context i, then each subtractor 3914.i goes high/low at a second input of its respective NOR-gate 3916.i. The output of each NOR-gate 3916.i goes high or low depending on whether the address MADDR is inside or outside the range defined by the Start address and End address for that segment i. The outputs, n in number, of the NOR-gates 3916 are fed to a Segment Selector Logic 3918 that produces selector signals indicative the segment i or subsystem i that the attempted access is addressing. In the meantime, the signal MCMD is fed on a line 3915 to act as a Read/Write selector signal representing a type of request by the Initiator attempting access.

In FIG. 23 and FIG. 20, the Permission register(s) (e.g., DMA_CHANNELi of FIG. 20, and 3720 of FIG. 21) for the firewall are configured by writing register-wide data to the Permission registers. The configuration process is compliant with configuration hardware security rules described hereinabove for FIG. 20 and TABLE 10. The Permission register fields in FIG. 23 (compare registers of FIG. 20) include read permissions rd 3922.i, attributes attr 3942.i, and write permissions wr 3962.i. In FIG. 23 drawing numerals, the trailing digits are selected to facilitate comparison with FIG. 22.

In FIG. 23, depending on whether signal MCMD on a line 3915 defines a Read or a Write, a 2:1 mux 3932 responsively delivers read permissions from eight 16-bit register fields rd 3922.i or from eight 16-bit register fields wr 3962.i. The 16x8 output of mux 3932 is 16:1 muxed by a Mux 3934 based on Initiator's four-bit ConnID 3924. The resulting 8-bit output of Mux 3934 gives permission bits for all of the illustrated eight subsystems i. The eight-bit output of Mux 3934 is then is 8:1 muxed by a Mux 3936 to find the addressed target i. Mux 3936 has selector controls driven by output lines 3937 from Segment Select Logic 3918 that is responsive to MADDR via block 3910. Mux 3936 supplies a one-bit output signal representing whether the initiator ConnID in fact has permission to access address segment i, or target i, using the Read or Write type of access defined by signal MCMD.

Permission Decode logic 3940 generates an intermediate clearance or permission signal to a first input of an AND-gate 3938. Mux 3936 has its output coupled to a second input of the AND-gate 3938.

Permission Decode logic 3940 has a number m (five here) MreqInfo inputs 3944 from FIG. 20. The MreqInfo inputs 3944 together have one out of 2-to-the-number-m (e.g., 32) possible binary logic states or permutations. A 32-bit signal attr-sel has respective permission bits for each of the 32 possible logic states of 5-wide MreqInfo in this example. The particular permutation or state of the five MreqInfo inputs is collectively used by the Permission Decode logic 3940 as a selector signal to 32:1 mux-select (in effect 3940 is a mux) a single bit selected from the 32-bit attr-sel from a Mux 3946. The resulting single permission bit provides the intermediate permission signal from logic 3940 signifying that the Initiator-asserted MreqInfo is acceptable or not. Mux 3946 has eight 32-bit inputs from the eight corresponding attribute fields attr 3942.i of the eight respective segment/target-specific Permission registers. Each attribute field (attr) represents or includes a Current Mode Signifier of TABLE 11 applicable to a particular firewall target, for example. Mux 3946 is an 8x32 : 1x32 mux that has its selector control lines coupled to the output lines 3937 of Segment Selector Logic 3918 that identifies the segment or target to which the Initiator access applies.

AND-gate 3938 supplies an output active-high when both the intermediate MreqInfo permission signal is active from Permission Decode logic 3940 and the Read permission/Write permission output from Mux 3936 is active. The output from Mux 3936 to indicates that the initiator identified by ConnID is permitted to make the type (Read or Write) of access being attempted. The output of AND-gate 3938 is like the Pass/Fail output from Fig. 22.

A logic circuit 3948 is fed with ConnID as a system input and with an MPU 2610 signal indicating an MPU access. Logic circuit 3948 in some embodiments acts as a mask filter or comparator to produce one or more MreqSystem signal(s) active when a particular ConnID indicative of a Modem DSP or System DMA, for instance, is making the access, and to produce the MreqSystem signal inactive when the MPU 2610 is making the access. SSM 2460 in another embodiment, as in FIG. 7, generates the MreqSystem signal for decode logic 3940 such as when a virtual processor (e.g., virtualized modem) is active (VP1_Active).

An AND-gate 3952 is fed at a first input with the permission output of the AND-gate 3938. AND-gate 3952 is fed at a second input with the output of an Overlap Logic circuit 3954 which represents whether undesirable overlapping of defined address segments is absent or not. Overlap Logic circuit 3954 has n-number of inputs coupled to the outputs of the NOR-gates 3916.i for the various address segments i. If two or more of the outputs of the NOR-gates 3916.i are active concurrently, then the output of the logic 3954 is made active. In this way, the hardware monitors the Start/End addresses of the segments so that the definitions of the separate address segments are non-overlapping and do not generate an ambiguous multiple hit in different segments i by a given attempted access.

If such overlapping is present, or if AND-gate 3938 has permission output inactive indicating that access permission is denied, then the AND-gate 3952 supplies an active security violation output to a 1:2 demux 3956. Classifier MreqDebug drives the selector control of demux 3956. Suppose the output of logic 3952 is active, indicating a security violation. If classifier MreqDebug is active for Debug access, then Demux 3956 supplies a debug-based Security Violation output signal Sec_Viol_Debug active. Otherwise, if classifier MreqDebug is inactive for Debug access, thus indicating Functional access, then Demux 3956 supplies another Security Violation output signal Sec_Viol_Func active instead.

In FIG. 24 and TABLE 17, Read and Write accesses occurring to each word in the Secure Privilege mode (SPM) Stack memory space are checked using a dedicated, dynamic firewall DFW 4010 having properties that change on the fly according to the access occurring. This dynamic hardware firewall 4010 detects a buffer overflow event attempting to overwrite stack buffers and/or overwrite a function return pointer before a stack pop or read by the MPU 2610. Firewall 4010 is activated when Secure Privilege Mode Stack Integrity Checker SPMSIC_EN field is set active in a SSM_ Firewall_Controller register 4020 in Control Module 2765.

In FIG. 24, an SPM Stack firewall 4010 embodiment uses a hardware matrix 4015 that has a matrix of bits to track each read and write to any given word in the SPM Stack. In one embodiment, DFW_Matrix (L_Lines, W_Words) has a number L of memory lines (each line having 256 bits) that are containable in the memory reserved stack area for the Secure Privilege mode. DFW_Matrix 4015 is used to flag a change to any of a number W of 32-bit words in each memory line of the memory reserved stack area.

In FIG. 24, and associated with the DFW Matrix 4015, is an MPU bus write access decoder 4016 also in firewall 4010. Decoder 4016 decodes from the address sent and burst mode a corresponding word (B above) on an eight-word memory line designated Write_Matrix_Hit[:] in the DFW_Matrix 4015.

For bus Reads, a MPU bus read access decoder 4018 is provided in the SPM Stack firewall 4010, and complements the MPU bus write access decoder 4016 just described.

A Secure Privilege Mode Stack Integrity Checker SPMSIC firewall 4010 is shown in FIG. 24. A Security Violation signal that is specific for SPM_Stack is output if an attempt to overwrite a given word in the SPM Stack has occurred.

Further in FIG. 24, a Monitor Stack Firewall 4030 checks that no write access physically happens to the Monitor Stack if the MPU 2610 is not in Monitor Mode (CPSR_Mode unequal to Monitor). The Monitor Stack is a reserved memory space situated in an upper portion of the SPM Stack when End_SPM_Stack is used for End address. Monitor Stack is otherwise situated in memory space when End_Monitor_Stack is used for End address for firewall 4030.

Monitor Stack Firewall 4030 protects the integrity of data in the Monitor Stack from write access) by any CPSR mode of MPU 2610 other than Monitor Mode. Enabling both firewalls 4010 and 4030 from Firewall_Controller register 4020 provides a dual enforcement configuration activated by register fields/bits SPMSIC_EN and MONITOR_STACK_EN. A Security Violation signal specific to occurrence of an attempted non-Monitor write access threatening the Monitor Stack is output by firewall 4030 to Security Violation Handler 2760.

In FIG. 24, FIG. 25A/25B, and FIG. 26, the SSM_Firewall_Controller Register 4020 provides various fields or bits of information to selectively enable SSM protections as listed in TABLE 19. Description pertains when the field or bit is active.

**TABLE 19**

| SSM FIREWALL CONTROL REGISTER FIELDS | |
|---|---|
| Field | Function |
| SSM_FC_REGISTER_LOCK CPSR_ENFORCEMENT_EN SSM | Lock all fields of Firewall Controller (FC) register locks the SSM_CPSR_Mode_Enforcement register and activates the checks of CPSR transition 2755 in FIGS. 9, 10A/10B according to SSM_CPSR_Mode_Enforcement register configuration. |
| DC_ENFORCEMENT_EN SSM | checks that L1/L2 Data cache (DC) is activated in the Secure World (Enforcement applies only when security zone locking SZ_LOCKING is ACTIVE.) |
| IC ENFORCEMENT_EN SSM | checks that L1/L2 Instruction cache (IC) is activated in the Secure World (Enforcement applies when SZ_LOCKING is Active.) |
| MMU_ENFORCEMENT_EN SSM | checks that MMU is activated in the Secure World (Enforcement applies when SZ_LOCKING is Active.) |
| SPMSIC_EN SPM Stack Firewall 4010 in FIG. 24 | checks the Secure Privilege Mode Stack against buffer overflow |
| MONITOR_DRW_EN | Monitor Mode Data Firewall 4150 in FIG. 25B checks that Monitor code only performs Data Write transfer in allowed memory range |
| MONITOR_STACK_EN | Monitor Stack Firewall 4030 in FIG. 24 checks that Monitor Mode Stacks are not trashed by write accesses from others CPSR_Mode. When Active this register locks the Start_Monitor_Stack and End_Monitor_Stack registers. |
| MONITOR_DTRACE_EN | Trace Bus Firewall 4860 in FIG. 31A starts the data Trace checking of the Monitor code and locks the Start_Monitor_Stack_Trace, End_Monitor_Stack_Trace, Start_Monitor_Periph_Trace, and End_Monitor_Periph_Trace |
| MONITOR_ITRACE_EN | Trace Bus Firewall 4830 in FIG. 31B starts the instruction Trace checking of the Monitor code and locks the Start_Monitor_Code_Trace and End_Monitor_Code_Trace |
| SPM_STACK_EN | Instruction Firewall 4110 in FIG. 25A checks that instructions are not executed in the Secure Privilege Mode Stack and locks the Start_SPM_Stack and End_SPM_Stack registers |
| STACKEDRAM_EN | Instruction Firewall 4110 in FIG. 25A allows the Secure mode to fetch code in SDRAM allowed memory range and locks the Start_StackedRAM and End_StackedRAM registers |
| SECRAM_EN | Instruction Firewall 4110 in FIG. 25A allows the |
| | Secure mode to fetch code in on-chip RAM allowed memory range |
| MONITOR_ENIn FIGS. 25A/25B, Monitor Mode firewalls 4110 and 4150 | check that the Monitor code only fetch instructions in allowed memory range and that Monitor code only read data from allowed memory space. Start_Monitor_Code and End_Monitor_Code registers are locked. |

In FIG. 25, an Instruction Bus Firewall 4110 is connected with the rest of the SSM 2460 of FIG. 9 in the system of FIGS. 9, 18, and 25. The specific monitoring of Secure RAM addresses is enabled /disabled in the Control Module 2765 by writing in the SSM_Instruction_FW_Controller registers in a SPM_Stack_EN field.

In FIG. 25, Secure Privilege Mode Stack Protection (SPMSP) 4110 against instruction execution is separate and independent from a Secure Privilege Mode Stack Integrity Checker (SPMSIC) 4010 of FIG. 24. In some embodiments, both mechanisms 4010 and 4110 share the same start address Start_SPM_Stack 4122 and the SPMSIC 4010 has a fixed size in FIG. 24, and omits an input from End_SPM_Stack register 4124. In FIG. 25, the SPMSP 4110 suitably protects an equal or larger memory space relative to the space protected by SPMSIC 4010 of FIG. 24. Depending on whether the processor stacks are handled in decreasing or increasing addressing in the Secure Kernel in different embodiments, the Start_SPM_Stack register 4122 represents higher or lower addresses respectively compared to End_SPM_Stack 4124.

In FIG. 25A, Instruction Bus Firewall 4110 also establishes SDRAM component memory partitioning for secure access to secure stacked SDRAM 3550 of FIG. 18, such as off-chip memory for use by Secure Demand paging (SDP) 2745 of FIG. 9. The Start_Secure_Stacked_RAM 4126 and End_Secure_Stacked_RAM 4128 registers are configurable in the Control Module 2765 with predetermined granularity. The specific monitoring of this range of addresses for Stacked RAM 3550 is enabled /disabled in the Control Module 2765 of FIG. 25A by writing in the Firewall Controller register 4020 in a StackedRAM_EN field. A secure area in Stacked SDRAM 3550 is also configured and protected using the firewalls 3552.i of FIG. 18. Instruction Bus Firewall 4110 of FIG. 25 physically, controllably and securely enables this capability.

Instruction Bus Firewall 4110 generates a Security Violation for instruction bus IBUS if Monitor Mode code attempts to get an opcode from anywhere besides a Start/End_Monitor_Code reserved space, or if any Secure mode attempt to access an instruction opcode goes outside Start/End address spaces in Secure ROM, Secure RAM or Stacked RAM permitted for opcode retrieval. If any Secure mode opcode access is specifically directed to the SPM Stack, the occurrence is flagged and a corresponding Security Violation is generated. If the IBUS bus lines indicative of protection ARPROTI are inconsistent with the CPSR_Mode and NS security bits on the Security Monitor bus SECMON 2635 of MPU 2610, then a Security violation is issued by firewall 4110. Also, a Secure mode access for an instruction opcode in the SPM Stack is not permitted, since SPM Stack is for data and not opcodes, and firewall 4110 triggers a Security Violation upon such an occurrence.

A Monitor Mode Data Firewall 4150 is depicted in FIG. 25B. During Secure mode execution, Monitor Mode data-related read/write operations are checked to determine whether the Monitor is reading from allowed locations and whether the Monitor writes are directed to allowed locations. Allowed Monitor read locations are specified, for instance, as Secure ROM Monitor Mode data address ranges Start/End_SEC_ROM, Monitor Stack ranges Start/End_Monitor_Stack, and various embodiments apply some or all of these and other ranges. A Security Violation is issued by firewall 4150 if Monitor code attempts a read outside the configured ranges.

In firewall 4150, a Security violation for Monitor Data is issued if an attempted Monitor data access would use an area prevented or forbidden to Monitor by firewall 4150. If Monitor Mode attempts write outside the Monitor Stack, then a Security Violation is issued. Furthermore, if the CPSR_Mode on SECMON bus indicates Monitor Mode, but the Data Read bus protection lines ARPROTW or Data Write bus protection lines AWPROTW indicate User or Public mode, then the inconsistency is detected by firewall 4150. Depending on the applicable bus, data read _DRBUS or data write _DWBUS, a respective Security_Violation_ signal is issued from firewall 4150.

By way of operational comparison of firewalls 4030 and 4150, a Write is rejected by Monitor Stack Firewall 4030 of FIG. 24 if the Write is directed to Monitor Stack(s) by any process running in a Public or Secure mode that is not Monitor Mode. Firewall 4030 thus operates to separate and insulate the Monitor Mode acting as hypervisor from tampering by processes of FIGS. 3-6 that the hypervisor is supposed to control. Moreover, firewall 4150 ensures that the Monitor Mode itself operates in permitted spaces in a manner expected of hypervisor operation. A shared Data section in SPM Stack is suitably provided to mediate or provide a means of communication between the Monitor Mode and Secure Privilege mode. Further, the Secure Privilege Mode SPM Stacks are protected against buffer overflow by SPM Stack Firewall 4010 of FIG. 24.

In FIGS. 25A/25B, Monitor Mode Instruction Bus Firewall 4110 and Monitor Mode Data Firewall 4150 prevent Monitor Mode code itself from attempting access outside permitted spaces. In case Monitor Mode code were intruded upon by an attack, Monitor code is prevented from executing virus or other code involved in the attack. Monitor code can control a transition from Secure space into Public space because in Monitor Mode the Monitor code can context-switch MPU 2610 core parameters that do not need to enter the mode concerned. Also, the Monitor Mode has a dedicated memory stack called the Monitor Stack. Moreover, Monitor Mode can access both Secure and Public MMU and SSM 2460 of FIG. 9.

Monitor Mode code is constrained by the circuitry of FIG. 25B and TABLE 21 to only transition to Secure or Public Privilege mode, such as through a Secure SWI Handler. Thus, the Monitor code is forbidden by the hardware of FIG. 25B to directly to do a transition from itself to a non-privileged mode such as User mode. Conversely, a non-privileged mode such as User mode or even a Secure non-privilege mode cannot transition directly to Monitor code but only through a Public Privilege mode SWI Handler by a SMI (software monitor interrupt) or Secure Privilege mode SWI Handler respectively. The transition occurs from each SWI Handler by a software monitor interrupt (e.g., SMI). In an example, the SMI occurs instead of trapping some FIQ.

In FIG. 9 and FIG. 18, the SSM 2460 has registers 2620 and Control Module 2765 has registers. These configurable registers are suitably either coupled to the Peripheral Bus to MPU2BUS interface 2728 of FIG. 9 or provided in Control Module 2765 and coupled to the Interconnect 3534 of FIG. 18, or handled in any appropriate alternative manner. Allocation of registers to SSM registers 2620 or to the Control Module 2765, for instance, is based on considerations that some registers are used to configure statically the Security Zone architecture and configure and activate the SSM 2460, the firewalls and other security circuitry to ensure the security robustness of the platform. Such registers are readily situated in the Control Module 2765. Some other registers are used dynamically by the Monitor Mode hypervisor for critical, fast operation each time an SMI and/or FIQ happens or are used by operations in Secure Privilege mode. The more dynamically used registers are well-accommodated in the SSM registers 2620.

In FIGS. 25A/25B, the Monitor Mode is itself regulated and protected by protective circuitry 4110, 4150 and prevented from accessing outside of predefined memory space and elsewhere in the rest of the platform. Having the Monitor Mode code running on MPU 2610 and accessing SSM Registers 2620 via Peripheral Port 2625 is safer and easier to control while ensuring a fast execution. In one circuit example, accessing the Peripheral Port 2625 of FIG. 9 is also considerably faster than accessing the Interconnect 3534 of FIG. 18. Accordingly, the registers that are used dynamically by the Monitor Mode hypervisor are allocated to the Registers 2620 in such a circuit example. In other embodiments, different allocations of registers, definitions of fields and access mechanism may also be employed, especially where the speed and security considerations may be significantly different than just described.

In some embodiments, Monitor Mode Data Firewall 4150 includes a hardware section to initialize a SMI (Software Monitor Interrupt) flag SMI_Code if the mode is not Monitor Mode. If operations are in Monitor Mode and Monitor Mode is enabled, a permissible SMI service retrieve might occur but trigger a Security_Violation_ DRBUS under the rules regulating Data Reads in firewall 4150. In that permitted case a Violation_DRBUS_Neutralizer output line is kept inactive, but otherwise an active state of Security_Violation_ DRBUS as noted above also activates the Violation_DRBUS_Neutralizer output line from firewall 4150.

In some embodiments, a security zone mechanism in MPU 2610 can evict a data write cache line as dirty in Monitor Mode. In FIG. 25B and TABLE 21, a Monitor data write access protection Monitor_DRW_EN in SSM_Firewall_Controller register 4020 is suitably enabled to reject writes to Monitor Mode stacks by any process running in Secure Privilege or User modes. This access protection is preceded by Monitor code executing a Data Memory/Synchronisation/Write Barrier (DMB_DSB/DWB) just before a Monitor Mode call or exit (SMI, FIQ, IRQ, EA when trapped into Monitor Mode). Compare with TABLE 42.

External Aborts EA include an Abort generated by the interconnect 3521 and/or 3534 of FIG. 18 mainly by firewall (FW) security violation, or address not mapped or access timeout from interconnect. External Aborts are precise or imprecise, meaning that MPU 2610 knows which transaction address failed (precise) or not (imprecise). Posted write is imprecise, instruction fetch is precise, and MMU faults are internal aborts in an example.

In FIG. 26, an example of security zone static configuration enforcement block 2750 and related fields in a Firewall Controller register 4020 are shown. Some architectures have an associated security zone mechanism (e.g., TrustZone) that operates on its own axioms or principles. The hardware-protected hypervisor and firewalls described herein enhance and compatibly accommodate such security zone mechanisms where they exist.

If MPU 2610 has a security zone mechanism, the security zone mechanism is configured at boot in a highly security-robust way that prevents Current Program Status Register CPSR transitions between some less-sensitive modes and some more-sensitive modes. Certain mode transitions (e.g. in CPSR register) that are permitted between modes by the security zone mechanism are further hardware-controlled, regulated or restricted by hardware in SSM 2460 and firewalls as described herein. A design strategy herein considers the modes of the processor and picks one of the secure privileged modes (e.g., MPU Monitor Mode) to be the vessel for control code added herein. The hardware of SSM 2460 and the firewalls regulate and restrict the permitted operations of MPU 2610 and the system so that the control code operates as a hypervisor which in turn has the categories of FIGS. 3-6 operating under its control. Note that various embodiments of enhancing circuitry are suitably introduced into the security zone mechanism, or provided outside the security zone mechanism, or arranged to straddle inside and outside the security zone mechanism.

In a MPU core example in FIG. 26, the SECMON bus carries bit codes to identify modes for User, FIQ, IRQ, Supervisor, Abort, Undefined, System, and Monitor.

FIG. 26 shows Static Configuration Enforcement 4210 to restrict, disable, prevent, regulate and/or govern a security zone mechanism of MPU 2610 from changing or permitting change to its own static configuration and thereby enhance the security zone for purposes of at least some embodiments herein. A security zone (SZ) core allows disabling configuration instructions depending on the signal state of a hardware pin or lead CP15Disable. This capability allows Boot routine to define the Secure mode structure and options of the SZ mechanism. The Boot routine also configures CPSR/NS Enforcement 2755 and other parts of SSM 2460 and Control Module 2765 to variously activate some or all enforcement options to enhance security robustness according to the strategy for a given type of system product. The Secure modes are entered with the MMU enabled (after first boot). The CP15Disable hardware lead of the security zone is protectively controlled by the circuitry of Static Configuration Enforcement 4210.

The instructions to configure the SZ mechanism are executable by MPU 2610 when CP15Disable has a predetermined first state in secure (NS=0) Monitor or Privilege mode, but become Undefined in MPU 2610 when CP15SDisable is put in a second state that effectively prevents the SZ mechanism from being re-configured. If an Undefined error happens in Monitor Mode, a Security Violation is generated in this embodiment. One source of an Undefined error is from an attempted unauthorized re-configuration. The hardware also generates a Security Violation in response to an occurrence of External Prefetch Abort and Data Abort when both the MPU is in Monitor Mode and the translation table base TTB0 Control Register configuration is set to execute a page table walk and not set to generate a page fault.

In Secure Boot, higher security HS and lower security GP integrated circuit devices boot from on-chip Secure ROM so that the boot image running on the platform is authenticated before it is executed. A valid boot image is checked for the proper size, format and signatures. For Test or Emulator device units used in development, an External Boot mode swaps or remaps addressing from the Secure ROM target to Flash memory target memory space. Firewalls of FIGS. 18 and 20-23 are configured. The Control Module 2765 and SSM Registers 2620 of FIG. 9 and other Figures are configured.

A security zone locking SZ_Locking register in SSM Registers 2620 has a field CP15Disable_REG for configuring CP15Disable. This SZ_Locking register is coupled to Peripheral Port 2625 in order for CP15Disable hardware pin to be reset so that Boot or reboot can configure the system as soon as the MPU 2610 and SSM 2460 CP15Disable_REG are reset.

Boot software running in Secure Supervisor mode sets a configuration for L1/L2 caches in Secure world, and to enable Secure MMU 2520 of FIG. 7 upon completion of Boot. The Secure world is configured in low exception vector mode, MMU extended page table and protection mechanisms for MMU/Data cache/Instruction cache are selectively enabled via respective bits M,D,I of CP15S register, and the Secure world is configured in FIQ mode in FIG. 6. Then in FIG. 26, the Boot software puts a CP15Disable_Reg field of an SZ Locking Register into a state that activates and commands Static Configuration Enforcement 2755 to lock the SZ configuration.

In FIG. 26, the M, D, I Bits of the MPU 2610 security zone register CP15S, as observed by Static Configuration Enforcement 4210 on SECMON bus, are enforced by that Enforcement block 4210 as soon as the CP15Disable_REG is activated to lock the SZ configuration. This enforcement block 4210 is configurable respectively for MMU, Data cache (DC), and Instruction cache (IC) enforcement through corresponding fields in the SSM_ Firewall_Controller register in the Control Module 2765. This enforcement applies in Monitor Mode or in Secure mode (NS=0). In FIG. 26, if any of the M,D,I bits are inactive on SECMON bus when Enforcement 4210 is configured by Firewall_Controller register to expect the respective M,D,I bit(s) to be active, then a respective Security Violation is issued to Security Violation Handler 2720.

Various embodiments of Security Zone Static Configuration Enforcement 4210 are prepared to comprehensively protect the integrity of the SZ configuration.

In FIG. 27, a Platform Events and Configuration Handler 2775 in SSM 2460 hardware is provided for application processor architecture platform events and configuration handling.

In order to deliver product engineering coherency across different product platforms for ever more efficient business operations, the security zone core of MPU 2610 is desirably made compatible with lower security product units called General Purpose (GP) devices, and provided with a Strict Public Debug mode platform capability and also protected against unauthorized manipulations of a Test Mode and of External Boot from Flash memory. When one of these modes or lower-security levels is activated, the MPU 2610 is provided with appropriate controls.

Monitor code of FIGS. 5 and 29 has code that monitors the subset of SSM Registers 2620 shown in FIG. 27. Control Module 2765 updates SSM registers 2620 with any power reset events and/or platform violations such as Security Violations. Platform Events and Configuration Handler 2775 updates SSM Registers 2620 if Strict Public debug is established or if the integrated circuit device is configured (e.g., e-fused) to be a GP (lower-security) device.

Suppose in some embodiments that in-band errors are not generated in case of a Security Violation by particular component in FIG. 18 such as System DMA, Display DMA, Camera DMA or when the platform hardware firewalls are working with posted write operations. Moreover, the platform or architecture of FIGS. 9 and 18 encompasses power domains. Power management operations might happen without notifying the MPU 2610 by in-band errors or out-band errors.

In FIG. 26, in order to enhance and maintain robustness of the Secure mode, the Control Module 2765 updates SSM Registers 2620 and thereby informs the Monitor code of any Security Violations and Power Events that have happened without triggering an in-band or out-band error. The Monitor code is able to detect with little additional Monitor code these Security Violations (Platform Violations) and Power Events rapidly through the SSM registers 2620 via interface MPU2BUS 2728 on the Peripheral Port 2625.

Another example of device-type handling with Security Zone core and SSM security rules enforcement is given next.

Platform Events and Configuration Handler 2775 enforces a rule that the Secure mode is entered only in Functional (non-debug) or pseudo-functional modes that are non-invasive debug or non-invasive test. When Test modes other than Test_At_Speed are configured, they are presumed to be invasive and risky to security, so the Platform Events and Configuration Handler 2775 in FIGS. 27 and TABLE 23 sends the Public_Stuck signal active to the MPU2BUS interface 2665. The Public_Stuck signal ties the qualifier MreqSecure to non-secure state as seen by the firewalls regardless of any CPU 2610 core transaction. Switching from any Functional mode to Test mode, or from any Test mode to any Functional mode, triggers PRCM 2790 to generate a Cold Reset at top level (FIG. 9B). Compare FIGS. 27, 28A/28B, and 30. When Cold Reset is generated due to Test_Mode or Functional Mode switch, the secure software clears any memories that are not affected by the Cold Reset when re-booting.

External Boot handling with security zone mechanism in MPU 2610 and security rules enforcement is described next for Platform Events and Configuration Handler 2775 example in TABLE 23. In some embodiments, the External Boot mode is activated by a hardwire line Sys.Boot of the MPU 2610 and a signal CPU_Boot_Mode is coupled from MPU 2610 to Platform Events and Configuration Handler 2775. External Boot Mode allows swapping the on-chip ROM address space to off-chip Flash ROM memory space. This mode remaps a starting address for the ROM to the starting address of the external Flash memory, e.g., 1025 or 1435 in FIG. 2. For security reasons, booting from external memory is prevented for GP and HS devices and a signal Security_Violation_GP_SPD is supplied from Platform Events and Configuration Handler 2775 to Security Violation Handler 2760 of FIGS. 28A/28B.

Platform Events and Configuration Handler 2775 in SSM 2460 responds to Device Type bits/fields to establish various configuration signals in the system at boot and during run-time. For example, the Platform Status Register PSR in SSM Registers 2620 has bits/fields for signifying Power Reset Events, Platform_Violations, and general purpose device GP_Device and Strict_Public_Debug.

On a SMI exception (software monitor interrupt), see FIGS. 5 and 29, Monitor Mode code checks whether or not all these bits/fields signify inactive conditions. If all the bits/fields have their state inactive, then operations proceed to handle the SMI exception, and otherwise operations proceed in a manner responsive to the particular active state of one or more of these bits/fields that have been activated.

In FIG. 27, Power_Reset_Events is activated in the PSR register by an OR-circuit in Control Module 2765 if any of various bits in a security status register Control_Sec_Status indicates a PowerOnReset initiated, requested, or required by any security violation active or other condition active in some part of the system, or by any of various bits in a secure memory (SECMEM) status register Control_SECMEM_Status being active indicating, for instance, that the MPU L1 cache is unusable.

In FIG. 27, Power domain information in Control Module 2765 is used for security handling in Plaftform Status Register of registers 2620. In order to ensure that power manipulation does not create security holes, different status signals are established in order for the Monitor Mode and the Secure Kernel to know what happens in the Public mode and if the memories are affected or erased. A Control_SECMEM_Status register in the Control Module 2765 latches signals pertaining to each memory bank when it has been powered off or put in Low IDDQ or Retention Mode.

In FIG. 27, the Control_SEC_Status register in Control Module 2765 also latches bits to represent different platform resets that occur and pertain to different system blocks. A Power_Reset_Events signal is OR-generated if any of the foregoing events occur, and that signal is forwarded into the SSM Platform_Status register in registers 2620.

Some of the use cases that involve sophisticated use of the power mechanisms do not wake up the MPU 2610 when processing from retention to active states (e.g., MPU 2610 and Display subsystem 3510.4 for refresh). Depending on the chosen application scenarios, the values from the interconnect firewalls 3522.i registers are exported into the Control Module 2765 to allow a public path through a given interconnect firewall without need of MPU 2610 wake-up.

When the Core Power Domain logic itself, e.g., including Control Module 2765 and any memories in that domain, is powered on and off, the interconnect firewall configuration integrity may depend on the power state in the Core Power Domain. Interconnect firewall Permission register default configurations are properly chosen that at power-on or reactivation the security of a given firewall is very high. On-chip Secure ROM code saves each firewall configuration in response to an imminent power domain power-down operation and restores each saved firewall configuration on a power-up operation.

Retention Flip-flops are introduced into the random number generator RNG in security block 1450 and/or 1140 of FIG. 2. The retention flip-flops retain the values of accumulated entropy plus state and control registers when the Peripheral Power Domain is off such that once re-awakened, the RNG can generate true random values without need of time-consuming entropy accumulation.

Power, Resets, and Control Module (PRCM) power state transitions are prevented in the middle of operations in the security peripheral domain(s). The security peripherals are clocked independently of, and do not share interface clock with, non-secure modules. Accordingly, non-secure modules are rendered incapable of prematurely or undesirably shutting down a security-related peripheral.

In FIG. 27, the Platform_Violations bit/field in the PSR register of SSM registers 2620 is activated by an OR-circuit in Control Module 2765 if any of various bits in a security error status register Control_Sec_Err_Status indicates that a security violation (FIG. 28) or an on-chip ROM memory error is detected, or by any of various bits in a debug security error status register Control_Sec_Err_Status_Debug being active indicating that an on-chip ROM memory error or other security-related error is detected in a debug mode.

The Platform Events and Configuration Handler 2775 delivers a security violation signal designated Security_Violation_GP_SPD if there is a NS bit violation or a Boot violation. NS_Bit_Violation signal is set active when an inconsistency arises between the MPU 2610 NS security bit signifying a secure state when a non-secure state is expected and indicated by an active NS_Lock signal in the hardware. NS_Lock is set active when the Platform Events and Configuration Handler 2775 circuit detects a GP device or a Strict Public debug (SPD_EN, non-secure debug) condition of signal GenDBGEnable. The corresponding GP_Device and/or Strict_Public_Debug bit/fields in the PSR register are also set. A second violation aspect of signal Security_Violation_GP_SPD is a Boot violation. If the MPU 2610 External Boot mode signal is active at run-time for either a GP or HS device, then a Boot violation is generated.

A firewall 2742 for a variable length codec (VLCD) 2744, e.g., a Huffman codec for telecom restricts the access to the iVLCD 2744 depending on CPSR mode of operation {User; Privilege}, {Public; Secure}, system state of operation {Debug; Functional}, and MMU page-type {Data; Instruction}. The iVLCD Firewall 2742 can be compared with and supplemented by the firewall illustration and description of FIG. 20 and description elsewhere herein.

When an attempted but unpermitted access is detected by iVLCD firewall 2742, an iVLCD Security Violation is generated.

FIG. 28 shows a Security Violation Handler example for Security Violations handling and attacks neutralization.

In the Posted Read or Posted Write architecture, a security violation signaling strategy example is given as follows. If a particular type of Security Violation upon hypothetical occurrence would not damage memory contents nor corrupt the MPU processor state, then External Data/Prefetch Abort generation is a sufficient response. If a particular type of Security Violation upon hypothetical occurrence would cause damage to memory contents or corrupt the MPU processor state, but they are recoverable by activating an appropriate exception handler, then External Data/Prefetch Abort generation is sufficient. If a particular type of Security Violation upon hypothetical occurrence would cause unrecoverable damage to memory contents or corrupt the MPU processor state, then the security response should reset the MPU 2610, or reset or re-initialize the virtual processor responsible for the category of FIGS. 4 and 6 in which the Security Violation arises, or reset the core CPU of FIGS. 32-33 responsible for the Security Violation. A Security_Violation_CONF register of TABLE 26 is configured with the strategy appropriate for a given architectural embodiment.

An External Data Abort (EA bit) is maskable in some MPU cores. If External Data Abort is maskable, then an External Prefetch Abort is used instead to respond to a Security Violation and generate a pipeline flush to destroy the context of the application responsible for the Security Violation. Thus, some flexibility is suitably established through the SSM registers to configure whether to generate an External Prefetch Abort on next instruction when a Read/Write Data Security Violation is detected currently, see Aborts of FIG. 28B.

FIGS. 28A and 28B and TABLE 27 show security violations in functional modes. The different SSM Security Violations are grouped by severity level with appropriate security neutralization strike-back responses of TABLES 25-26. In a Group 1 of Instruction Read Channel Violations, the response supplied by Security Violation Handler 2760 includes External Prefetch Abort and Reset of the MPU 2610.

Security Violation Handler 2760 responds to either FIG. 25 signal Security_Violation_IBUS or FIG. 11 signal Security_Violation_IBUS_PHY_VP1 and generates the response. These violation signals are generated when the MPU 2610 tries to execute in non-allowed memory when in Monitor Mode or Secure mode. These security violations are recoverable by generating the External Prefetch Abort and performing a pipeline flush before the instruction is executed. Because of the added security thus provided, read channel violations are neutralized, and unwanted instructions are not executed.

In a Group 2 of Data Read Channel Violations of TABLE 28, the response supplied by Security Violation Handler 2760 includes External Data Abort, External Prefetch Abort and Reset of the MPU 2610. Security Violation Handler 2760 responds to either FIG. 25 signal Security_Violation_DRBUS or FIG. 11 signal Security_Violation_RDBUS_PHY_VP1 and generates the response. These security violations are generated when the MPU 2610 tries to perform a Read Data transfer in non-allowed memory when in Monitor Mode, Secure mode or Secure Privilege mode. In TABLE 26, IRDBUS_Violation_Strategy provides a response code for Group 2 Security Violations. WRBUS_Violation_Strategy provides response code for handling Group 3 Security Violations. Group 2 and and Group 3 Security Violations are respectively recoverable by generating an External Data Abort and handling the abort before the Read Data is read or Write Data is written. Because of the added security thus provided, read and write channel violations are neutralized, and unwanted data reads and writes are not completed.

An External Prefetch Abort request is also sent back to the MPU 2610 in response to a Next_Instr_Abort signal to MPU2BUS interface 2665 in order to destroy the context of the application by pipeline flush on occurrence of a Group 2 Security Violation or a Group 3 Security Violation. External Prefetch Abort is coupled with exception handler circuitry to terminate the application process that caused the Security Violation.

In a Group 3 of Data Write Channel Violations, the response supplied by Security Violation Handler 2760 includes External Data Abort, External Prefetch Abort and Reset of the MPU 2610. Security Violation Handler 2760 responds to either FIG. 25 signal Security_Violation_DWBUS or FIG. 24 signal Security_Violation_MONITOR_STACK and generates the response according to the response code for WRBUS_Violation _Strategy in TABLE 26. These violations are generated when the MPU 2610 performs a Write Data transfer in non-allowed memory when in Monitor Mode, Secure mode or Secure Privilege mode.

In a Group 4 of Data Write Channel Violations of TABLE 28, the response supplied by Security Violation Handler 2760 accords with the particular response code configured into DFW_Violation_Strategy of TABLE 26. For example, the response suitably includes External Data Abort, External Prefetch Abort and Reset of the MPU 2610. Security Violation Handler 2760 responds to FIG. 24 signal Security_Violation_SPM_STACK and generates the response. This type of security violation is generated if the MPU 2610 performs a Write Data transfer in non-allowed memory when in Secure Privilege mode consecutively to a buffer overflow attack. This type of security violation may not be recoverable if the Write physically completes. However, recovery is possible by using an appropriate exception handler to terminate the thread responsible for the security violation and repair or erase the damaged memory area.

To perform such a recovery, Security Violation Handler 2760 generates a signal Next_Instr_Abort to MPU2BUS interface 2665 which in turn sends back an External Prefetch Abort signal to MPU 2610. MPU 2610 responds by vectoring to an appropriate exception handler that triggers a pipeline flush and thereby destroys the context of the offending application in response to the security violation. The exception handler further executes instructions to repair the damaged SPM Stack area using a precautionary saved-copy of the stack contents. Notice that Security Violation Handler in this example is structured to apply separate, different or independent security response strategies to Group 3 and Group 4 Security Violations.

Regarding a Group 5 of Security Violations in TABLE 28, the Group 5 Security Violations are believed not recoverable (or at least more difficult to recover) because they attempt to hijack the processor state and the secure mode architecture. The response SECURITY _VIOLATION in FIG. 28B is supplied by Security Violation Handler 2760 to PRCM 2790. The response initiates Reset of the MPU 2610 or at least re-initialization of the virtual processor category which is responsible for any of these suffixed Security_Violation signals: _ITRACEBUS, _DTRACEBUS, _CPSR, _GP_SPD, _SZ_CONF, _DEBUG, _IBUS_VIR_VP1, _DBUS_VIR_VP1.

The SSM Registers 2620 include a Configuration register and an Error Log register to facilitate flexible handling of the different Security Violations of Groups 1-5 and to respond efficiently when any of them happen. These registers are accessible for Read and Clear operations by Secure Privilege modes. In Control Module 2765, in its separate power domain, a register Control_SEC_Error_Status is provided to protectively store a copy of security violations on Platform Status Register from Security Violation Handler 2760. Stored firewall-violation information examples are tabulated in TABLE 12. The information accumulates errors or security violation statistics and diagnostics from the system.

In a Group 6 of iVLCD firewall violations of TABLE 28, the response supplied by Security Violation Handler 2760 accords with TABLE 26 iVLCD_Violation_Strategy and includes External Data Abort, External Prefetch Abort and Reset of the MPU 2610. Security Violation Handler 2760 of FIG. 28B responds to TABLE 24 signal Security_Violation_iVLCD and generates the response. This Security_Violation_iVLCD is generated when a non-allowed access to iVLCD is performed and is recoverable if an External Data Abort is generated before data has been read or written. Because of the added security, write channel violations are neutralized, and thus unwanted data writes are not completed and unwanted data is not written. Note that this Group 6 approach is applicable to various firewalls in the system.

In response to the Group 6 Security Violation, the Security Violation Handler 2760 generates a signal Next_Instr_Abort to MPU2BUS interface 2665 which in turn sends back an External Prefetch Abort signal to MPU 2610. MPU 2610 responds by vectoring to the appropriate exception handler that triggers a pipeline flush and thereby destroys the context of the offending application that caused the Group 6 Security Violation.

In FIG. 28, Read channel security violation neutralization by MPU2BUS interface 2665 is described next. The Neutralization circuitry sends back to the MPU 2610 an External Prefetch/Data Abort request signal in response to an input IBUS_Abort active or RDBUS_Abort active or WRBUS_Abort active from Security Violation Handler 2760. These Abort signals from Security Violation Handler 2760 are provided to MPU2BUS interface 2665 in the same MPU bus clock cycle when Security Violation Handler 2760 detects the security violation.

In FIG. 28B, Write channel security violation neutralization by MPU2BUS interface 2665 is described. The Security Violation Handler 2760 requests a Data Abort by sending an active signal WRBUS_Abort to MPU2BUS 2665 in the same MPU bus clock cycle when SSM 2460 detects a non-allowed Address transaction request on the MPU bus. The MPU2BUS 2665 replaces the write state of signal MCMD (MCMD = WR state) of the non-allowed Write transaction by an Idle state of signal MCMD = IDLE. MPU2BUS 2665 concurrently sends back on the transaction response channel mentioned hereinabove the Data Abort In-Band qualifier to the MPU 2610. The MPU2BUS 2665 asserts the In-Band error qualifier and replaces MCMD = WR by MCMD=IDLE to all the Data transfers associated with the aborted Address transaction.

In one example, IBUS_ABORT, DRBUS_ABORT and WRBUS_ABORT are Active only in and during each same clock cycle as the failing access is on the bus.

In FIG. 28 and TABLE 26, the security violation strategy configuration is defined by bit-fields in the SSM Security_Violation_CONF register of FIG. 9 and FIG. 28. Depending on the response code configured into the register of TABLE 26, the existence of any security violation in a particular Group triggers a specified response of TABLE 26 into the circuitry of FIG. 28B.

**TABLE 26**

| FIELDS IN SSM SECURITY_VIOLATION_CONF REGISTER | | |
|---|---|---|
| Field Name | Function, Strategy, or Response | |
| Violation_Strategy_Lock | When field value is active, this register is locked | |
| Debug_Mode_Masking | When field value is active, and when the Secure Debug is configured, Debug Request are replaced with normal violation strategy | |
| Intercon_Attack_Neutralizer | When field value is active, the MPU2BUS interface 2665 duplicates External Data Abort into External Prefetch Abort in next transaction | |
| iVLCD_Violation_Strategy | 2-bit field for response codes | |
| | | {RD/WR}BUS_Abort + Next_Instr_Abort + Reset |
| | | {RD/WR}BUS_Abort + Next_Instr_Abort |
| | | {RD/WR}BUS_Abort |
| | | Next_Instr_Abort is generated for data transfer. |
| DFW_Violation_Strategy | 2-bit field for response codes | |
| | | Next_Instr_Abort + Reset |
| | | Next_Instr_Abort |
| WRBUS_Violation_Strategy | 2-bit field for response codes | |
| | | WRBUS_Abort + Next_Instr_Abort + Reset |
| | | WRBUS_Abort + Next_Instr_Abort |
| | | WRBUS_Abort |
| IRDBUS_Violation _Strategy | 2-bit field for response codes | |
| | | {I/RD}BUS_Abort + Next_Instr_Abort + Reset |
| | | {I/RD}_Abort + Next_Instr_Abort |
| | | {I/RD}_Abort |
| | Next_Instr_Abort is generated for Data Read. | |
| HaltOnSecurity Violation_EN | | |

The added Intercon_Attack_Neutralizer security field is configurable in the Security_Violation_CONF register which activates a security mechanism in MPU2BUS interface 2665.

The security violation reporting is described in TABLE 13. SSM 2460 and Debug Section 2770, 2772 of FIGS. 9B and 30 and TABLES 28 and 31 checks the GenDbgEN, ICESecPrivDebugEn, and DBGEN, SPIDEN signals of TABLE 30 to modify the violation reporting of TABLE 13 and Security Violation to PRCM 2790 in TABLE 28 and FIG. 28B. When HaltOnSecurityViolation is configured in the In-circuit Emulator 2785 and the Secure User or Secure Virtual & Privilege Debug is configured in GenDbgEn, then the in-band errors (External Prefetch/Data Aborts) are not generated by Security Violation Handler 2760 to MPU2BUS interface 2665.

In FIG. 28, the security violations handling architecture is flexible by flagging different Security Violations in the Control Module 2765 and the Platform_Status Register of FIGS. 27, 28A/28B and as listed in TABLE 27, and clearing them when no longer needed. The Security Violation Handler 2760 establishes logic values for numbered Groups based on various entries in the Platform_Status Register of FIG. 28 in registers 2620 of FIG. 9. Active states of Security_Violation_<suffix> signals provide useful security diagnostics and are described in TABLE 27, where the suffix name is tabulated by itself for brevity.

**TABLE 27**

| PLATFORM STATUS REGISTER FIELDS | |
|---|---|
| _DBUS_VIR_VP1 | Non-allowed access occurred in virtual memory space |
| _IBUS_VIR_VP1 | Non-allowed access occurred in virtual memory space |
| _RDBUS_PHY_VP1 | Non-allowed access occurred in physical memory space |
| _IBUS_PHY_VP1 | Non-allowed access occurred in physical memory space |
| _iVLCD_DRWBUS | Non-allowed access occurred on iVLCD |
| _DEBUG | Secure Privilege Debug mode is unexpectedly configured |
| _SZ_CONF | Defective security zone configuration: |
| | Secure MMU should be active |
| | Secure Icache should be active (if configured) |
| | Secure Dcache should be active (if configured) |
| _GP_SPD | NS bit changed after Secure Boot while in Strict Public Debug mode or GP Device |
| _CPSR | Non-allowed CPSR mode switch or non-allowed change of |
| NS bit _DTRACEBUS | Trace (e.g. ETM) data bus firewall has been violated: |
| | Monitor Mode read/writes data in not-allowed virtual memory |
| | Monitor Mode data transfer are not valid/expected |
| _ITRACEBUS | Trace instruction bus firewall has been violated: |
| | Monitor Mode fetches in not-allowed virtual memory |
| | Monitor Mode instructions are not valid/expected |
| _SPM_STACK | Buffer Overflow attack in Privilege Mode Stacks |
| _MONITOR_STACK | Attempt to trash the Monitor Mode Stacks |
| _DWBUS | SSM firewall for Write Data bus has been violated: |
| | Monitor Mode writes data in not-allowed physical memory |
| | Monitor Mode MMU configuration is trashed |
| _RDBUS | SSM firewall for Read Data bus has been violated: |
| | Monitor Mode read data in not-allowed physical memory |
| | Monitor Mode MMU configuration is trashed |
| _IBUS | SSM firewall for Instruction bus has been violated: |
| | monitor mode fetches in not-allowed physical memory |
| | Monitor/Secure Mode MMU configuration is trashed |
| | Secure mode fetches in not allowed physical memory |
| | Secure mode fetches in Privilege Mode Stacks |

FIG. 29 and TABLE 29 show a process flow embodiment for the Monitor Mode hypervisor 4410 with SWI handlers 4420 and 4430 and an example of vectors and their addresses in an associated memory infrastructure for the Monitor Mode hypervisor. FIG. 29 is divided into a left half for depicting a Public space 4440 and a right half for Secure space 4450. Other process and structure embodiments such as those of FIG. 5 and TABLE 29 and TABLE 42 and description elsewhere herein can be compared with and supplement FIG. 29 and each other.

In the Public space 4440, Public HLOS of FIGS. 4-6 calls a Public SWI (software interrupt) handler 4420 to request activation of another category such as modem in public virtual category 2430 or a protected application (under security kernel) in secure non-virtual category 2450 or other software in some other category. A Public SWI handler 4420 operates in Public Privilege mode and has an associated entry SWI vector 4425 offset from a base address Public_BA. Software Monitor Interrupt (SMI) in the Public SWI handler accesses a Monitor Mode vector 4455 to enter Monitor code. Compare to protection wall 2140 of FIG. 3. Monitor code can also transition to the Public SWI handler 4420 by using the entry SWI vector 4425.

In the Secure space 4450, Secure SWI (software interrupt) handler 4430 operates in Secure Privilege mode and has an associated entry SWI vector 4435 offset from a base address Secure_BA. Monitor code transitions to the Secure SWI handler 4430 by using the entry SWI vector 4435. Compare to protection wall 2150 of FIG. 3. To transition from the Secure SWI handler 4430, Software Monitor Interrupt (SMI) accesses Monitor Mode vector 4455 and enters Monitor code.

In TABLE 29, fast context (CTX) switch is provided in the Monitor code of FIG. 29 for uncomplicated and inexpensive implementation. With fast context switch, a context switching MMU is unnecessary, and a moderate sized address space (e.g., 32M) is used to support Modem, Camera, and Linux operating system. In another example embodiment, full MMU context switching is provided and a very large 4GB address space is provided to support relatively sophisticated, large-scale sharing of resources.

**TABLE 29**

| MONITOR CODE TRANSITIONS |
|---|
| IF PUBLIC SMI -4420 use entry vector 4455; call to enter Secure space: |
| PUSH CTX --Context to Monitor Code Stack |
| SCR [] = 0 - Reset NS bit to establish Secure mode |
| SCR [] = 1 - Set IRQ trap in Monitor Mode |
| ENABLE I, F, A bits -- Enable MPU CPSR IRQ mask, FIQ mask |
| ... |
| <Hypervisor Body Software Operations here> |
| ... |
| POP CTX --Context from Monitor Code Stack |
| IMB (Flush prefetch buffer for Instruction Memory Barrier) |
| Emulated SWI -- Enter Secure SWI using Secure SWI entry vector 4435 |
| ENDIF |
| IF SECURE SMI --4430 use entry vector to Monitor code; call to enter Public space: |
| PUSH CTX --Context to Monitor Code Stack |
| ENABLE I, F, A bits -- Enable MPU CPSR IRQ mask, FIQ mask |
| ... |
| <Hypervisor Body Software Operations here> |
| ... |
| SCR [] = 1 - Set NS bit to establish Public mode |
| DISABLE I bit -- Disable IRQ mask |
| SCR [] = 0 - Set IRQ trap in Public mode |
| POP CTX --Context from Monitor Code Stack |
| IMB (Flush prefetch buffer for Instruction Memory Barrier) |
| Emulated SWI --Enter Public SWI using Public SWI entry vector 4425 |
| ENDIF |

Before exiting the Monitor Mode an IMB (Instruction memory barrier, flush prefetch buffer) is established by executing assembly code to enter and propagate the altered NS bit value in the pipeline of MPU 2610.

FIG. 30 shows an SSM Debug Section 2770, 2772 of FIG. 9. The SSM Debug Section is coupled to the MPU 2610 via debug port 2780 and to an in-circuit emulation block 2785. The Core Power Domain includes the Control Module 2765 coupled to the SSM Debug Section. The Control Module 2765 has a secure control over a TAP (e.g., JTAG 1149.1 Test Access Port for serial scan into and out MPU 2610) via a TAP enable field designated SystemMpuTapEn in a Control_SEC_TAP register. The processor state is selectively coupled to an emulation and testability host computer provided for the purpose, such as PC 1070 of FIG. 1.

Different trace/debug modes are configurable by a combination of Control Module 2765 registers, SSM registers 2620 and MPU registers (e.g., CP15S_, DSCR) configuration fields or bits establishing the different debug modes. For example, an invasive debug mode is activated by setting DBGEN active. Invasive debug mode couples the SSM Debug Section 2770, 2772 with the in-circuit emulator 2785 and/or a Trace component 4820 of FIG. 31A. Invasive debug is used for debug of a halted system or running system, using watch points and break points.

In FIG. 30, a Non-Invasive Debug (NID) observational mode is established by setting a trace enable signal NIDEN active. Non-invasive debug mode permits data observation of a running system through trace, performance monitoring, and program counter (PC) sampling from MPU 2610.

System_MPU_TAP_En sets enable DBGEN_EN active to activate DBGEN from Emulator 2785. Debug Section 2772 activates DEBUG REQUEST. Hardware halting of MPU 2610 in debug mode then operates when an external debug request (e.g. EDBGRQ) is received from Emulator 2785. MPU 2610 responds with the DBGACK debug acknowledge signal active, and MPU 2610 is halted. Then DEBUG REQUEST goes inactive due to DBGACK. Software halting in debug mode forces DBGACK signal active using an applicable bit in of the DSCR that halts the MPU. DBGACK is coupled to both Emulator 2785 and to SSM Debug Section 2770. Breakpoints are suitably set and used to halt the MPU core on specific addresses, events or instructions.

Various debug modes are provided and have names to correspond with various Boolean combinations of two or more of the MreqInfo qualifiers. Some of the Boolean combinations corresponding to debug modes involve the qualifier MreqSystem. The ForceDAP<> entries in register Control_SEC_EMU are used to establish and control the MreqInfo qualifiers for debug purposes.

A Strict Public Debug Mode is enforced by software during the Monitor Mode execution by not allowing NS bit to be toggled to the Secure state and preventing Secure Privilege modes from being entered. When the VP1_DEBUG_DIS is active, the Monitor Mode is coded to configure the fields SSM_DBGEN_Disable and SSM_NIDEN_Disable when switching in or out of the Virtual Public Mode.

SSM Security Violation Handler 2760 suitably has hardware that is responsive to invasive debug modes that have been configured for higher security and/or higher privilege to disable debug access to MPU 2610. For example, among the higher-level debug modes a Secure Privilege Debug mode activation operates the Emulator 2785 using a Debug Request signal (FIG. 30) and encompasses events in Groups 4 and 5, as well as Groups 1, 2, 3, 6. But the non-privilege Secure User Debug mode is regulated and restricted so that Debug Section 2772 issues the Debug Request signal in response to events in Group 1, 2, 3, or 6 to operate Emulator 2785. Occurrence of a Group 4 or 5 violation in Secure User Debug mode does not operate Emulator 2785 and instead triggers protective hardware by the signal SECURITY VIOLATION to PRCM 2790.

The Security Violation Handler 2760 in TABLE 28 thus uses the signals GenDbgEnable and ICESecPrivDebugEn to establish the Security Violation reporting of TABLE 13 and strategy for issuing the SECURITY VIOLATION signal to PRCM 2790 from TABLE 28 and FIG. 28B. Debug Section hardware 2770 checks that the Secure Privilege Debug Mode has not been tampered with and, if tampered, then issues a signal Security_Violation_DEBUG to Security Violation Handler 2760.

In real-time debug mode, (non-invasive) debugging, emulation commands are transmitted to the MPU 2610 using either debug software in the Monitor Mode code or using commands issued from a JTAG TAP controller that couples the Emulator 2785 to the MPU 2610.

In this way, SSM Debug Section 2770, 2772 of FIG. 30 is enabled, to the extent permitted by security and privilege configuration, to steer, guide, or activate Emulator 2785 precisely to or at the lines and commands in the software that are producing Security Violations in the various Groups. The Debug Section cooperating with Emulator 2785 in the system of FIGS. 18 and 30 facilitates and speeds software code development in the software development process, and enhances the accuracy and speed of security analysis of existing software and the accuracy and speed of field service debug and field testing of the system by authorized personnel either locally to the device or remotely from the device of FIG. 1.

Emulation components are grouped in an Emulation Power Domain in order to decrease the power consumption for production devices. A Debug Access Port DAP is provided as an initiator on the L3 Interconnect in some embodiments and has firewall-regulated access to various parts of the system of FIG. 18 using scan chain methodology. In this way, the qualifier MreqDebug is used by the firewall hardware as described in connection with FIG. 20 to contribute to regulating access to various parts of the system according to security policy.

A Debug Security block sets MreqDebug high and fills three MreqInfo bits Mreq[]-MreqSecure, MreqPrivilege, MreqSystem responsive to states of Debug configuration fields or bits in a protected register such as Control_SEC_EMU. This Debug Security block facilitates emulation of the processor and improves system development, testing, and field service both locally and remotely to the system by authorized personnel.

In FIG. 31A, a trace instruction bus 4810 at port 2635 couples the MPU 2610 to a Trace component 4820. In FIG. 31B, a Trace bus firewall 4830 with hardware as in TABLE 33 is coupled to the trace instruction bus 4810 to hardware-protect the Monitor Mode when CPSR_Mode=Monitor from security compromise.

In FIG. 31B, Control Module registers are coupled to this hardware 4830, which recreates or specifies Monitor code virtual address ranges or spaces for instruction fetch and data transfer relating to Monitor Stack(s), Monitor code ROM location and via Peripheral Port 2625 as addressable spaces) and checks that the instructions fetched from L1/L2 Caches and ROM locations correspond to what is expected.

A Trace data bus 4850 in FIG. 31A conveys the results of actual execution in MPU 2610, such as from a writeback execution stage of the processor pipeline. A Trace Bus Firewall 4860 is coupled to more Control Module 2765 registers that specify an address range for Monitor code in Monitor code ROM, an address range for Monitor stack, and an address range for Monitor to use to address SSM Registers 2620 and Interrupt Handler Registers 2725 via Peripheral port 2625. Trace Bus Firewall 4860 has hardware to ensure that any Data fetched from L1/L2 Caches and ROM locations corresponds to what is expected, and that the Data transfer activity happens only in the expected spaces or locations.

Monitor Mode is differentiated in this example for purposes of L1/L2 caches and MMU from the User mode and from Privilege modes other than Monitor Mode. The virtual mapping of the Start/End addresses of Monitor Stack(s) and Monitor code ROM space are set in the MMU using a TTBO register and the entries are locked down in MMU TLB (translation lookaside buffer) by setting a CP15Disable field or bit. This lock-down prevents any page table walk that might compromise system security.

Dedicated registers in the Control Module 2765 duplicate or mirror the TTB0/TLB programming in order to re-create the Monitor code virtual address range mapping when Monitor code is executed from the ROM location and L1/L2 Caches. Trace signals are output by the MPU 2610 when a signal Trace (ETM) power up PWRUP is active.

Trace data address control TRACEDACTL and Trace data data control DDCTL are used to ascertain and control that the instruction execution and data transfer are valid. In this way, the instructions fetched from L1/L2 Caches and ROM locations are properly executed.

In FIG. 31B, execution status and error flags of the executed instruction are checked by firewall 4830 by checking the Trace IACTL signal corresponding to each address output on the Trace Instruction Address bus 4810. The checks make sure, first, that the Monitor code instructions executed in the pipeline itself are in fact a predetermined instruction width (e.g., 32-bit) used for the Monitor Mode, by checking that TRACEIACTL bus lines for other instruction widths (e.g., 16-bit half-word aligned and variable-length byte-aligned) are inactive for each instruction executed in Monitor Mode. The particulars that characterize Monitor code for checking purposes vary from embodiment to embodiment.

Respective Trace IACTL lines are monitored so that when one line indicates presence of an Exception, then further lines are checked to make sure that they are not Java nor a so-called precise data/instruction abort nor a so-called Undefined exception. Precise data aborts are not expected when TTBO is configured not to generate page fault.

Further in FIG. 31A, a Trace Data bus 4850 has firewall 4860 to hardware-protect the Monitor Mode from security compromise. TABLE 34 shows an example of this firewall 4860 hardware in the SSM 2460 to monitor Trace Data bus 4850.

Data transfers occur only from predetermined areas in the system, e.g., on-chip ROM space, a Monitor Stack space reserved for Monitor code in on-chip Secure RAM (Read/Write), or via the FIG. 9 Peripheral Port 2625 in SSM Registers 2620 and in Registers 2725 for Interrupt Handler 2720. In FIG. 31A, these Data transfers are monitored for proper execution. Virtual addresses output by a Trace data address bus DA are checked when the MPU 2610 is executing in Monitor Mode. The virtual addresses compared with the Trace DA bus are Start and End addresses of the ROM virtual address space, Stack virtual address space, and Peripheral Port virtual address space, all for the Monitor code.

The virtual mapping of the Monitor Mode stacks and Monitor code ROM space are set in the MMU (memory management unit) using the TTBO register and entries locked-down in TLB (translation lookaside buffer). Dedicated registers in the Control Module 2765 are used by the SSM 2460 in order to duplicate exactly the TTB0/TLB programming to 1) re-create the Monitor code virtual address mapping when the Monitor code is executed from the ROM location and L1/L2 caches, 2) re-create the Monitor Stack virtual address mapping when data transfer took place, and 3) re-create the Monitor code data accesses (R/W) to the Peripheral Port 2625 including SSM registers 2620 and Interrupt Handler registers 2725.

The Trace DA bus in bus 4850 outputs the virtual addresses of the Data that has been manipulated by the MPU 2610 at an Add execute pipeline stage and those virtual addresses are checked. The TRACEDA bus is qualified by two Trace DACTL lines available in FIG. 31A on SECMON Bus at Add stage in the pipeline so that the checking occurs when a line indicates that a data item is present and another line indicates that the data is not a coprocessor access. The SECMON bus has lines to output the CPSR modes from the writeback execute stage in the pipeline and firewall 4860 captures the CPSR_Mode information signifying that Monitor Mode is entered.

In FIG. 31A, a Trace DDCTL bus is checked for the Data transfer execution and associated errors corresponding to each address output on the Trace DA bus. Validity of data transfer in Monitor Mode is determined by checking respective SECMON bus lines corresponding to Trace DDCTL to make sure they indicate that when a data item is present, then other bus lines indicate that no data write failed and no imprecise data abort occurred.

Note that in various embodiments, the skilled worker identifies any accesses or characteristics that are not associated with the Monitor code or hypervisor mode and then uses hardware monitoring for such accesses or characteristics to signal a Security Violation, e.g., Security_Violation_DETMBUS (data) and Security_Violation_IETMBUS (instruction). The particulars of some examples are described herein, and the various embodiments contemplate monitoring other particulars which may or may not include the ones mentioned.

Secure Demand Paging SDP 2745 of FIG. 9 corresponds to SDP 1040 of FIGS. 1 and 2 and has a pool of pages in a Secure RAM 1034 that are physically loaded with data and instructions taken from a storage memory that is suitably encrypted (or not) external to the secure mode. SDP 2745 creates virtual memory in secure mode and thus confers the advantages of execution of Protected Application (PA) software that far exceeds (e.g., up to 4 Megabytes or more in one example) the storage space in on-chip Secure RAM. The pool of pages in Secure RAM 1034 is updated by the SDP according to Memory Management Unit (MMU) page faults resulting from execution of secure software currently running on the system.

Page activity register ACT allows disabling of usage level monitoring for any page of the page pool.

An invalid state in ACT[N] or in the MMU Mapping Table for a given page causes an MMU page fault or interrupt when a virtual address in secure VAS (virtual address space), for a particular one of several contexts VMC of SDP within a category of FIGS. 4 and 6, is accessed corresponding to a physical address in that page which is absent from Secure RAM.

SDP hardware provides secure page swapping, and the virtual address mapping process is securely provided under Secure Mode. Secure RAM pages are positioned at the virtual address positions where they are needed, dynamically and transparently in the background to PAs.Code and Data for SDP Manager software are situated in Secure RAM in a fixed PPA (primary protected application) memory address space from which swapping is not performed.

The SDP paging process desirably executes as fast as possible when wiping pages. Intelligent page choice mechanism built into the SDP 2745 hardware reduces or minimizes the frequency of unnecessary page wipes or Swaps since an intelligent page choice procedure as disclosed herein leaves pages in Secure RAM that are likely to be soon used again. Put another way, if a page were wiped from Secure RAM that software is soon going to use again, then SDP would consume valuable time and power to import the same page again, especially with cryptographic protection procedures.

An additional consideration in the SDP paging process is that the time consumption for wiping pages varies with Type of page as Code Page or Data Page.

SDP has registers ACT for page active, TYPE for code or data page, WR for write page, STAT for statistics, and ADV for advice on which page to wipe.

**TABLE 36**

| GLOSSARY | |
|---|---|
| Abbreviation/Term | Meaning |
| Branch Phantom | A branch instruction with dead bit set that is not executed but still propagating in the pipeline. Happens when pipeline is flushed (or assimilated) due to BTAC, Branch folding mis-prediction. |
| DContainer | Data container (Physical and virtual bound checking) on the virtual processor (data side) from SSM checker standpoint. Permitted address range is configurable through SSM registers. |
| IContainer | Instruction container (Physical and virtual bound checking) on the virtual processor (instruction side) from SSM checker standpoint. Permitted address range is configurable through SSM registers. |
| Data_Slot_Abort | When an instruction attempts data transfers (data pipeline), it associates a slot to each data item. These slots are aborted on an MMU fault, or SSM or Bus returns a Data Abort exception. |
| Supervisor Mode | Processor non-user mode for interrupts, exception, operating system, etc. |
| ACLKEN | Used to divide the Main clock to create half-rate clock for bus |

| READ_CHANNEL (AR), WRITE_CHANNEL (AW): | |
|---|---|
| ARVALID | : When High the address on the bus is valid |
| ARPROT | : Indicates if this transaction is Secure/Public; User/Supervisor; Data/Opcode |
| ARADDR | : Address requested |

### MULTI-PROCESSOR ARCHITECTURE WITH HARDWARE-SUPPORTED HYPERVISOR

FIGS. 32-38B show some hardware security embodiments for symmetric multiprocessing (SMP) core(s). One of the cores is called the SMP core and designated CPU0. A hardware (HW) supported secure hypervisor runs at least on the SMP core. Linux SMP HLOS is symmetric across all cores and is chosen as the master HLOS in some embodiments. A secure environment is provided by use of SSM 2460 described in detail in connection with FIGS. 9A/9B and in connection with SSM 5030 of FIG. 34B. By contrast with the symmetric HLOS, one core CPU0 acts as a control core and is provided with security zone circuitry so that the security zone is not asymmetric in the multi-core embodiment. The HW hypervisor mechanism provides standalone CPU virtualization in order to run a single processor based OS such as WinCE or Nucleus.

The hypervisor code runs in Monitor Mode, and virtual worlds are switched from Monitor Mode. The hypervisor-mediated categories of FIG. 6 are scheduled by timers in synchronous time sharing fashion. The HW secure hypervisor mechanism in this embodiment is asymmetric relative to the processor cores.

In some other embodiments, a pseudo-symmetric architecture has virtual processors wherein any of the virtual processors can do SMP (symmetric multi-processing) while using a control core plus a further number n-1 (one less than n) CPU cores, also called processor cores herein. In other words, if a complete cluster has four (4) cores or processors, then the pseudo-symmetric virtual core mechanism uses an SMP cluster of 3 CPUs as processor cores with some operations conducted by the additional control core CPU0.

The hardware hypervisor provides real time interrupt firing capability for virtual worlds to ensure RTOS capability. Any OS running in a virtual world is able to call Secure services even if the secure environment is on CPU0 and the virtual world is running on another CPU. Any security mechanism and any hypervisor mechanism are invisible to the SMP HLOS. A minor FIQ (Fast interrupt request) latency introduction has negligible effect on the SMP HLOS performance.

Each interrupt line from the 96 possible interrupt lines is tagged to the Public Normal, Public Virtual, Secure Normal or Secure Virtual mode. The Security zone mechanism (SZ) traps any FIQ in Monitor Mode. The Monitor code is written to identify to which category (Public Non-virtual, Public Virtual, Secure Non-virtual or Secure Virtual) the FIQ belongs. To do this, the Monitor code reads the Interrupt Handler 2720 qualifier MreqSecure (Secure or Public FIQ) and then reads the SSM 2460 (5030) qualifier MreqSystem (Non-virtual or Virtual). Using the identified mode information, the Monitor code switches operations to a specific processor.

In some embodiments, the security zone mechanism is implemented on all CPUs of the cluster. The Secure Kernel and its secure services run specifically on CPU0, which operates as a master CPU. CPU0 is the first CPU core to boot and to setup or configure the hypervisor structure. CPU cores other than CPU0 have a small secure kernel that includes a Monitor Mode implementation to forward SMI/WFI (Software Monitor Interrupt SMI or Wait for Interrupt WFI). SMI/WFI are generated by a virtual OS kernel (WinCE, RTOS) as Secure fast interrupt SFIQ. SFIQ is coupled to the secure hypervisor in Monitor Mode operating on the master CPU0 core, which executes or drives hypervisor scheduling. The hypervisor scheduling on master CPU0 core is unnecessary on the other CPU cores, which simplifies this embodiment. The Security Monitor bus SECMON interface is accessible by the SSM 2460 (5030) for all the CPU cores. Wait for Interrupt WFI instruction is trapped into Monitor Mode as a SWI software interrupt exception, if and as-configured on a CPU-specific basis.

All WDtimers and Timers operate in a synchronous mode, and are either synchronous at the same clock rate or clock frequency or run at clock rates that are exact multiples of each other and have coinciding clock edges at the lower or lowest clock rate. All WDtimers and Timers are programmable by CPU0 to support the hypervisor scheduling. (WD is watchdog.)

FIG. 32 shows a dual-core embodiment that has the same one SMP HLOS running on all CPU cores. Each CPU has SSM hardware and Monitor code to constitute a hardware-supported hypervisor. The hypervisor shares its bandwidth between the SMP HLOS and another world in the following way. CPU0 is shared between SMP HLOS and Secure Environment using the security zone mechanism. CPU1 is shared between SMP HLOS and Modem RTOS and a Public HLOS (e.g., WinCE operating system, non-real-time or other operating system) using the security zone mechanism plus SSM hardware hypervisor structuring.

In each world there is a small secure service routine for transmitting a secure service request to CPU0 wherein the Monitor Mode is located in the Secure environment of CPU0 and provides hypervisor operation.

FIG. 33 shows an overview of a four-CPU embodiment having the same one SMP HLOS running on all four CPU cores indexed by index i. Each CPUi has hardware-supported hypervisor to share its bandwidth between the SMP HLOS and another world in the following manner. CPU0 is shared between SMP HLOS and Secure Environment using a security zone mechanism. CPU1 is shared between SMP HLOS and Modem RTOS using a security zone mechanism plus SSM hardware hypervisor structuring. CPU2 is shared between SMP HLOS and Public HLOS using security zone mechanism plus SSM hardware hypervisor structuring. CPU3 is shared between SMP HLOS and drivers such as non-GPL drivers using security zone mechanism plus SSM hardware hypervisor structuring.

Expanding on Fig. 32, each CPU of FIG. 33 has a small amount of secure code for transmitting a secure service request SFIQ to CPU0 where the Monitor Mode is located in the Secure environment of CPU0 and provides hypervisor operation. The hypervisor operation and hardware support by SSM ensure the security robustness of the virtual modes. Each of the cores CPU0-3 has a respective Security Monitor bus (SECMON), a pipeline, and circuitry for establishing various privilege modes such as some or all of Monitor, Supervisor, System, FIQ mode, IRQ mode, Abort mode, Undefined mode, and a non-privilege mode such as a User mode.

In FIGS. 34A and 34B, a four-CPU hardware-supported hypervisor embodiment 5000 of FIG. 33 is shown in more detail. FIGS. 34A/34B can be compared with and supplemented by the embodiments shown in FIGS. 38A/38B and FIGS. 6, 8, 9, 19, and 20 and other description elsewhere herein. Non-virtual Public HLOS and Non-Virtual Secure Kernel run in the system as coherent and shared devices with MMUi (Memory Management Unit) for each of the CPUi (CPU0-3), L1$i (Level 1 Cache) for each of the CPUi (CPU0-3), and a shared Snoop Control Unit SCU 5010. Public Virtual OS or RTOS (WinCE, Nucleus, etc.) runs non-coherently and as a not-shared device with an MMU.

The Interrupt architecture, for example, optionally has dedicated SFIQ input. IRQ are reserved for SMP HLOS in some embodiments. Public FIQ can be used with SMP HLOS of Public Non-virtual mode. Other modes (Public Virtual, Secure Non-virtual and Secure Virtual) use exclusively Secure FIQ to preempt the SMP HLOS.

In FIG. 34A, a block called a Generalized Interrupt Handler GIC 5020 (compare Interrupt Handler 2720 of FIGS. 9A and 19) is provided to handle interrupts that can be selectively masked and routed to respective GIC Bus 0-3 ports corresponding to each of the CPU cores CPU0-3. Some embodiment do not differentiate interrupt lines activated by and assigned to Virtual modes from interrupt lines activated by and assigned by Non-virtual modes at GIC level.

Further in FIG. 34B, SSM hardware hypervisor-support circuitry 5030 includes registers 5035 and logic for a Virtual Checker 5045, a Physical Checker 5055, and a Virtual Modes Creator 5075. See FIGS. 9A/9B for SSM circuitry that is suitably used for each CPUi and replicated per-CPU as appropriate for the system of FIGS 34A/34B. Registers 5035 include virtual processor-related registers for each virtual processor x to be used. These are respectively designated VPx_Debug_Dis for debug disable, VPx_NS for virtual processor-specific secure state or non-secure state, VPx_Active for active or inactive status, and VPx_Boundaries for begin/end addresses to define address space(s) assigned to the virtual processor indexed x. These registers are used to activate and define each virtual processor.

In FIG. 34B Virtual Checker 5045 checks that the currently-active virtual modes execute properly in their own virtual address spaces. Virtual Checker 5045 includes a CPSR_Mode switch checker and a Per-CPU Preemptive Masking circuit for each CPU0-3. Virtual Checker 5045 has inputs from CPU0-3 (index i= 0, 1, 2, 3) for CPUi_Trace_Virtual_Address, CPUi_CPSR_Mode, and CPU_CPSR_<> fields or bits CPSR_I for masking interrupts IRQ, CPSR_F for masking fast interrupts FIQ, and for External Abort EA. Virtual Checker 5045 has four outputs coupled to GIC 5020 of FIG. 34A. The outputs signify fast interrupt mask enables CPUi_FIQMASK and pertain respectively to the several CPU i.

Also in FIG. 34B, an Error Generator 5050 receives an Abort request SRESP from the Physical Checker 5055 in the same clock cycle in which a physical check violation occurs. Physical Checker 5055 checks that the virtual processors execute properly in their own physical address space and that other running cores are not injecting data or code into address spaces reserved for other virtual processors that are running or not. Error Generator 5050 is coupled to a Read channel and a Write channel of one or more functional buses emanating from SCU 5010 of FIG. 34B.

In the embodiment of FIG. 34B, the Read channel and Write channel are coupled via Error Generator 5050 to a level-two cache L2$ 5060. Physical checker 5055 checks the address and other signals on the Read channel and Write channel on the L2$ side of the Error Generator 5050. L2$ 5060 is further coupled to a bus interface MPU2BUS 5065.

Virtual Modes Creator 5075 protects and generates respective CPU-specific MreqSystemX qualifiers for each CPU indexed X. For example, if three (3) worlds are identified (HLOS, RTOS), then two (2) MreqSystemX qualifiers are provided to interface MPU2BUS 5065 on the same clock cycle in which the debug status arises. For virtual modes that have debug activated in registers 5035, the Virtual Modes Creator 5075 generates an MreqDebug qualifier and conveys it to interface MPU2BUS 5065 on the same clock cycle in which the debug status arises.

In FIG. 34B, the MreqSystemX qualifiers together with qualifiers MreqType, MreqPrivilege, MreqDebug, MreqSecure are relayed or generated by interface MPU2BUS 5065 and sent onto interconnects 5070 for each virtual processor or OS along with bus addresses and data and other bus control lines. Interconnects 5070 are coupled to various Firewalls 5080A, B,...Z and are further coupled to respective Timers CPUiTimer 5085.0, .1, .n respective to the various CPUs indexed i from CPU0 to CPUn. The timers 5085.i are responsive to a common clock or counter 5088.

A Security Violation Handler 5090 (compare 2760 of FIG. 9B) is responsive to any security violation(s) detected in Virtual Checker 5045, Physical Checker 5055, and Virtual Modes Creator 5075. The Security Violation Handler 5090 provides appropriate security violation response output(s) such as aborts and neutralization and delivering reset control to a PRCM 5095. In this way SSM HW Hypervisor structures the multi-CPU system to that Monitor Mode of CPU0 operates as a hypervisor.

The SSM 5030 implements all the registers and logic for providing exclusive or cooperating debug between CPUs and virtual OS (WinCE, Nucleus). The SSM 5030 differentiates for each interrupt the mode or world (Public Non-virtual, Public Virtual, Secure Non-virtual or Secure Virtual) to which the interrupt belongs.

In the GIC (Generalized Interrupt Handler) 5020 of FIG. 34A, IRQ are dedicated to SMP HLOS in an example. Public Fast Interrupt Requests PFIQ can be used by the SMP HLOS. Secure Fast Interrupt Requests SFIQ are dedicated to Secure Environment and virtual worlds. The GIC 5020 differentiates the Public or Secure nature of each interrupt via a dedicated register (compare FIG. 19) having retention flip flops identifying the Public or Secure assignment of the corresponding interrupt line. Each interrupt line that is identified or configured as Secure is also made fast interrupt FIQ. Configuration of the register is accessible only by Secure Privilege data accesses such as at Boot time.

In FIGS. 34B and 35, synchronous timer scheduling makes all CPU timers synchronous relative to each other in order to facilitate scheduling and to efficiently schedule the different worlds. Also, the timers are made configurable through an interface that is responsive to qualifier MreqSystemx, where index x on the qualifier identifies the CPUx that is attempting an access. This protects the virtual world setting from tampering.

The timers 5085.i output two interrupts per CPUi, a first interrupt for the SMP HLOS and a second interrupt for the virtual world running on the CPUi or secure mode. On a dual core or multi-core embodiment where multiple virtual worlds are evolving on a single CPUi, software is made to have only the Secure mode own the timers 5085.i (for virtual worlds). In this way, the secure hypervisor dispatches or allocates CPU bandwidth correctly between worlds.

The timers 5085.i are banked so that SMP HLOS programs its own setting. Then each virtual processor VPx or secure mode programs its respective setting into a timer bank register. The timer bank register is protected by a firewall.

In FIG. 35, the outputs of all timers 5085.i of FIG. 34B are made synchronous (aligned) relative to each other. The second interrupt for and programmed by the virtual worlds or secure mode SE is in synchronism with the SMP HLOS. The second interrupt is synchronized to occur in the middle of two SMP HLOS timer ticks. Plural full periods are also suitably left to SMP HLOS. For instance, FIG. 35 illustrates one tick every 3 ticks, but with that second interrupt occurring on the middle of two SMP HLOS ticks.

In FIG. 35, the timers for FIG. 33 are shown in an example with Master Counter 5088 ticks being twice the rate of SMP HLOS timer ticks. CPU0 receives SMP HLOS ticks 87.5% and Secure Kernel SE 12.5% in the illustration. CPU1 receives SMP HLOS ticks 50% and RTOS ticks 50%. CPU2 receives SMP HLOS ticks 75% and Public HLOS ticks 25%. CPU3 receives SMP HLOS ticks 100% in this example.

In FIG. 35 the arrows (ticks) represent fast interrupt requests FIQ in the rows of FIG. 35 below the top row. Some multi-processor system embodiments work as follows. FIQ are trapped in Monitor Mode by interrupt hardware and vectoring in MPU 2610. Each FIQ is tagged to belong to a category or world such as SMP HLOS, SE, RTOS, Public HLOS in or by the hardware of GIC 5020 and SSM registers 2620. Each FIQ occurs on the particular CPUi that governs execution of, or is assigned to execute, the category or world to which the FIQ belongs. When the FIQ is initiated (fires), that FIQ is trapped in the Monitor Mode of this particular CPUi. The Monitor Mode of the particular CPUi has code to initiate a context switch between the different categories or worlds. The category or world of execution of the particular CPUi can usually mask only the FIQ belonging to that category or world, with some possible exception as described elsewhere herein, refer to TABLE 42. Consequently, the Monitor code of control core CPU0 can allocate accurate bandwidth (e.g., MIPS of each processor core CPUi) for each category or world.

In the banked-timers section, the Master Counter is the principal counter. The other counters service the CPUs respectively and are derived from the Master Counter. The multi-CPU system establishes the arrow percentages (SMP 50%, RTOS 50%, etc.) as follows. The Hypervisor code running in the Monitor Mode of the first core CPU0 accesses the timer of every core CPU0-CPUn and defines or establishes by configuration of the timer percentage values according to the different bandwidths required. Secure privilege access is suitably used to establish the timers configuration. This bandwidth requirement depends on power consumption estimation and power constraints and bandwidth (e.g., MIPS millions of instructions per second) required per software application.

The timer configuration of percentages is static or dynamic, or both static and dynamic. In some embodiments, a hardware feedback loop is provided to establish optimization and bandwidth allocation.

FIG. 36 shows an example of interrupt priority settings. GIC 5020 has a register called an SFIQ Prioritization register to prioritize each secure FIQ relative to other secure FIQ. Another GIC 5020 register called an Interrupt Prioritization register prioritizes each secure FIQ against public FIQ /IRQ. These GIC 5020 prioritization registers are accessible only in secure privilege mode, such as at boot time, in this example.

A default configuration suitably makes all SFIQ higher priority than PFIQ/IRQ as shown in the left two columns of FIG. 36. Notice that the lowest interrupt priority level of a secure FIQ (e.g., that of SFIQ 13) exceeds the highest interrupt priority level MAX PFIQ/IRQ configured for any Public FIQ (e.g., PFIQ 8, 9, 7) or other interrupt IRQ (e.g., IRQ 56).

SFIQ priority is downgraded as shown in the right two columns of FIG. 36 as appropriate. To downgrade the SFIQ priority, configure the GIC Interrupt Prioritization register to equal or less than a priority of some PFIQ and IRQ. In the illustration, SFIQ 15, SFIQ 16 and SFIQ 13 retain the same priority relationship to each other but now SFIQ 16 is between PFIQ 8 and PFIQ 9 in priority and SFIQ 13 has a lower priority than that of IRQ 56.

In FIG. 37, SSM provides Public FIQ pre-emptive masking for hypervisor control over SMP HLOS and virtual worlds. Automatic handling for SMP HLOS is completely hardware driven when an Automatic option bit is activated. Otherwise, Manual handling is provided for virtual worlds in the sense that the handling is software-driven in Monitor Mode because the number of virtual worlds that can be running concurrently is subject to variation and is not predetermined. The embodiment of FIG. 37 can also be compared to that of FIG. 19 and each may be used to supplement the other. Compare Manual handling of FIG. 37 with Monitor Mode method of FIG. 19.

In FIG. 37, the SSM has an Entry Condition hardware block 5110, Manual/Auto hardware block 5120, Flag/Mask hardware block 5130, and a Flag hardware block 5140 structured to do operations specified as follows in TABLE 38, for an example.

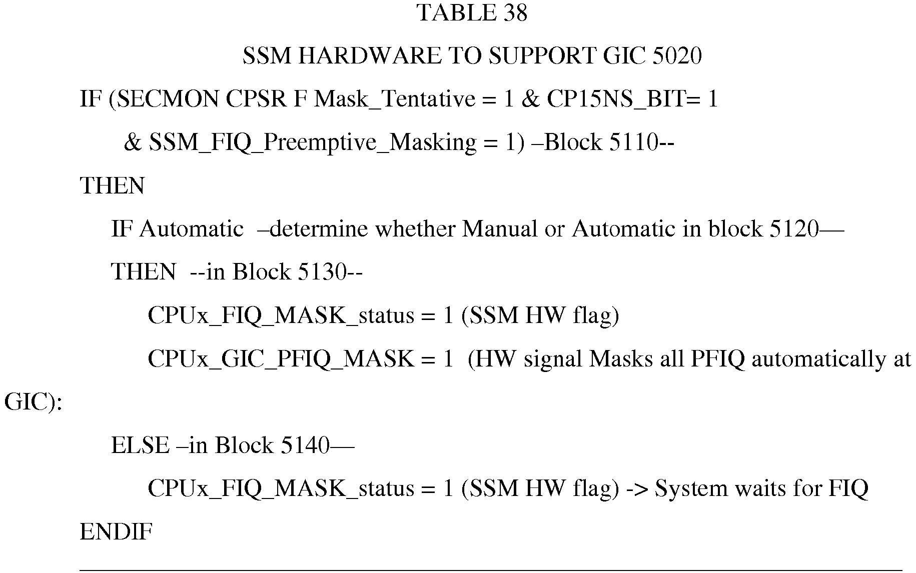

Upon an SFIQ event from Flag block 5140, operations go a Monitor software Mask/Unmask block 5150. Otherwise, if no SFIQ event, operations go to an Entry Condition hardware block 5170. Blocks 5150 and 5160 are performed in the Monitor Mode software in this example. Mask/Unmask Process block 5150 operates as in TABLE 39 on FIQ trapped into Monitor Code:

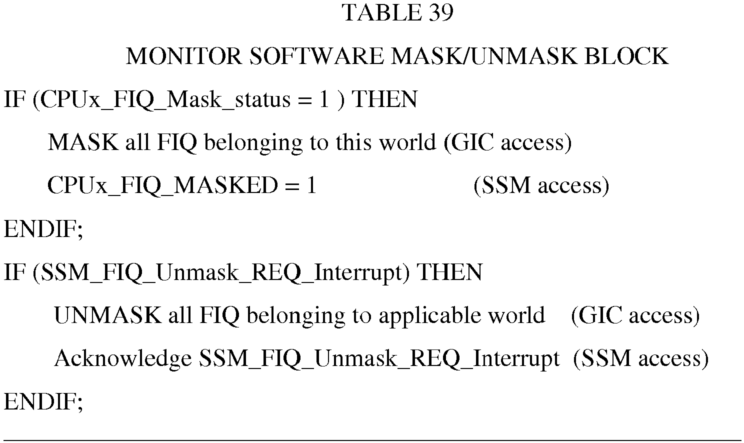

In Flag/Mask block 5130 if there is an occurrence called a PFIQ event corner case introduced by GIC sorting time, then operations go to a Corner Process monitor software block 5160 and use NEWFIQAGR, otherwise to the Entry Condition hardware block 5170. In such corner case, the PFIQ in the GIC sorting process cannot be masked and consequently trapped. Corner Process block 5160 in the Monitor Mode software code operates as follows upon such occurrence of a PFIQ Corner case:

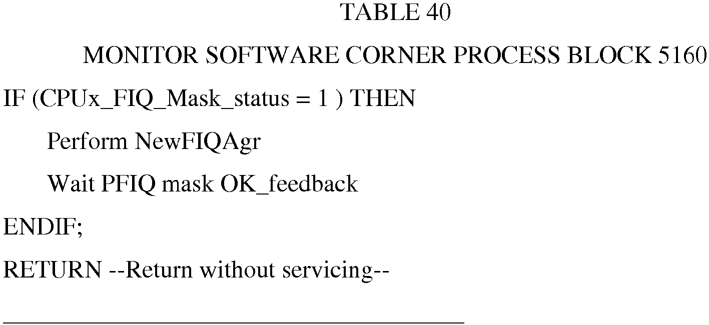

The SSM 5030 has hardware blocks for Entry Condition 5170, Manual/Automatic 5175, Mask Status/Unmask 5180, and Mask Status/Unmask 5190. Entry Condition block 5170 has a structure defined as follows:

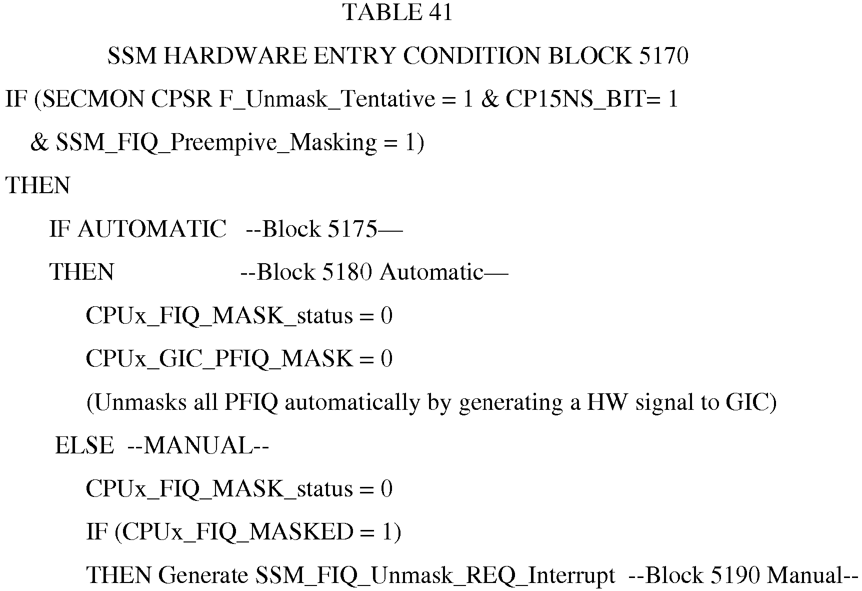

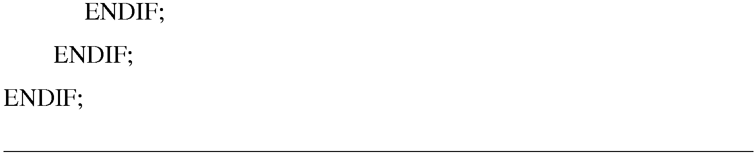

Further, in addition to the SSM PFIQ pre-emptive masking above, GIC 5020 also supports SSM Public (NS =1) FIQ pre-emptive masking capability. An input hardware bit or field GIC_PFIQ_MASK is provided. When this bit or field is set active, GIC 5020 masks all Public FIQ that can occur on this specific CPU core (enforcement analogous to PFIQ CPSR F enable). GIC 5020 provides an OK_Feedback readable by Secure Privilege software, SFIQ are still active. When the GIC_PFIQ_MASK is inactive, GIC 5020 unmasks all public FIQ that can occur on this specific core (analogous to PFIQ CPSR F disable). GIC 5020 clears the OK_Feedback, which is readable by secure privilege SW, and both PFIQ and SFIQ are active. Signals CPUx_GIC_PFIQ_MASK for each CPUi in a multi-processing embodiment are established and are configured and reset by Secure Privilege software.

Implementing PFIQ and SFIQ input at each CPUi core boundary, for example, provides an uncomplicated architectural approach. This provides interrupt virtualization wherein CPSR F Disable/Enable applies only on PFIQ input when operations are in Public mode. The GIC 5020 routes all FIQ marked as Public to PFIQ and all FIQ marked as Secure to SFIQ.

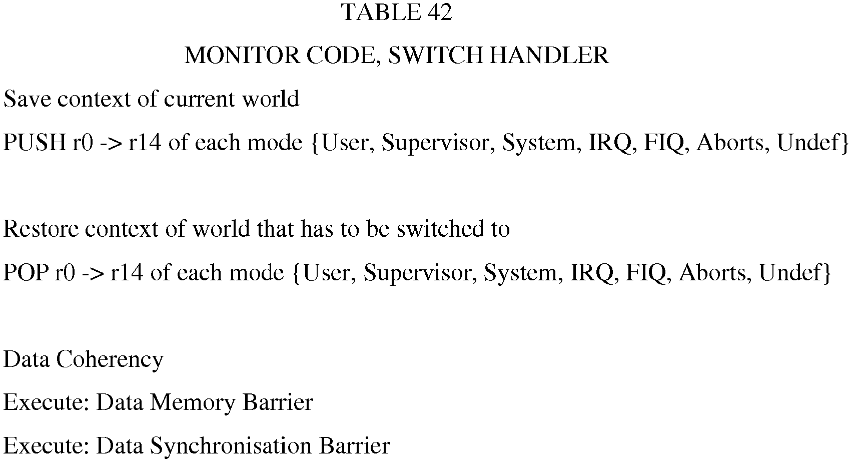

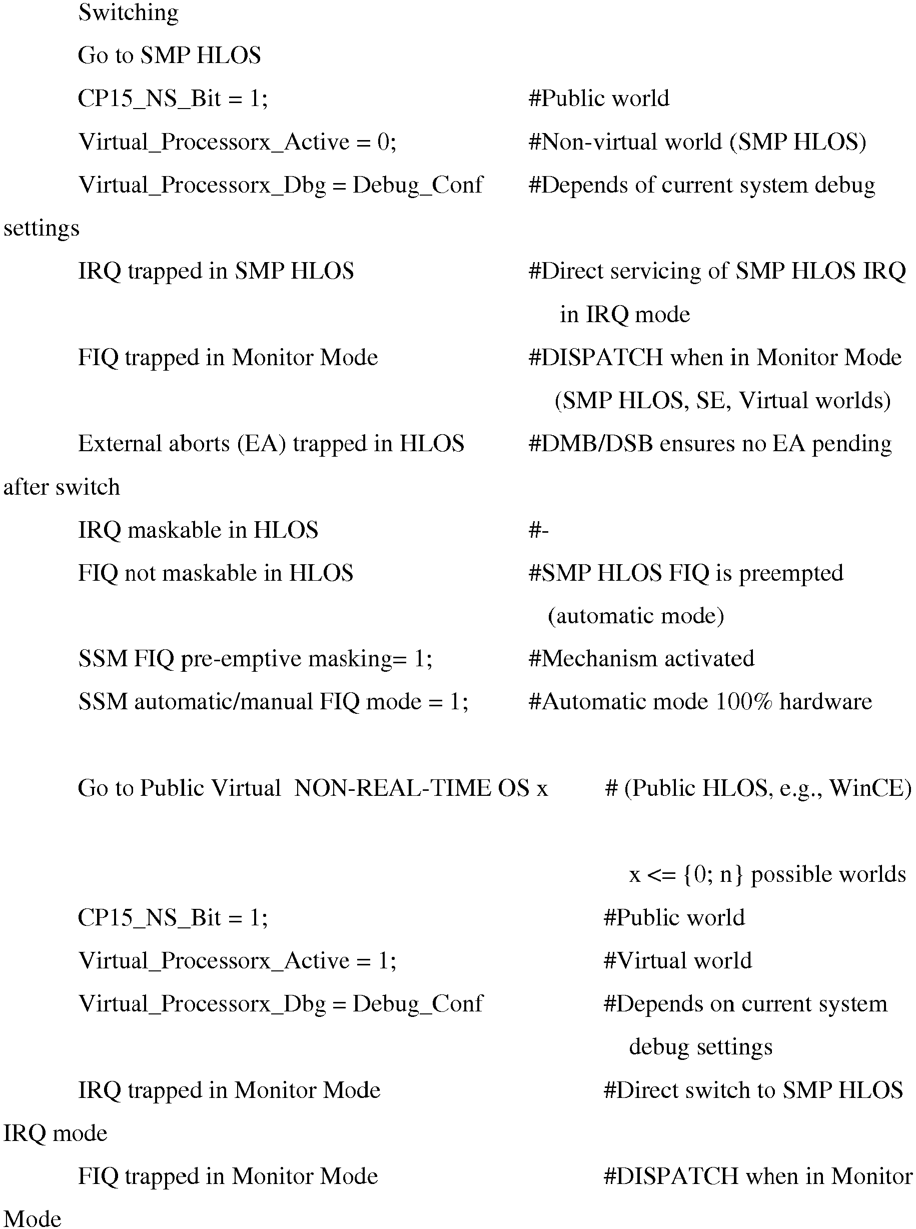

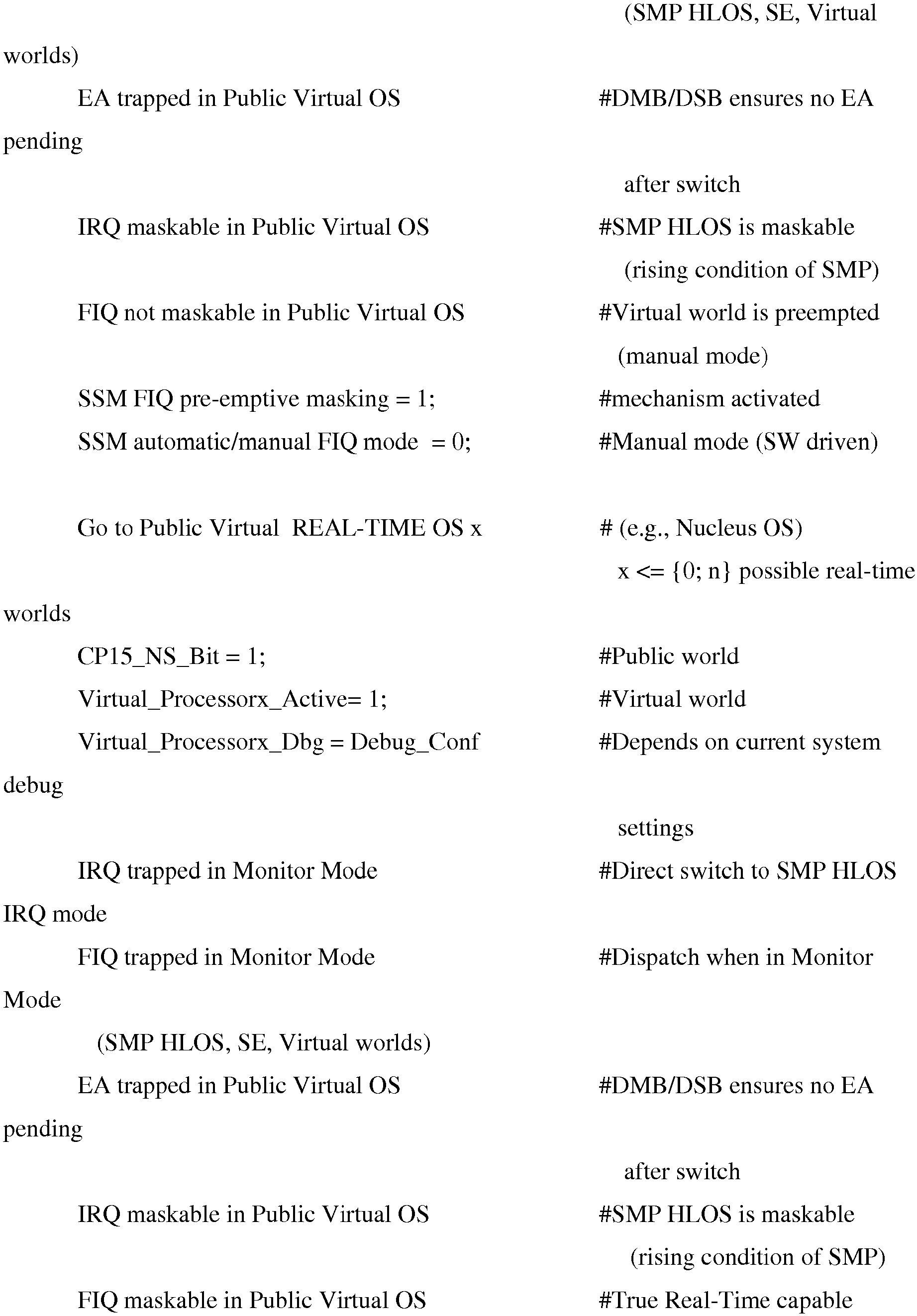

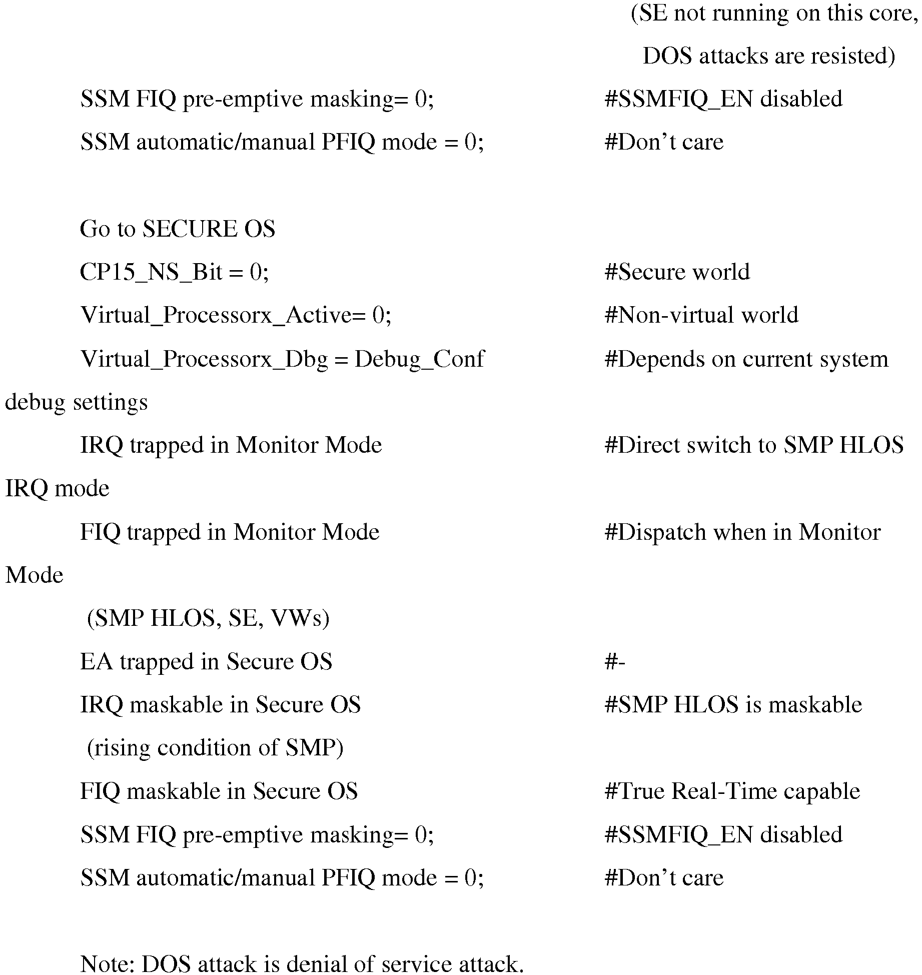

CPU core for hypervisor worlds debug does run time activation of DBGEN and NIDEN in a less time-consuming way with automated coherency micro-code execution.

CPU core for SSM hardware-support for hypervisor implements hypervisor world security by adding CPSR F bit tentative masking that is then sent out on the SECMON bus. The Snoop Control Unit SCU 5010 distinguishes which CPUi has issued the current access. SCU 5010 propagates coherent shared data into the caches associated with the other CPUs. SCU 5010 ensures data coherency between all level-one caches L1$i of the cores CPUi as a cluster by moving/updating any updated instruction cache line and any updated data cache line from the cache area associated with any one CPUi to the caches of all the CPUs, i.e., all the cores in the cluster.

SCU 5010 is coupled to and cooperates with the multi-core hypervisor using an enable/disable circuit in SCU 5010 that operates as an asymmetric mode switch configurable by core CPU0 at run-time in an auxiliary control register. In that way, the core CPU0 that runs the hypervisor operates or disables the SCU 5010 so as to exclude accesses of the core CPU0 pertaining to the hypervisor process from being used to update cache lines for all the other CPUi. In other words, certain hypervisor-related accesses are selectively prevented from being taken into account by the SCU 5010 by turning off the snooping and cache line updating by SCU 5010 when hypervisor needs to disable those operations. This facilitates isolation of the hypervisor in CPU0 from the rest of the multi-core system. In this way SCU 5010 acts as an example of a cache control circuit for updating coherency between the caches. The protective circuitry of SSM 5030 is responsive to a line from CPU0 indicating that Monitor Mode is activated in CPU0 to temporarily disable the cache control circuit from updating coherency between the caches.

Enable and disable of the symmetric coherent or asymmetric not-coherent configuration per CPUi is established, for example, by configuring an auxiliary control register asymmetric field on each CPUi of the cluster. When the asymmetric field is configured active on each core CPUi, then each transaction issued by the MMU stage of the respective core CPUi to its L1$i cache and then to SCU 5010 is tagged with in-band qualifier MreqNCoherence that commands or controls the SCU 5010 to not maintain coherency on these accesses. In some embodiments, the SCU 5010 outputs information pertaining to each access that tells which CPU0-3 has generated the access. In response to the information identifying which CPUi generated the access, the SSM 5030 generates the corresponding MreqSystemX qualifiers and provides the address boundary checking and configuration checking that pertain to that CPUx category or world.

The SSM 5030 implements the following added registers to support the CPU0 SMP core hypervisor. A register for CPU0 inter-CPU SFIQ generation is configurable in Secure Privilege mode. This register enables each SFIQ to occur on a configuration-specified one or more CPUs. Each SFIQ is maskable individually by Secure Privilege software configuring a dedicated Mask register.

Per-CPU virtual worlds activation and debug control is provided. Per-CPU SMI call forward to CPU0 is provided. Per-CPU Wait for Interrupt WFI call forward to the same CPU is provided. CPUi can replace this by trapping WFI into Monitor Mode analogously to trapping SMI with a dedicated exception vector.

A Flag is provided for each interrupt line to identify which virtual world the interrupt line belongs to. A Secure / Public interrupt designation is made at GIC 5020 level. SSM 5030 adds 2 bits encoding to differentiate the virtual worlds:
00 = Non-virtual
01 = Virtual world 1
10 = Virtual world 2
11 = Virtual world 3

Hypervisor control over different worlds is established using bits of TABLE 43.

**TABLE 43**

| CONTROL FIELDS FOR EACH CPU FOR MULTI-PROCESSING | |
|---|---|
| CPUn_SSM_NIDEN_Disable | When field is active, NIDEN is low at CPUn boundary |
| CPUn_SSM_DBGEN_Disable | When field is active, DBGEN is low at CPUn boundary |
| CPUn_Virtualworld_DEBUG_DIS | When field is active, SSM_DBGEN_Disable and |
| | SSM_NIDEN_Disable are set active before entering |
| | the Virtual world and reset to previous value before exiting. |
| CPUn_Virtualworld_Active | When field is active, CPUn is virtual |

Hypervisor control over the different categories and CPU cores is implemented, for example, as follows: When each particular low-active field is cleared (active), an interrupt is generated. When the interrupt is acknowledged, the particular field is automatically set inactive. Default value is inactive high. The _DEBUG_DIS fields are read-only, while the other TABLE 43 fields are Read or Write accessible. All the following are Read or Clear accessible: CPU<1/2/3>_inter-CPU_SFIQ, and CPU<1/2/3>_SMI_SFIQ.

In FIGS. 38A/38B, a multi-processor core virtualization architecture embodiment is shown. Switching from the different worlds or categories on CPU cores is done only through the Monitor Mode, which acts as a hardware-supported hypervisor.

In FIG. 38A, Timers 5805.i for each CPUi are suitably provided as dual synchronous output banked timers responsive to Master Counter 5088. GIC 5020 routes interrupts, as indicated by an example arrow therein. GIC 5020 provides visibility into the routing process such as which interrupts are being routed, from which context and CPU each interrupt comes, and to which context and CPU each interrupt goes.

Further in FIG. 38A, the SSM 5030 provides CPUi {0, n} inter-CPU and CPU0 WFI SFIQ generation (Wait for Interrupt, Secure Fast Interrupt reQuest) via respective lines from the SSM 5030 to GIC 5020. For each CPUi {0, n}, SSM 5030 provides NS = 1 FIQ preemptive masking by a PFIQ masking command line to GIC 5020 and a PFIQ masking feedback status line for each CPU{0,n} from GIC 5020 to SSM 5030.

For each respective CPUi other than CPU0, SSM 5030 performs CPUi SMI forward to CPU0 along a line for SMI CPU0 request to the interrupt handler via GIC 5020. For each respective CPUi other than CPU0, SSM 5030 performs CPUi WFI SFIQ generation along a line for WFI request via GIC 5020 to the interrupt handler for CPU0.

In FIG. 38A, Monitor Mode code is provided for every CPU0-CPU3. From each CPUi and via GIC 5020 to Monitor Mode for each CPU0-CPU3 in this example, each fast interrupt FIQ is always trapped into the Monitor Mode, and each interrupt IRQ for Virtual and Secure worlds is always trapped into Monitor Mode. External Abort EA is not trapped in Monitor Mode. In other respects, the cores CPU1, CPU2, CPU3 suitably are provided with Monitor Mode code analogous to each other. The core CPU0 has somewhat different Monitor Mode code compared to the Monitor Mode code of the other cores CPU1, CPU2, CPU3.

For core CPU0, the Monitor Mode code controls the CP15_NS_Bit (SCR bit/field []) by setting it active or inactive for transitions from Secure to Public or Public to Secure worlds respectively. CPU0 Monitor Mode code inactivates another bit/field CPU0_VirtualWorld_Active to establish Non-virtual mode. CPU0 Monitor Mode code generates CPU1_SFIQ inter-CPU FIQ for extra scheduling to the other cores CPU1, CPU2, CPU3.

For cores CPUi other than CPU0, the Monitor Mode code i in the respective CPUi controls the CP15S_NS_Bit (SCR bit/field []) in CPUi by setting it active or inactive to establish Public world or Secure world in that CPUi depending on the Public or Secure operations configured or commanded for that CPUi by CPU0 and the SSM 5030. In CPUi, another bit/field CPUi_VirtualWorld_Active is inactivated or activated to establish Non-virtual mode or Virtual mode depending on the Non-virtual or Virtual operations configured or commanded for that CPUi by CPU0 and the SSM 5030.

In FIGS. 38A/38B, SSM 5030 (and Control Module analogous to 2765 associated with SSM 5030) is bidirectionally coupled to each CPU0-CPU3 of FIG. 38B by Virtual Activation blocks 5310 of SSM 5030. In an example configuration of CPU0, Public or Secure mode is defined by NS=1 or 0 and CPU0_VirtualWorld_Active is inactivated in both the Public and Secure modes. In an example configuration of the cores CPUi other than CPU0, Public or Secure mode is defined by NS=1 or 0 and CPU0_VirtualWorld_Active is inactivated or activated depending on the desired category of operation of FIGS. 4, 33 and 38B.

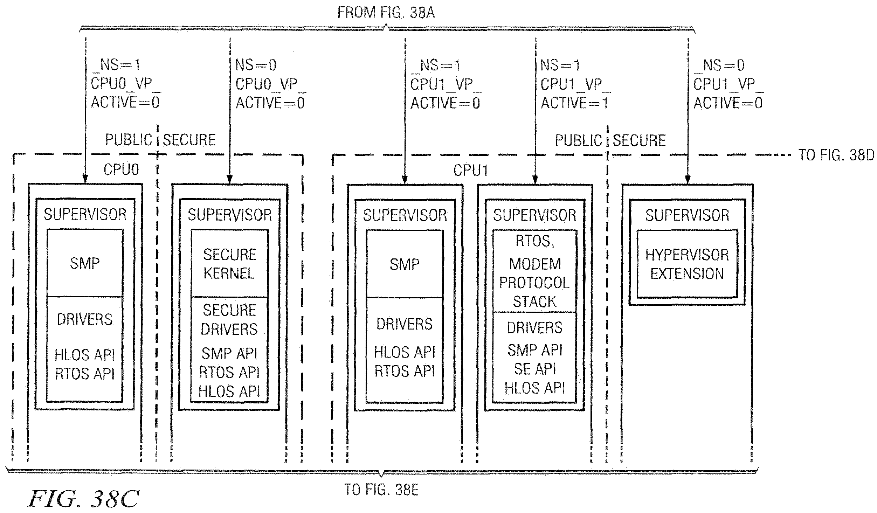

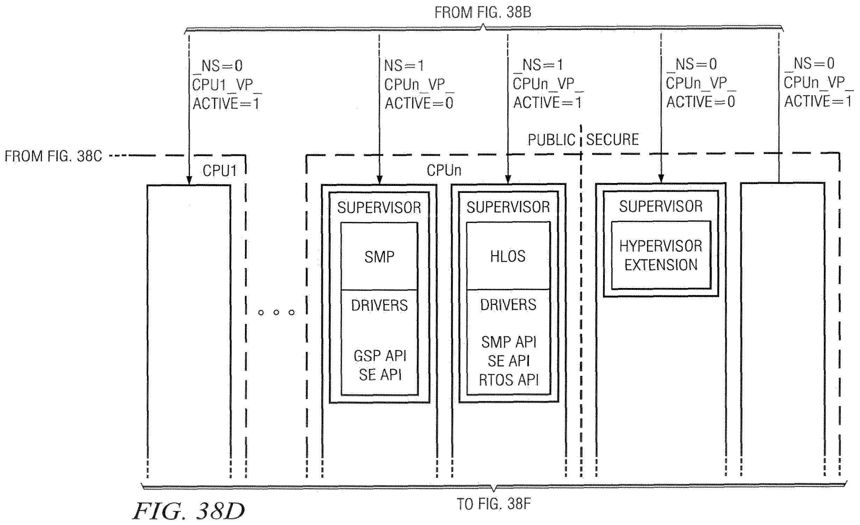

In FIGS. 38C/38D, the categories of operation of each CPUi in the multi-processing system are shown. In CPU0, the SMP HLOS Kernel and its Kernel Drivers and APIs operate in Public Supervisor mode. A SE API for interface to Secure Environment, and a real-time operating system RTOS API, and Public high-level operating system Public HLOS API are all provided for operation in the Public Supervisor mode of CPU0. In the Secure Supervisor mode of CPU0, a Secure Kernel operates and has associated Secure Drivers and interfaces to the SMP HLOS, the RTOS, and the Public HLOS through SMP API, RTOS API, and Public_HLOS_API respectively.

Further in FIG. 38C, for example in CPU1, the SMP HLOS Kernel and its Kernel Drivers and APIs operate in Public Supervisor mode in Public Non-virtual category of FIG. 4. A SE API for interface to Secure Environment, a real-time operating system RTOS API, and Public high-level operating system Public HLOS API are each provided for operation in the Public Supervisor, Non-virtual mode in CPU1. In the Public Supervisor mode of CPU1, but with CPU1_VP_Active activated for Virtual mode operation of CPU1, the RTOS Kernel and Modem Protocol Stack PS operates and have associated Kernel Drivers and interfaces to the SMP HLOS, to the Secure Environment, and to the Public HLOS through SMP API, SE API, and Public_HLOS_API respectively. Secure Supervisor Non-virtual category in CPU1 is used for hypervisor extensions in some further embodiments. Secure Supervisor Virtual category in CPU1 is used for a Secure Virtual Kernel SVK in some further embodiments.

Further in FIG. 38D, for example in CPU3, the SMP HLOS Kernel and its Kernel Drivers and APIs operate in Public Supervisor mode in Public Non-virtual category of FIG. 4. A SE API for interface to Secure Environment, and a GSP API are each provided for operation in the Public Supervisor, Non-virtual mode in CPU3. Modem Protocol stack (PS) layers include OS tasks that communicate using messages via queues. The GSP API is used to support and provide the messaging services to the PS and a modem AT Command Interface (ACI) and to abstract from different operating systems the PS can run on.

In the Public Supervisor mode of CPU3, but with CPU3_VP_Active activated for Virtual mode operation of CPU3, the Public HLOS Kernel operates and has associated Kernel Drivers and interfaces to the SMP HLOS, to the Secure Environment, and to the RTOS through SMP API, SE API, and RTOS API respectively. Secure Supervisor Non-virtual category in CPU3 is used for Hypervisor extensions in some further embodiments. Secure Supervisor Virtual category in CPU3 is used for a Secure Virtual Kernel SVK in some further embodiments.

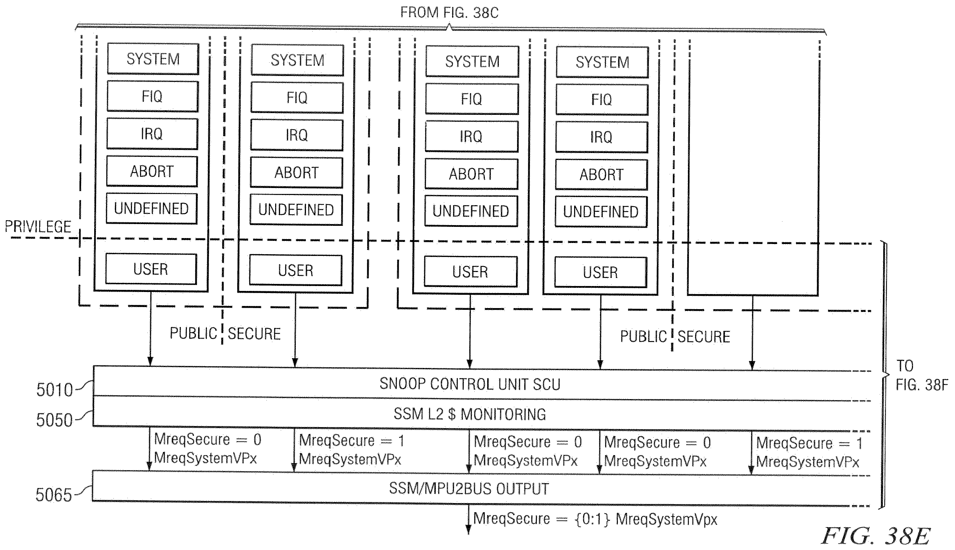

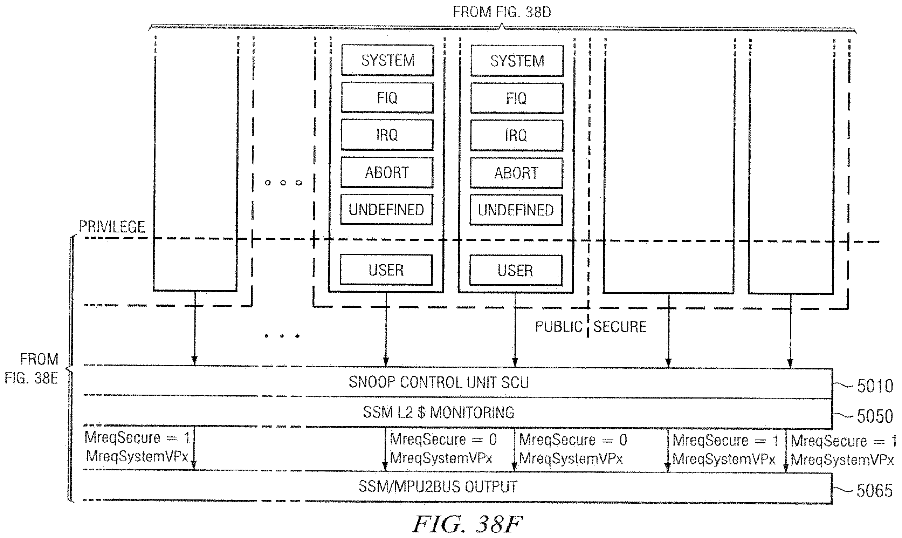

In FIG. 38E/38F, each of the cores CPU0-CPU3 in each of the categories of operation thereof is coupled to the Snoop Control Unit SCU 5010. SCU 5010 is coupled to L2 Cache monitoring 5050. The current categories of operation of each CPUi are communicated along with attempted accesses asserted by SSM 5030 and interface MPU2BUS 5065 output to interconnect and firewalls of the system (see FIGS. 18 and 34B). The qualifier MreqSecure is 0 or 1 for Non-secure or Secure mode from the accessing CPUi. ={0 ;1} The x-indexed qualifier for Virtual world or context MreqSystemVPx is 0 or 1 for Non-virtual or Virtual mode from the accessing CPUi.

### DESIGN, VERIFICATION AND FABRICATION

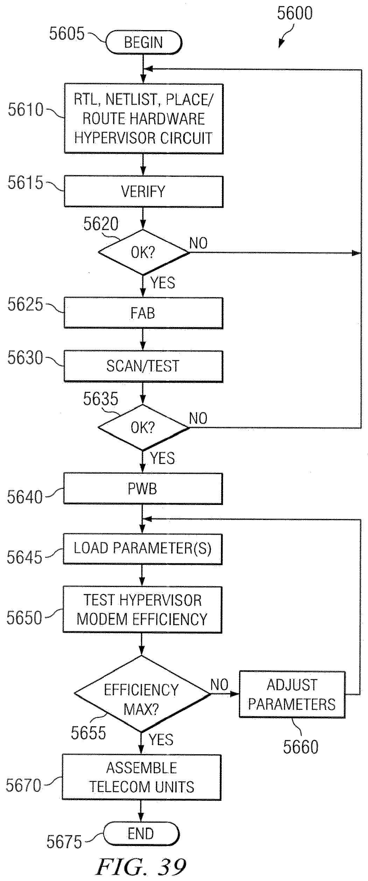

In FIG. 39, various embodiments of an integrated circuit improved as described herein are manufactured according to a suitable process of manufacturing 5600 as illustrated in the flow of FIG. 39. The process begins at step 5605 and a step 5610 preparing RTL (register transfer language) and netlist for a particular design of one or more integrated circuits or a system as shown in one or more of the Figures of drawing herein as some examples and alternatives, and/or as described in the detailed description herein.

In a step 5615, the design of the hardware-supported hypervisor circuitry, for instance, is verified in simulation electronically on the RTL and netlist. In this way, the contents and timing of the registers, operation of the circuits in various configurations and using the registers, are verified and the firewalls and interrupt operation are verified. The operations are verified pertaining to real-time and non-real-time operations and interrupts, and transitions through handlers, Monitor Mode, Secure Privilege modes, User mode, Debug modes, power management, and various attack scenarios. Then a verification evaluation step 5620 determines whether the verification results are currently satisfactory. If not, operations loop back to step 5610.

If verification evaluation 5620 is satisfactory, the verified design is fabricated in a wafer fab and packaged to produce a resulting integrated circuit at step 5625 according to the verified design. Then a step 5630 verifies the operations directly on first-silicon and production samples by using scan chain methodology on the page processing circuit. An evaluation decision step 5635 determines whether the chips are satisfactory, and if not satisfactory, the operations loop back as early in the process such as step 5610 as needed to get satisfactory integrated circuits.

Given satisfactory integrated circuits in step 5635, a telecommunications unit based on teachings herein is manufactured. This part of the process first prepares in a step 5640 a particular design and printed wiring board (PWB) of the telecommunication unit having a telecommunications modem, a microprocessor coupled to the telecommunications modem, a secure hardware support for a hypervisor coupled to the microprocessor and peripherals and firewalls for the peripherals, and a user interface coupled to the microprocessor. Storage, such as SDRAM and Flash memory and on-chip secure memory, is coupled to the system and is provided with RTOS, Public HLOS, protected applications (PPAs and PAs), and Monitor Mode software.

The particular design of the hardware-supported hypervisor is tested in a step 5650 by electronic simulation and prototyped and tested in actual application. Operation of the circuits and using the registers in various configurations selectively activating fields of TABLE 19 in Firewall_Controller register, for instance, are verified and the firewalls and interrupt operation are verified to confirm operations of the integrated circuit(s) and system and to perform verification and test operations that go beyond those operations earlier in the process. The verification and test operations pertaining to real-time and non-real-time operations and interrupts, and transitions through handlers, Monitor Mode, Secure Privilege modes, User mode, Debug modes, power management, various real-time scenarios such as modem operational scenarios. Further testing evaluates and confirms system stability and satisfactory operation of display, phone, e-mails/data service, web browsing, voice over packet, content player, camera/imaging, video, microcontroller, and other such operation that is apparent to the human user and can be evaluated by system use. Also, various attack scenarios are applied in the test operations, such as by using real viruses, DoS attacks and other attacks.

Parameters of the circuitry, software and system are adjusted for in faster application execution, lower power dissipation, evaluation of system use, attack resistance, and other pertinent metrics. Examples of parameters include enable/disable fields in configuration registers of SSM Registers 2620 and Control Module 2765, interrupt priorities in FIGS. 19 and 36, and mode hierarchy in FIG. 21. If further increased efficiency is called for in step 5655, then adjustment or reconfiguration of the parameter(s) is performed in a step 5660, and operations loop back to reload the parameter(s) at step 5645 and do further testing. When the testing is satisfactory at step 5655, operations proceed to step 5670.

In manufacturing step 5670, the adjusted parameter(s) are loaded into the Flash memory or otherwise established in the integrated circuit(s) of the system. The components are assembled on a printed wiring board or otherwise as the form factor of the design is arranged to produce resulting telecommunications units according to the tested and adjusted design, whereupon operations are completed at END 5675.

Various embodiments are used with one or more microprocessors, each microprocessor having a pipeline is selected from the group consisting of 1) reduced instruction set computing (RISC), 2) digital signal processing (DSP), 3) complex instruction set computing (CISC), 4) superscalar, 5) skewed pipelines, 6) in-order, 7) out-of-order, 8) very long instruction word (VLIW), 9) single instruction multiple data (SIMD), 10) multiple instruction multiple data (MIMD), 11) multiple-core using any one or more of the foregoing, and 12) microcontroller pipelines, control peripherals, and other micro-control blocks using any one or more of the foregoing.

Various embodiments are implemented in any integrated circuit manufacturing process such as different types of CMOS (complementary metal oxide semiconductor), SOI (silicon on insulator), SiGe (silicon germanium), organic transistors, and with various types of transistors such as single-gate and multiple-gate (MUGFET) field effect transistors, and with single-electron transistors and other structures. Photonic integrated circuit blocks, components, and interconnects are also suitably applied in various embodiments.

References to "monitor mode" refer to a high-level control mode of a processor and should be understood in a broad and substantial sense whether or not a particular processor that substantially has a monitor mode lacks the explicit name monitor mode, for instance.

Processing circuitry comprehends digital, analog and mixed signal (digital/analog) integrated circuits, ASIC circuits, PALs, PLAs, decoders, memories, non-software based processors, microcontrollers and other circuitry, and digital computers including microprocessors and microcomputers of any architecture, or combinations thereof. Internal and external couplings and connections can be ohmic, capacitive, inductive, photonic, and direct or indirect via intervening circuits or otherwise as desirable. Implementation is contemplated in discrete components or fully integrated circuits in any materials family and combinations thereof. Various embodiments of the invention employ hardware, software or firmware. Process diagrams herein are representative of flow diagrams for operations of any embodiments whether of hardware, software, or firmware, and processes of manufacture thereof.

While this invention has been described with reference to illustrative embodiments, this description is not to be construed in a limiting sense. Various modifications and combinations of the illustrative embodiments, as well as other embodiments of the invention may be made. The terms "including", "includes", "having", "has", "with", or variants thereof are used in the detailed description and/or the claims to denote non-exhaustive inclusion in a manner similar to the term "comprising". It is therefore contemplated that the claimed inventions and their equivalents cover any such embodiments and modifications.

## Claims

1. An electronic device comprising a processor having a pipeline for processing a software program, a bus coupled to the pipeline, and a storage coupled to the bus, wherein said storage comprises a real time operating system and a real-time application, a non-real-time operating system, a secure environment kernel, and a software monitor; and
the electronic device further comprises:
protective circuitry coupled to said processor and operable to establish a first signal and a second signal each having states and together having combinations of the states representing a first category for the real-time operating system and the real-time application, a second category for the non-real-time operating system, and a third category for the secure environment kernel;
wherein the processor is operable to assert a physical address on the bus and to establish secure and public modes and privileged modes including a particular privileged mode; and
an interrupt handler circuit coupled to said processor and operable to provide a first type of interrupt request and a second type of interrupt request, said processor responsive to said second type of interrupt request to activate a monitor mode; and a pre-emptive masking handler circuit coupled to said processor and to said interrupt handler circuit so that said interrupt handler circuit is responsive to mask at least one non-real-time interrupt request and responsive to provide at least one real-time interrupt request of the second type to said processor, the pre-emptive masking handler circuit, when it is enabled, is configured to operate to prevent Public Fast Interrupt Request from Public non-privileged and even privileged Public processes from contending, competing, or interfering with the operations of Monitor Mode and other Secure processes.

2. An electronic device as in claim 1, further **characterized in that** said protective circuitry is coupled to said bus and operable to generate at least one security violation signal unless a transition between the real time operating system and the non-real-time operating system includes the software monitor.

3. An electronic device as in claim 1 or 2, having modes for processing in privilege and non-privilege modes and for processing in a monitor mode, the electronic device further **characterized in that** said processor has a storage field for representing privilege mode and monitor mode, and said monitor mode is a first privilege mode and said processor has a second privilege mode; and said protective circuitry has a security storage having a first state wherein said processor is enabled in a non-secure mode and a second state wherein said processor is enabled in a secure mode, and said monitor mode is a type of secure mode, and said security circuit is further operable to generate a security violation signal if an attempt occurs in a mode other than the monitor mode to change a state of said security storage.

4. An electronic device as in claim 1 or 2, the electronic device further **characterized in that** said storage has a first state wherein the pipeline is enabled to process the software program and said storage having a second state establishing a monitor mode wherein the pipeline is enabled to process the software monitor; and said protective circuitry is coupled to said bus and to said storage and operable to generate a security violation signal in response to an attempted access on said bus by said pipeline outside a predetermined address space when said storage has said second state establishing the monitor mode.

5. An electronic device as in claim 1or 2, further **characterized in** having a predetermined address space for said software monitor and said storage having a first state wherein the pipeline is enabled to process the software program and having a second state establishing a monitor mode wherein the pipeline is enabled to process the software monitor; and said protective circuitry is coupled to said bus and to said storage and operable to generate a security violation signal in response to an attempted access on said bus by said pipeline inside the predetermined address space reserved for said software monitor when said storage has said first state.

6. An electronic device as in claim 1 or 2, the electronic device further **characterized in that** said processor has modes and a security zone mechanism operable according to its own axioms for permissible and impermissible operations pertaining to the various modes; and said protective circuitry is coupled with said security zone mechanism to further restrict at least one of the permissible operations to be impermissible.

7. An electronic device as in claim 1 or 2, further **characterized in that** said processor has modes for processing in privilege and non-privilege modes and for processing in a monitor mode, and said storage for representing that said process is in the monitor mode or not and for representing at least first and second other privilege modes besides the monitor mode; and said protective circuitry is coupled to said processor and includes second storage having a first state wherein an exception trap by said processor into monitor mode is permitted and a second state wherein the exception trap into monitor mode is not permitted, and a security violation handler operable when said second storage is in the second state that does not permit exception trap into monitor mode to generate a security violation signal if a transition pertaining to monitor mode occurs in said first-named storage.

8. An electronic device as in any of claims 1-7, further **characterized in that**:
the device further includes a modem peripheral coupled to said bus to receive the asserted physical address; and
said protective circuitry is coupled to said bus and operable to activate a qualifier signal indicative of modem operation by determining whether the asserted physical address lies within a predetermined address range for modem operation and has occurred in a public mode and in the particular privileged mode.

9. An electronic device as in any of claims 1-8, further **characterized in that**
said processor pipeline is operable to execute instructions in a real-time category or a non-real-time category, the processor operable in a secure or non-secure mode and in a monitor or a non-monitor mode and further operable to generate mode signals on a secure mode line and a monitor mode line; and
said protective circuitry having a register field operable to couple first and second qualifiers to said bus wherein the first qualifier is responsive to said secure mode line and the second qualifier represents whether the processor is in the real-time category or not for a given access, and said protective circuitry further responsive to the monitor mode line to permit alteration of said register field by said processor when the processor is in the monitor mode and to prevent alteration of at least part of said register field when said processor is in a non-monitor mode.

10. An electronic device as in any of claims 1-9, for use with a processor having modes and address signals, the electronic device further **characterized in that** said protective circuitry includes:
a security violation handler;
a first checker circuit having a first checker output coupled to said security violation handler and said first checker circuit having input lines for receiving mode signals indicative of at least some of the modes and said first checker circuit having logic circuitry coupled to the input lines to detect mode transitions between the modes and activate the first checker output upon detection of a mode transition contrary to a permitted transition policy for said logic circuitry; and
a second checker circuit having a second checker output coupled to said security violation handler, said second checker circuit having second input lines for receiving mode signals indicative of at least some of the modes, said second checker circuit further having third input lines for receiving the address signals, and said second checker circuit having second logic circuitry responsive to the mode signals and to said address signals to identify attempted transactions of different modes and activate the second checker output upon detection of an attempted transaction including an address and a mode contrary to a permitted transaction policy for said second logic circuitry.

11. An electronic device as in any of claims 1-10, further **characterized in that**:
said processor is operable to assert a physical address and to establish modes including modes that are privileged or non-privileged, and secure or public;
said protective circuitry is coupled to the bus and operable to activate qualifier signals on the bus including a system qualifier indicative of a category of processor operation in response to the physical address and modes; and
said electronic device further includes a system peripheral coupled to the bus to receive the asserted physical address and a firewall circuit for granting and denying access to said system peripheral in response to different states of the qualifier signals including the states of the system qualifier.

12. An electronic device as in any of claims 1-11 further **characterized in that** said processor has modes including a high-level control mode, said electronic device further including peripherals coupled to said processor and power management circuitry dividing and controlling the electronic circuit in power domains with power events of power-up and power-down to the power domains; and
said protective circuitry having a platform status register coupled with said power domains to detect a power event and to interrupt said processor to the high-level control mode to protect information security of the electronic device.

13. An electronic device as in any of claims 1-12, further **characterized in** said processor including a plurality of processor cores each including a pipeline operable to execute instructions, at least one of said processor cores operable as a control core in a secure or non-secure mode and in a monitor or a non-monitor mode and further operable to generate mode signals on a secure mode line and a monitor mode line; and said protective circuitry is coupled to said processor, said protective circuitry operable to couple a first qualifier to said bus wherein the first qualifier is responsive to said secure mode line, the protective circuitry further having a register field coupled to said bus, the register field acting as a second qualifier for representing which of said processor cores is active for a given access, and said protective circuitry further responsive to the monitor mode line to permit alteration of said register field by said processor when said control core is in the monitor mode and to prevent such alteration when said control core is in a non-monitor mode.

14. An electronic device as in any of claims 1-13, further including a telecommunications modem circuit coupled to said processor; and a user interface coupled to said processor.

15. An electronic device as in any of claims 1-14, further **characterized in that** said processor has a first processor core operable to execute monitor software and the real-time operating system and situated with said protective circuitry on a first integrated circuit; and said processor has a second processor core operable to execute monitor software and the non-real-time operating system and situated on a second integrated circuit physically affixed and communicatively coupled to said first processor core and to said protective circuitry of said first integrated circuit.

## Patentansprüche

1. Elektronische Vorrichtung, die einen Prozessor mit einer Pipeline zum Verarbeiten eines Softwareprogramms, einen mit der Pipeline gekoppelten Bus und einen mit dem Bus gekoppelten Speicher aufweist, wobei der Speicher ein Echtzeitbetriebssystem und eine Echtzeitanwendung, ein nicht-Echtzeitbetriebssystem, einen sicheren Umgebungskernel und einen Softwaremonitor umfasst; und
die elektronische Vorrichtung ferner umfasst:
eine Schutzschaltungsanordnung, die mit dem Prozessor gekoppelt ist und betreibbar ist, ein erstes Signal und ein zweites Signal zu erstellen, die jeweils Zustände aufweisen und zusammen Kombinationen der Zustände aufweisen, die eine erste Kategorie für das Echtzeitbetriebssystem und die Echtzeitanwendung, eine zweite Kategorie für das nicht-Echtzeitbetriebssystem und eine dritte Kategorie für den Kernel für sichere Umgebungen darstellen;
wobei der Prozessor betreibbar ist, um eine physische Adresse auf dem Bus geltend zu machen und sichere und öffentliche Modi sowie privilegierte Modi, einschließlich eines bestimmten privilegierten Modus, einzurichten; und
eine Interrupt-Handler-Schaltung, die mit dem Prozessor gekoppelt und betreibbar ist, um eine erste Art von Interrupt-Anforderung und eine zweiten Art von Interrupt-Anforderung bereitzustellen, wobei der Prozessor auf die zweite Art von Interrupt-Anforderung mit der Aktivierung eines Überwachungsmodus reagiert; und eine preemptive Maskierungs-Handler-Schaltung, die mit dem Prozessor und der Interrupt-Handler-Schaltung gekoppelt ist, sodass die Interrupt-Handler-Schaltung mit der Maskierung mindestens einer Nicht-Echtzeit-Interrupt-Anforderung reagiert und mit der Bereitstellung mindestens einer Echtzeit-Interrupt-Anforderung der zweiten Art an den Prozessor reagiert, wobei die Maskierungs-Handler-Schaltung, wenn sie aktiviert ist, dazu konfiguriert ist, dahingehend zu arbeiten, zu verhindern, dass öffentliche schnelle Interrupt-Anforderungen von öffentlichen nicht privilegierten und sogar privilegierten öffentlichen Prozessen mit den Operationen des Überwachungsmodus und anderen sicherer Prozessen konkurrieren, im Wettbewerb stehen oder diese stören.

2. Elektronische Vorrichtung nach Anspruch 1, die ferner **dadurch gekennzeichnet ist, dass** die Schutzschaltungsanordnung mit dem Bus gekoppelt ist und betreibbar ist, mindestens ein Sicherheitsverletzungssignal zu erzeugen, es sei denn, ein Übergang zwischen dem Echtzeitbetriebssystem und dem Nicht-Echtzeitbetriebssystem den Softwaremonitor beinhaltet.

3. Elektronische Vorrichtung nach Anspruch 1 oder 2, mit Modi zum Verarbeiten in Privilegien- und nicht-Privilegien-Modi und zum Verarbeiten in einem Überwachungsmodus, wobei die elektronische Vorrichtung ferner **dadurch gekennzeichnet ist, dass** der Prozessor ein Speicherfeld zum Darstellen des Privilegien-Modus und des Überwachungsmodus aufweist und der Überwachungsmodus ein erster Privilegienmodus ist und der Prozessor einen zweiten Privilegienmodus aufweist; und die Schutzschaltungsanordnung einen Sicherheitsspeicher aufweist, der einen ersten Zustand aufweist, wobei der Prozessor in einem nicht sicheren Modus aktiviert ist, und in einem zweiten Zustand, wobei der Prozessor in einem sicheren Modus aktiviert ist, und der Überwachungsmodus eine Art von sicherem Modus ist, und die Sicherheitsschaltungsanordnung ferner betreibbar ist, um ein Sicherheitsverletzungssignal zu erzeugen, wenn ein Versuch in einem anderen Modus als dem Überwachungsmodus auftritt, einen Zustand des Sicherheitsspeichers zu ändern.

4. Elektronische Vorrichtung nach Anspruch 1 oder 2, wobei die elektronische Vorrichtung ferner **dadurch gekennzeichnet ist, dass** der Speicher einen ersten Zustand aufweist, wobei die Pipeline aktiviert ist, um das Softwareprogramm zu verarbeiten und der Speicher einen zweiten Zustand aufweist, der einen Überwachungsmodus herstellt, wobei die Pipeline aktiviert ist, den Softwaremonitor zu verarbeiten; und die Schutzschaltungsanordnung mit dem Bus und dem Speicher gekoppelt und betriebsfähig ist, um ein Sicherheitsverletzungssignal als Reaktion auf einen versuchten Zugriff auf den Bus durch die Pipeline außerhalb eines vorbestimmten Adressraums zu erzeugen, wenn der Speicher den zweiten Zustand aufweist, xxder den Überwachungsmodus herstellt.

5. Elektronische Vorrichtung nach Anspruch 1 oder 2, die ferner **dadurch gekennzeichnet ist, dass** sie einen vorbestimmten Adressraum für den Softwaremonitor aufweist und der Speicher einen ersten Zustand aufweist, in dem die Pipeline aktiviert ist, das Softwareprogramm zu verarbeiten, und einen zweiten Zustand aufweist, der einen Überwachungsmodus herstellt, in dem die Pipeline aktiviert ist, um den Softwaremonitor zu verarbeitena; und die Schutzschaltungsanordnung mit dem Bus und dem Speicher gekoppelt und betriebsfähig ist, um ein Sicherheitsverletzungssignal als Reaktion auf einen versuchten Zugriff auf den Bus durch die Pipeline innerhalb des für den Softwaremonitor reservierten vorbestimmten Adressraums zu erzeugen, wenn der Speicher den ersten Zustand aufweist.

6. Elektronische Vorrichtung nach Anspruch 1 oder 2, wobei die elektronische Vorrichtung ferner **dadurch gekennzeichnet ist, dass** der Prozessor Modi und einen Sicherheitszonenmechanismus aufweist, der gemäß seinen eigenen Axiomen für zulässige und unzulässige Vorgänge in Bezug auf die verschiedenen Modi betreibbar ist; und dass die Schutzschaltungsanordnung mit dem Sicherheitszonenmechanismus gekoppelt ist, um ferner mindestens einen der zulässigen Vorgänge als unzulässig einzuschränken.

7. Elektronische Vorrichtung nach Anspruch 1 oder 2, die ferner **dadurch gekennzeichnet ist, dass** der Prozessor Modi für die Verarbeitung in Privilegien- und Nicht-Privilegien-Modi und für die Verarbeitung in einem Überwachungsmodus aufweist, und dass der Speicher zum Darstellen, dass sich der Vorgang im Überwachungsmodus befindet oder nicht, und zum Darstellen mindestens erster und zweiter anderer Privilegien-Modi neben dem Überwachungsmodus; und die Schutzschaltungsanordnung mit dem Prozessor gekoppelt ist und einen zweiten Speicher mit einem ersten Zustand beinhaltet, wobei eine Ausnahmereparatur durch den Prozessor in den Überwachungsmodus zugelassen ist, und einen zweiten Zustand, in dem die Ausnahmereparatur in den Überwachungsmodus nicht zulässig ist, und ein Handler für Sicherheitsverletzungen, der betreibbar ist, wenn sich der zweite Speicher im zweiten Zustand befindet, der keine Ausnahme-Trap in den Überwachungsmodus zulässt, um ein Sicherheitsverletzungssignal zu erzeugen, wenn ein Übergang zum Überwachungsmodus in dem vorgenannten Speicher stattfindet.

8. Elektronische Vorrichtung nach einem der Ansprüche 1-7, ferner **dadurch gekennzeichnet, dass**:
die Vorrichtung ferner ein Modem-Peripheriegerät enthält, das mit dem Bus gekoppelt ist, um die festgelegte physische Adresse zu empfangen; und
die Schutzschaltungsanordnung mit dem Bus gekoppelt ist und betreibbar ist, um ein Qualifikatorsignal zu aktivieren, das den Modembetrieb angibt, indem bestimmt wird, ob die angegebene physikalische Adresse innerhalb eines vorgegebenen Adressbereichs für den Modembetrieb liegt und in einem öffentlichen Modus und in dem besonderen privilegierten Modus aufgetreten ist.

9. Elektronische Vorrichtung nach einem der Ansprüche 1-8, das ferner **dadurch gekennzeichnet, dass**
die Prozessorpipeline betreibbar ist, um Anweisungen in einer Echtzeitkategorie oder einer nicht-Echtzeitkategorie auszuführen, wobei der Prozessor in einem sicheren oder nichtsicheren Modus und in einem Überwachungs- oder einem Nicht-Überwachungsmodus betreibbar ist, um Modussignale in einer sicheren und einer Überwachungsmodusleitung zu erzeugen, und
die Schutzschaltungsanordnung mit einem Registerfeld, das zum Koppeln erster und zweiter Qualifikatoren an den Bus betreibbar ist, wobei der erste Qualifikator auf die sichere Moduslinie reagiert und der zweite Qualifikator darstellt, ob der Prozessor für einen bestimmten Zugang in der Echtzeitkategorie ist oder nicht, und die Schutzschaltungsanordnung ferner auf die Überwachungsmodus-Linie reagiert, um eine Änderung des Registerfeldes durch den Prozessor zu ermöglichen, wenn sich der Prozessor im Überwachungsmodus befindet, und um eine Änderung zumindest eines Teils des Registerfeldes zu verhindern, wenn sich der Prozessor in einem Nicht-Überwachungsmodus befindet.

10. Elektronische Vorrichtung nach einem der Ansprüche 1-9 zur Verwendung mit einem Prozessor mit Modi und Adresssignalen, wobei die elektronische Vorrichtung ferner **dadurch gekennzeichnet ist, dass** die Schutzschaltungsanordnung beinhaltet:
einen Handler für Sicherheitsverletzungen;
eine erste Prüferschaltung mit einem ersten Prüferausgang, der mit dem Sicherheitsverletzungs-Handler gekoppelt ist, und wobei die erste Prüferschaltung, die Eingangsleitungen zum Empfangen von Modussignalen aufweist, die mindestens einige der Modi anzeigen, und die erste Prüferschaltung logische Schaltungsanordnungen aufweist, die mit den Eingangsleitungen gekoppelt sind, um Modusübergänge zwischen den Modi zu erkennen und den ersten Prüferausgang zu aktivieren, wenn ein Modusübergang erkannt wird, der einer zulässigen Übergangsrichtlinie für die logische Schaltungsanordnung entgegensteht; und
eine zweite Prüferschaltung mit einem zweiten Prüfschalterausgang, der mit dem Sicherheitsverletzungshandler gekoppelt ist, wobei die zweite Prüferschaltung zweite Eingangsleitungen für das Empfangen von Modussignalen aufweist, die zumindest einige der Modi angeben, wobei die zweite Prüfschalterschaltung ferner dritte Eingangsleitungen für das Empfangen der Adresssignale aufweist, und die zweite Prüferschaltung eine zweite logische Schaltungsanordnung auf weist, die auf die Modussignale und auf die Adresssignale reagiert, um versuchte Transaktionen verschiedener Modi zu identifizieren und den zweiten Prüferausgang bei Erkennung einer versuchten Transaktion zu aktivieren, die eine Adresse und einen Modus enthält, der einer zulässigen Transaktionsrichtlinie für die zweite logische Schaltungsanordnung entgegensteht.

11. Elektronische Vorrichtung nach einem der Ansprüche 1-10, die ferner **dadurch gekennzeichnet ist, dass**:
der Prozessor betreibbar ist, eine physische Adresse geltend zu machen und Modi zu erstellen, einschließlich Modi, die privilegiert oder nicht privilegiert sowie sicher oder öffentlich sind;
die Schutzschaltungsanordnung mit dem Bus gekoppelt ist, und betreibbar ist, um Qualifikatorsignale auf dem Bus zu aktivieren, einschließlich eines Systemqualifikators, der auf eine Kategorie von Prozessorbetrieb als Reaktion auf die physische Adresse und die Modi hinweist, und
die elektronische Vorrichtung ferner ein System-Peripheriegerät enthält, das mit dem Bus gekoppelt ist, um die behauptete physikalische Adresse zu empfangen, und eine Firewall-Schaltung zur Gewährung und Verweigerung des Zugriffs auf das System-Peripheriegerät als Reaktion auf verschiedene Zustände der Qualifikatorsignale einschließlich der Zustände des Systemqualifikators.

12. Elektronische Vorrichtung nach einem der Ansprüche 1-11, die ferner **dadurch gekennzeichnet ist, dass** der Prozessor Modi aufweist, die einen High-Level-Steuermodus beinhalten, wobei die elektronische Vorrichtung ferner Peripheriegeräte beinhaltet, die mit dem Prozessor und der Leistungsverwaltungsschaltungsanordnung gekoppelt sind, die die elektronische Schaltung in Leistungsbereichen mit Leistungsereignissen des Ein- und Ausschaltens in die Leistungsbereiche teilt und steuert; und
die Schutzschaltungsanordnung mit einem Plattformstatusregister, das mit den Leistungsbereichen gekoppelt ist, um ein Leistungsereignis zu erkennen und den Prozessor in den hochstufigen Steuermodus zu unterbrechen, um die Informationssicherheit der elektronischen Vorrichtung zu schützen.

13. Elektronische Vorrichtung nach einem der Ansprüche 1-12, die ferner **dadurch gekennzeichnet ist, dass** der Prozessor mehrere Prozessorkerne enthält, die jeweils eine Pipeline enthalten, die betreibbar ist, um Anweisungen auszuführen, wobei mindestens einer der Prozessorkerne, als Steuerkern in einem sicheren oder nicht sicheren Modus und in einem Überwachungs- oder einem Nicht-Überwachungsmodus betreibbar ist, und ferner betreibbar ist, um Modussignale auf einer sicheren Modusleitung und einer Überwachungsmodusleitung zu erzeugen; und die Schutzschaltungsanordnung an den Prozessor gekoppelt ist, wobei die Schutzschaltungsanordnung betreibbar ist, einen ersten Qualifikator an den Bus zu koppeln, wobei der erste Qualifikator auf die sichere Modusleitung reagiert, wobei die Schutzschaltungsanordnung ferner ein Registerfeld aufweist, das mit dem Bus gekoppelt ist, wobei das Registerfeld als zweiter Qualifikator zum Darstellen der Prozessorkerne für einen gegebenen Zugang fungiert, und die Schutzschaltungsanordnung ferner auf die Überwachungsmodusleitung reagiert, um eine Änderung des Registerfeldes durch den Prozessor zu ermöglichen, wenn sich der Steuerkern im Überwachungsmodus befindet, und eine solche Änderung zu verhindern, wenn sich der Steuerkern in einem Nicht-Überwachungsmodus befindet.

14. Elektronische Vorrichtung nach einem der Ansprüche 1-13, die ferner eine mit einer mit dem Prozessor gekoppelten Telekommunikationsmodemschaltung und eine mit dem Prozessor gekoppelte Benutzerschnittstelle enthält.

15. Elektronische Vorrichtung nach einem der Ansprüche 1-14, die ferner **dadurch gekennzeichnet ist, dass** der Prozessor einen ersten Prozessorkern aufweist, der betreibbar ist, um Monitorsoftware und das Echtzeitbetriebssystem auszuführen betriebsbereit ist und mit der Schutzschaltungsanordnung auf einer ersten integrierten Schaltung angeordnet ist; und der Prozessor einen zweiten Prozessorkern aufweist, der betreibbar ist, um Überwachungssoftware auszuführen, und das nicht-Echtzeit-Betriebssystems funktionsfähig ist und auf einer zweiten integrierten Schaltung angeordnet ist, die physisch an dem ersten Prozessorkern und der Schutzschaltungsanordnung der ersten integrierten Schaltung befestigt und kommunikativ mit diesen gekoppelt ist.

## Revendications

1. Dispositif électronique comprenant un processeur ayant un pipeline pour traiter un programme logiciel, un bus couplé au pipeline, et une mémoire couplée au bus, ladite mémoire comprenant un système d'exploitation en temps réel et une application en temps réel, un système d'exploitation non en temps réel, un noyau d'environnement sécurisé et un moniteur logiciel ; et
le dispositif électronique comprenant en outre :
des circuits de protection couplés audit processeur et servant à établir un premier signal et un deuxième signal ayant chacun des états et ayant ensemble des combinaisons des états représentant une première catégorie pour le système d'exploitation en temps réel et l'application en temps réel, une deuxième catégorie pour le système d'exploitation non en temps réel et une troisième catégorie pour le noyau d'environnement sécurisé ;
où le processeur peut fonctionner pour placer une adresse physique sur le bus et pour établir des modes sécurisés et publics et des modes privilégiés comprenant un mode privilégié particulier ; et
un circuit de traitement d'interruption couplé audit processeur et pouvant fonctionner pour fournir un premier type de demande d'interruption et un deuxième type de demande d'interruption, ledit processeur réagissant audit deuxième type de demande d'interruption pour activer un mode de surveillance ; et un circuit de traitement de masquage préemptif couplé audit processeur et audit circuit de traitement d'interruption de sorte que ledit circuit de traitement d'interruption soit sensible au masquage d'au moins une demande d'interruption non en temps réel et sensible à la fourniture d'au moins une demande d'interruption en temps réel du deuxième type audit processeur, le circuit de traitement de masquage préemptif, lorsqu'il est activé, étant configuré pour fonctionner afin d'empêcher une demande d'interruption rapide publique provenant de processus publics non privilégiés et même publics privilégiés de contester, d'entrer en concurrence ou d'interférer avec les opérations du mode de surveillance et d'autres processus sécurisés.

2. Dispositif électronique selon la revendication 1, **caractérisé en outre en ce que** lesdits circuits de protection sont couplés audit bus et peuvent fonctionner pour générer au moins un signal de violation de sécurité à moins qu'une transition entre le système d'exploitation en temps réel et le système d'exploitation non en temps réel ne comprenne le moniteur logiciel.

3. Dispositif électronique selon la revendication 1 ou la revendication 2, ayant des modes pour le traitement dans des modes de privilège et non de privilège et pour le traitement dans un mode de surveillance, le dispositif électronique étant en outre **caractérisé en ce que** ledit processeur a une zone de stockage pour représenter le mode de privilège et le mode de surveillance, et ledit mode de surveillance est un premier mode de privilège et ledit processeur a un deuxième mode de privilège ; et lesdits circuits de protection comprennent une mémoire de sécurité ayant un premier état où ledit processeur est activé dans un mode non sécurisé et un deuxième état dans lequel ledit processeur est activé dans un mode sécurisé, et ledit mode de surveillance est un type de mode sécurisé, et ledit circuit de sécurité peut en outre fonctionner pour générer un signal de violation de sécurité si une tentative se produit dans un mode autre que le mode de surveillance pour changer un état de ladite mémoire de sécurité.

4. Dispositif électronique selon la revendication 1 ou la revendication 2, le dispositif électronique étant en outre **caractérisé en ce que** ladite mémoire a un premier état dans lequel le pipeline est activé pour traiter le programme logiciel et ladite mémoire a un deuxième état établissant un mode de surveillance dans lequel le pipeline est activé pour traiter le moniteur logiciel ; et lesdits circuits de protection sont couplés audit bus et à ladite mémoire et peuvent fonctionner pour générer un signal de violation de sécurité en réponse à une tentative d'accès sur ledit bus par ledit pipeline à l'extérieur d'un espace d'adresses prédéterminé lorsque ladite mémoire a ledit deuxième état établissant le mode de surveillance.

5. Dispositif électronique selon la revendication 1 ou la revendication 2, **caractérisé en outre en ce qu'**il comprend un espace d'adresses prédéterminé pour ledit moniteur logiciel et ladite mémoire ayant un premier état dans lequel le pipeline est activé pour traiter le programme logiciel et ayant un deuxième état établissant un mode de surveillance dans lequel le pipeline est activé pour traiter le moniteur logiciel ; et lesdits circuits de protection sont couplés audit bus et à ladite mémoire et peuvent fonctionner pour générer un signal de violation de sécurité en réponse à une tentative d'accès sur ledit bus par ledit pipeline à l'intérieur de l'espace d'adresses prédéterminé réservé audit moniteur logiciel lorsque ladite mémoire présente ledit premier état.

6. Dispositif électronique selon la revendication 1 ou la revendication 2, le dispositif électronique étant en outre **caractérisé en ce que** ledit processeur comprend des modes et un mécanisme de zone de sécurité pouvant fonctionner selon ses propres axiomes pour des opérations autorisées et non autorisées se rapportant aux divers modes ; et lesdits circuits de protection sont couplés audit mécanisme de zone de sécurité pour empêcher en outre au moins une des opérations autorisées d'être interdite.

7. Dispositif électronique selon la revendication 1 ou la revendication 2, **caractérisé en outre en ce que** ledit processeur a des modes pour des traitements dans des modes de privilège et non de privilège et pour des traitements dans un mode de surveillance, et ladite mémoire pour représenter que ledit processus est dans le mode de surveillance ou non et pour représenter au moins des premier et deuxième autres modes de privilège en plus du mode de surveillance ; et lesdits circuits de protection sont couplés audit processeur et comprennent une deuxième mémoire ayant un premier état dans lequel un piège d'exception par ledit processeur en mode de surveillance est autorisé et un deuxième état dans lequel le piège d'exception en mode de surveillance n'est pas autorisé, et un gestionnaire de violation de sécurité utilisable lorsque ladite deuxième mémoire est dans le deuxième état qui ne permet pas un piège d'exception en mode de surveillance pour générer un signal de violation de sécurité si une transition relative au mode de surveillance se produit dans ladite mémoire nommée en premier.

8. Dispositif électronique selon l'une quelconque des revendications 1 à 7, **caractérisé en outre en ce que** :
le dispositif comprend en outre un périphérique modem couplé audit bus pour recevoir l'adresse physique placée ; et
lesdits circuits de protection sont couplés audit bus et fonctionnent pour activer un signal de qualification indicatif du fonctionnement du modem en déterminant si l'adresse physique placée se trouve dans une plage d'adresses prédéterminée pour le fonctionnement du modem et si elle s'est produite dans un mode public et dans le mode privilégié particulier.

9. Dispositif électronique selon l'une quelconque des revendications 1 à 8, **caractérisé en outre en ce que** :
ledit pipeline de processeur peut fonctionner pour exécuter des instructions dans une catégorie en temps réel ou une catégorie non en temps réel, le processeur pouvant fonctionner en mode sécurisé ou non sécurisé et en mode de surveillance ou de non-surveillance et pouvant également fonctionner pour générer des signaux de mode sur une ligne de mode sécurisé et une ligne de mode de surveillance ; et
lesdits circuits de protection comprenant un champ de registre pouvant être utilisé pour coupler des premier et deuxième qualificateurs audit bus, le premier qualificateur étant sensible à ladite ligne de mode sécurisé et le deuxième qualificateur indiquant si le processeur est dans la catégorie en temps réel ou non pour un accès donné, et lesdits circuits de protection réagissent en outre à la ligne de mode de surveillance pour permettre la modification dudit champ de registre par ledit processeur lorsque le processeur est dans le mode de surveillance et pour empêcher la modification d'au moins une partie dudit champ de registre lorsque ledit processeur est dans un mode de non-surveillance.

10. Dispositif électronique selon l'une quelconque des revendications 1 à 9, destiné à être utilisé avec un processeur ayant des modes et des signaux d'adresse, le dispositif électronique étant en outre **caractérisé en ce que** lesdits circuits de protection comprennent :
un gestionnaire de violation de la sécurité ;
un premier circuit de vérification ayant une première sortie de vérification couplée audit gestionnaire de violation de sécurité et ledit premier circuit de vérification ayant des lignes d'entrée pour recevoir des signaux de mode indicatifs d'au moins certains des modes, et ledit premier circuit de vérification ayant des circuits logiques couplés aux lignes d'entrée pour détecter des transitions de mode entre les modes et activer la première sortie de vérification lors de la détection d'une transition de mode contraire à une politique de transition autorisée pour lesdits circuits logiques ; et
un deuxième circuit de vérification ayant une deuxième sortie de vérification couplée audit gestionnaire de violation de sécurité, ledit deuxième circuit de vérification ayant des deuxièmes lignes d'entrée pour recevoir des signaux de mode indiquant au moins certains des modes, ledit deuxième circuit de vérification ayant en outre des troisièmes lignes d'entrée pour recevoir les signaux d'adresse, et ledit deuxième circuit de vérification comprenant des deuxièmes circuits logiques sensibles aux signaux de mode et auxdits signaux d'adresse pour identifier des tentatives de transactions de différents modes et activer la deuxième sortie de vérification lors de la détection d'une tentative de transaction comprenant une adresse et un mode contraires à une politique de transaction autorisée pour lesdits deuxièmes circuits logiques.

11. Dispositif électronique selon l'une quelconque des revendications 1 à 10, **caractérisé en outre en ce que** :
ledit processeur est opérationnel pour placer une adresse physique et pour établir des modes, y compris des modes privilégiés ou non privilégiés, sécurisés ou publics ;
lesdits circuits de protection sont couplés au bus et fonctionnent pour activer des signaux qualificateurs sur le bus, y compris un qualificateur de système indicatif d'une catégorie de fonctionnement du processeur en réponse à l'adresse physique et aux modes ; et
ledit dispositif électronique comprend en outre un périphérique système couplé au bus pour recevoir l'adresse physique placée et un circuit pare-feu pour accorder et refuser l'accès audit périphérique système en réponse à différents états des signaux qualificateurs, y compris les états du qualificateur de système.

12. Dispositif électronique selon l'une quelconque des revendications 1 à 11 **caractérisé en outre en ce que** ledit processeur a des modes comprenant un mode de commande de haut niveau, ledit dispositif électronique comprenant en outre des périphériques couplés audit processeur et des circuits de gestion d'alimentation subdivisant et commandant le circuit électronique en domaines de puissance avec des événements d'alimentation correspondant à la mise sous tension et à la mise hors tension desdits domaines de puissance ; et
lesdits circuits de protection comprenant un registre d'état de plate-forme couplé auxdits domaines de puissance pour détecter un événement de puissance et pour interrompre ledit processeur en mode de commande de haut niveau afin de protéger la sécurité des informations du dispositif électronique.

13. Dispositif électronique selon l'une quelconque des revendications 1 à 12, **caractérisé en outre en ce que** ledit processeur comprend une pluralité de cœurs de processeur comprenant chacun un pipeline pouvant fonctionner pour exécuter des instructions, au moins un desdits cœurs de processeur pouvant fonctionner comme cœur de commande dans un mode sécurisé ou un mode non sécurisé et dans un mode de surveillance ou un mode de non-surveillance, et pouvant fonctionner en outre pour générer des signaux de mode sur une ligne de mode sécurisé et une ligne de mode de surveillance ; et lesdits circuits de protection sont couplés audit processeur, lesdits circuits de protection pouvant fonctionner pour coupler un premier qualificateur audit bus, le premier qualificateur étant sensible à ladite ligne de mode sécurisé, les circuits de protection ayant en outre un champ de registre couplé audit bus, le champ de registre agissant comme un deuxième qualificateur pour représenter lequel desdits cœurs de processeur est actif pour un accès donné, et lesdits circuits de protection réagissent en outre à la ligne de mode de surveillance pour permettre la modification dudit champ de registre par ledit processeur lorsque ledit cœur de commande est dans le mode de surveillance et pour empêcher une telle modification lorsque ledit cœur de commande est dans un mode de non-surveillance.

14. Dispositif électronique selon l'une quelconque des revendications 1 à 13, comprenant en outre un circuit modem de télécommunications couplé audit processeur ; et une interface utilisateur couplée audit processeur.

15. Dispositif électronique selon l'une quelconque des revendications 1 à 14, **caractérisé en outre en ce que** ledit processeur comprend un premier cœur de processeur pouvant fonctionner pour exécuter un logiciel de surveillance et le système d'exploitation en temps réel et étant situé avec lesdits circuits de protection sur un premier circuit intégré ; et ledit processeur comprend un deuxième cœur de processeur pouvant fonctionner pour exécuter un logiciel de surveillance et le système d'exploitation en temps non réel et étant situé sur un deuxième circuit intégré physiquement fixé et couplé de manière communicative audit premier cœur de processeur et auxdits circuits de protection dudit premier circuit intégré.
